# EUROPÄISCHE PATENTSCHRIFT

(11) **EP 3 774 601 B1**
(45) Veröffentlichungstag und Bekanntmachung des Hinweises auf die Patenterteilung: **04.09.2024**
(21) Anmeldenummer: 19725839.5
(22) Anmeldetag: 09.04.2019
(51) Int. Cl.: B65G 19/02, B65G 47/61

(54) **ENTLADESTATION UND VERFAHREN ZUM ENTLADEN EINES MIT EINEM FÖRDERGUT BELADENEN FÖRDERGUTBEHÄLTERS**
UNLOADING STATION AND METHOD FOR UNLOADING A CONVEYED-GOODS CONTAINER LOADED WITH CONVEYED GOODS
POSTE DE DÉCHARGEMENT ET PROCÉDÉ DESTINÉ AU DÉCHARGEMENT D'UN RÉCIPIENT DE PRODUIT À TRANSPORTER CHARGÉ AVEC UN PRODUIT À TRANSPORTER

(30) Priorität: 13.04.2018 AT 503202018; 13.02.2019 AT 501092019
(43) Veröffentlichungstag der Anmeldung: 17.02.2021
(73) Patentinhaber: TGW Mechanics GmbH, 4600 Wels (AT)
(72) Erfinder: REISCHL, Josef, 4623 Gunskirchen (AT); RAUSCH, Martin, 4810 Gmunden (AT)
(74) Vertreter: Burger, Hannes
(86) Internationale Anmeldenummer: PCT/AT2019/060121
(87) Internationale Veröffentlichungsnummer: WO 2019/195871

(56) Entgegenhaltungen:
- WO-A1-2014/044601
- WO-A1-2017/088076
- WO-A2-2018/130712
- JP-A- H07 304 514
- US-A- 4 509 635

## Beschreibung

Die Erfindung betrifft eine Entladestation und ein Verfahren zum Entladen eines mit zumindest einem Fördergut beladenen Fördergutbehälters gemäß dem Oberbegriff der Ansprüche 1 und 15.

Die DE 20 2017 106 993 U1 offenbart einen Fördergutbehälter mit einem Taschenkörper mit einer Vorderwand und einer Rückwand, einem durch die Vorderwand und Rückwand begrenzten Aufbewahrungsraum und einer seitlich am Taschenkörper zumindest bereichsweise zwischen der Vorder- und Rückwand ausgebildeten Endladeöffnung. Der Taschenkörper ist zwischen einer Schließstellung, in welcher der Aufbewahrungsraum volumenminimiert und das Fördergut mit dem Fördergutbehälter transportierbar ist, und einer Öffnungsstellung, in welcher der Aufbewahrungsraum volumenmaximiert und das Fördergut durch die Entladeöffnung aus dem Fördergutbehälter manuell entnehmbar ist, umstellbar. Eine automatische Entladung ist weder vorgesehen, noch ist diese möglich.

Die WO 2014/044601 A1 offenbart eine Entladestation zum Entladen eines mit zumindest einem Fördergut beladenen Fördergutbehälters nach dem Oberbegriff des Anspruchs 1 und ein Verfahren zum Entladen eines mit zumindest einem Fördergut beladenen Fördergutbehälters gemäß dem Oberbegriff des Anspruchs 15. Insbesondere offenbart die WO 2014/044601 A1 ein automatisches Entladen eines Fördergutes aus einem Fördergutbehälter, bei dem der über einen Hängeträger an einem Transportträger aufgehängte Fördergutbehälter um eine senkrecht zur Hängefördervorrichtung verlaufende Kippachse gekippt wird. Das Fördergut wird auf einen Abführförderer abgeworfen. Nachdem die Fallhöhe möglichst niedrig sein soll, werden die Fördergutbehälter knapp oberhalb des Abführförderers bewegt. Dies hat zur Folge, dass der zu entladene Fördergutbehälter über einen langen Transportweg in der gekippten Entladeposition bewegt werden muss, wodurch der Taschenkörper des Fördergutbehälters stark beansprucht wird. Dadurch verkürzt sich erheblich die Lebensdauer der Fördergutbehälter. Zudem benötigt die Entladestation ein großen Einbauraum.

Die EP 2 686 258 B1 betrifft ein Hängefördersystem mit einem Fördergutbehälter zur automatischen Entladung eines geladenen Fördergutes und mit einer Entladestation. Der Fördergutbehälter weist einen horizontalen Boden auf, auf dem das Fördergut für Transportzwecke gelagert werden kann. Der Boden wirkt mit einer Hubeinrichtung zusammen, die eingerichtet ist, den Boden, des mit mindestens einem Fördergut beladenen Fördergutbehälters, wenn sich die Fördergutbehälter in einer Entladestellung befindet, in einer vertikalen Richtung in der Art anzuheben, dass das mindestens eine Fördergut mittels einer Schubeinrichtung durch eine Stirnseite eines Grundkörpers des Fördergutbehälters zentral ausschiebbar ist, und wobei die Schubeinrichtung einen Schieber aufweist, der durch eine andere Stirnseite des Grundkörpers in ein Inneres des Grundkörpers eingreift, wo sich das mindestens eine Fördergut befindet, wenn der Boden angehoben ist. Zum Entladen sind also die zwei gegenüberliegenden geöffneten Stirnseiten, der in der vertikalen Richtung anhebbare Boden sowie der durch eine der Stirnseiten durchgreifende Schieber der Schubeinrichtung erforderlich.

Vergleichbare Fördergutbehälter und zugehörige Hängefördervorrichtungen sind beispielsweise auch aus der DE 10 2004 018 569 A1, EP 2 130 968 A1 oder EP 2 196 415 A bekannt. Die dort beschriebenen Fördergutbehälter bestehen aus flexiblen Materialien in Form einer Schlaufe, in der das Fördergut gehalten wird. Zum Beladen werden diese Transporttaschen von oben geöffnet, um das Fördergut in die Schlaufe einbringen zu können. Ein Entladen erfolgt dadurch, dass das Fördergut entweder seitlich aus der Schlaufe entnommen oder ausgestoßen wird oder beispielweise gemäß der EP 2 130 968 A1 die Schlaufe nach unten geöffnet wird.

Die WO 2018/130712 A2, die ein Dokument zum Stand der Technik gemäß Artikel 54 (3) EPÜ darstellt, offenbart eine Entladestation zum Entladen eines mit Fördergut beladenen Fördergutbehälters, welche eine Hängefördervorrichtung zum Antransport des Fördergutbehälters in die Entladestation und Abtransport des Fördergutbehälters aus der Entladestation, eine Öffnungs- und Schließvorrichtung zum Verstellen eines Taschenkörpers des Fördergutbehälters zwischen einer Schließstellung und einer Öffnungsstellung, und eine Entladevorrichtung zum Entladen des Fördergutbehälters umfasst. Der Fördergutbehälter umfasst einen Taschenkörper mit einem Boden, einer Vorderwand und einer Rückwand. Ferner umfasst der Fördergutbehälter einen durch die Vorderwand und Rückwand begrenzten Aufbewahrungsraum und eine seitlich am Taschenkörper zwischen der Vorder- und Rückwand ausgebildete Endladeöffnung. Zum Entladen des Fördergutbehälters wird der Boden des Taschenkörpers durch die Entladevorrichtung aus einer Transportstellung in eine Auswerfstellung verstellt, in welcher ein der Entladeöffnung gegenüberliegender hinterer Bodenbereich höher liegt als ein vorderer Bodenbereich, sodass das Fördergut aus dem Fördergutbehälter rutscht.

Eine Aufgabe der Erfindung ist es, eine verbesserte Entladestation und ein verbessertes Verfahren zum automatischen Entladen eines Fördergutbehälters eines Hängefördersystemes anzugeben. Insbesondere soll der Entladevorgang beschleunigt und der Fördergutbehälter auf besonders schonendem Wege entladen werden können.

Die Aufgabe der Erfindung wird durch eine Entladestation zum Entladen eines Fördergutes aus einem Fördergutbehälter nach Anspruch 1 gelöst.

Die Entladevorrichtung der Entladestation umfasst eine Betätigungsvorrichtung, durch welche der Fördergutbehälter mit dem Taschenkörper um eine im Wesentlichen parallel zur Längserstreckung der Hängefördervorrichtung verlaufende Kippachse zwischen einer Bereitstellposition und einer Entladeposition kippbar ist, wobei in der Entladeposition das Fördergut durch die Entladeöffnung aus dem Fördergutbehälter abgebbar ist.

Die Aufgabe der Erfindung wird aber auch durch ein Verfahren zum Entladen eines Fördergutes aus einem Fördergutbehälter nach Anspruch 15 gelöst.

Hierbei wird zum Entladen eines Fördergutes aus einem Fördergutbehälter
i) in einem Schritt durch die Öffnungs- und Schließvorrichtung der Taschenkörper aus der Schließstellung in die Öffnungsstellung verstellt wird, und
ii) in einem Schritt durch die Entladevorrichtung der Fördergutbehälter mit dem Taschenkörper um eine im Wesentlichen parallel zur Längserstreckung der Hängefördervorrichtung verlaufende Längsachse aus einer Bereitstellposition in eine Entladeposition gekippt wird, wodurch das Fördergut durch die Entladeöffnung aus dem Fördergutbehälter abgegeben wird.

Die Abgaberichtung des Fördergutes verläuft in einer quer zur Transportrichtung des Fördergutbehälters verlaufenden Abgabeebene. Das Fördergut kann also über einen nur sehr kurzen Abgabeweg transportiert werden, wodurch die Abgabezeit gegenüber den aus dem Stand der Technik bekannten Entladestationen deutlich verkürzt wird. Auch kann eine Übernahmeebene, auf welche das Fördergut abgegeben werden soll, im Wesentlich auf Höhe der Entladeöffnung gelegt werden, sodass eine besonders schonende Übergabe des Fördergutes auf die Übernahmeebene möglich ist. Die Übernahmeebene wird beispielweise durch eine Fördervorrichtung definiert. Der Taschenkörper kann noch vor dem Kippen des Fördergutbehälters aus der Bereitstellposition in die Entladeposition in die Öffnungsstellung verstellt werden, oder es wird der Fördergutbehälter während dem Öffnungsvorgang des Taschenkörpers bereits aus der Bereitstellposition in die Entladeposition in die Öffnungsstellung verstellt.

Gemäß einer Weiterbildung der Erfindung kann der Fördergutbehälter zusätzlich umfassen
- einen Hängeträger zum hängenden Transport an der Hängefördervorrichtung und mit einer Aufnahme, und
- ein Rahmengestell, über das der Taschenkörper an dem Hängeträger hängt und welches in der Aufnahme am und relativ zum Hängeträger um eine Längsachse der Aufnahme schwenkbar gelagert ist, wodurch der Taschenkörper zwischen der Schließstellung und der Öffnungsstellung umstellbar ist.

Das Rahmengestell lässt sich ohne großem Kraftaufwand um die Längsachse der Aufnahme schwenken, wodurch der Öffnungsvorgang und der Schließvorgang des Taschenkörpers besonders einfach ausgeführt werden kann.

In einer vorteilhaften Ausgestaltung der Erfindung weist das Rahmengestell Längsstreben und Querstreben auf, wobei die Vorderwand und die Rückwand des Taschenkörpers jeweils an einer der Querstreben des Rahmengestelles (gelenkig) angebracht sind.

Das Rahmengestell kann eine rechteckförmige oder eine im Wesentlichen quadratischen Außenkontur ausbildet. Unter einer rechteckigen und im Wesentlichen quadratische Außenkontur ist in diesem Zusammenhang nicht nur eine korrekte Quadrat- oder Rechteckform zu verstehen, sondern auch eine Außenkontur mit abgerundeten Ecken oder an den Längsstreben angeordneten Vorsprüngen. Sind die Querstreben länger als die Längsstreben, um eine möglichst breite Vorderwand und Rückwand zu ermöglichen, können verhältnismäßig lange Fördergüter transportiert werden. Lange Längsstreben führen zu einem größeren Unterschied der relativen horizontalen und vertikalen Positionen der Vorderwand und Rückwand beim Umstellen zwischen der Schließstellung und Öffnungsstellung. Daraus resultiert eine maximale Breite der Fördergüter, welche mit den Fördergutbehältern transportiert werden.

Sind die Querstreben und Längsstreben im Wesentlichen mit gleicher Länge ausgebildet, wird der Aufbewahrungsraum auf ein breites Spektrum an Fördergütern optimiert. Insbesondere ist auch von Vorteil, dass in der Öffnungsstellung die Entladeöffnung zwischen der Vorder- und Rückwand weit aufgespannt ist, sodass der Entladevorgang besonders zuverlässig und einfach durchgeführt werden kann. Umgekehrt ist auch ein Beladevorgang des Fördergutbehälters besonders einfach durchzuführen. Prinzipiell kann die Beladung von oben durch das Rahmengestell hindurch oder durch eine der Entladeöffnung gegenüberliegende Seitenwand, wenn dies zumindest teilweise offen gestaltet ist, durchgeführt werden. Grundsätzlich kann auch über die Entladeöffnung der Taschenkörper beladen werden. Das Beladen kann automatisch oder manuell durchgeführt werden.

Günstig ist, wenn die Öffnungs- und Schließvorrichtung eine Betätigungsvorrichtung zum automatischen Öffnen und Schließen des Taschenkörpers umfasst, durch welche das Rahmengestell relativ zum Hängeträger um die Längsachse derart schwenkbar ist, dass der Taschenkörper zwischen der Schließstellung und der Öffnungsstellung umstellbar ist.

Der Taschenkörper kann durch das ohnehin vorhandene Rahmengestell zwischen der Schließstellung und der Öffnungsstellung umgestellt werden. Dadurch ergibt sich ein besonders einfacher Aufbau des Fördergutbehälters. Auch die Öffnungs- und Schließvorrichtung kann besonders einfach aufgebaut werden.

Es erweist sich auch als besonders vorteilhaft, wenn die Betätigungsvorrichtung eine Mitnehmermechanik mit einem in Transportrichtung des Fördergutbehälters
- stromaufwärts gelegenen Einlaufabschnitt,
- stromabwärts gelegenen Auslaufabschnitt, und
- zwischen dem Einlaufabschnitt und Auslaufabschnitt angeordneten Endladeabschnitt umfasst, wobei der Einlaufabschnitt eine mit dem Rahmengestell derart in einen Anlagekontakt bringbare geneigte Führungskulisse ausbildet, dass das Rahmengestell während des Antransportes des Fördergutbehälters in die Entladestation verschwenkt wird, wodurch der Taschenkörper aus der Schließstellung in die Öffnungsstellung umgestellt wird.

Die Mitnehmermechanik benötigt keinen Antrieb und ist somit einfach aufgebaut. Der Einlaufabschnitt umfasst eine mit dem Rahmengestell derart in einen Anlagekontakt bringbare geneigte Führungskulisse, dass das Rahmengestell zwischen verschiedenen Kippstellungen verstellt und dabei der Taschenkörper aus der Schließstellung in die Öffnungsstellung umgestellt wird. Das Umstellen zwischen Schließstellung und Öffnungsstellung kann sehr sanft durchgeführt werden. Der Fördergutbehälter wird schonend behandelt. Außerdem kann sich durch den fortwährenden Öffnungsvorgang des Taschenkörpers das Fördergut im Aufbewahrungsraum zentrieren, was die Abgabe des Fördergutes aus dem Fördergutbehälter begünstigt.

Von Vorteil ist auch, wenn der Endladeabschnitt eine mit dem Rahmengestell derart in einen Anlagekontakt bringbare im Wesentlichen horizontale Führungskulisse ausbildet, dass das Rahmengestell während des Entladevorganges in der verschwenkten Auslenkstellung gehalten wird, wodurch auch der Taschenkörper in der Öffnungsstellung verbleibt.

Der Fördergutbehälter kann während dessen Kippbewegung geführt werden. Die Führungskulisse verläuft parallel zur Transportrichtung des Fördergutbehälters, ebenso eine Kippachse.

Es erweist sich auch von Vorteil, wenn der Auslaufabschnitt eine mit dem Rahmengestell derart in einen Anlagekontakt bringbare geneigte Führungskulisse ausbildet, dass das Rahmengestell während des Abtransportes des Fördergutbehälters aus der Entladestation verschwenkt wird, wodurch der Taschenkörper aus der Öffnungsstellung in die Schließstellung umgestellt wird.

Der Auslaufabschnitt umfasst eine mit dem Rahmengestell derart in einen Anlagekontakt bringbare geneigte Führungskulisse, dass das Rahmengestell zwischen verschiedenen Kippstellungen verstellt und dabei der Taschenkörper aus der Öffnungsstellung in die Schließstellung umgestellt wird. Das Umstellen zwischen der Öffnungsstellung und Schließstellung kann sehr sanft durchgeführt werden. Der Fördergutbehälter wird schonend behandelt.

Es kann sich auch als günstig erweisen, wenn die Betätigungsvorrichtung zumindest eine mittels eines Antriebs zwischen einer ersten Klappenstellung und einer zweiten Klappenstellung bewegbare Öffnungsklappe zum Verstellen des Taschenkörpers zwischen der Schließstellung und der Öffnungsstellung aufweist.

Die Öffnungsklappe wirkt bevorzugt auf das Rahmengestell des Fördergutbehälters, insbesondere auf eine der Längsstreben. Umfasst die Öffnungsklappe eine erste Öffnungsklappe und eine zweite Öffnungsklappe so wirken die Öffnungsklappen synchron und bevorzugt auf das Rahmengestell des Fördergutbehälters, insbesondere auf beide Längsstreben. Die Öffnungsklappe kann um einen Winkel verschwenkbar sein und mittels dieser Verschwenkbewegung das Rahmengestell verlagern, insbesondere verschwenken. In der Schließstellung ist die Öffnungsklappe aus einer Bewegungsbahn des Rahmengestelles herausgeschwenkt. In der Öffnungsstellung befindet sich die Öffnungsklappe bevorzugt unterhalb des Rahmengestelles und bringt diesen in eine horizontale Position.

Bei einer weiteren möglichen Ausführung der Entladestation ist vorgesehen, dass die Öffnungsklappe in der zweiten Klappenstellung eine in Transportrichtung des Fördergutbehälters verlaufende Führungsfläche zum Führen des Rahmengestelles bei einem Verlassen der Entladestation aufweist.

Durch die Führungsfläche kann eine gewünschte Bewegungsbahn des Fördergutbehälters beim Verlassen der Entladestation erreicht werden. Gegebenenfalls können auch eventuelle beim Beschleunigen des Fördergutbehälters auftretende Vibrationen und/oder Schwingungen gedämpft werden, sodass eine insgesamt ruhigere Fahrt und damit ein schonenderer Transport des Fördergutes innerhalb des Fördergutbehälters möglich sind.

Außerdem ist es möglich, dass das Rahmengestell in der zweiten Klappenstellung zwischen der Öffnungsklappe und einem Führungsprofil kraftschlüssig fixiert ist. Die Öffnungsklappe kann an das Rahmengestell angepresst werden, sodass dieser wiederum gegen das Führungsprofil gepresst wird. Dadurch kann der Kraftschluss bewirkt werden. Durch eine Fixierung des Rahmengestelles kann neben einem Bewirken der Öffnungsstellung auch der gesamte Fördergutbehälter innerhalb der Beladestation arretiert bzw. fixiert werden.

Es erweist sich auch als günstig, wenn die Hängefördervorrichtung zum Antransport des Fördergutbehälters in die Entladestation und Abtransport des Fördergutbehälters aus der Entladestation durch eine Antriebsvorrichtung oder durch Schwerkraft bewegbare Transportträger umfasst, wobei der Transportträger und der Hängeträger gelenkig miteinander gekoppelt sind, wodurch der Hängeträger um eine im Wesentlichen parallel zur Hängefördervorrichtung verlaufende Achse relativ zum Transportträger schwenkbar ist.

Die Transportträger können durch einen Reibschlussantrieb oder einen Formschlussantrieb bewegt werden. Auch ist eine Ausführung möglich, bei der die Transportträger durch einen Eigenantrieb autonom bewegt werden können. Die Transportträger können sehr dynamisch zu der Entladestation antransportiert und von der Entladestation abtransportiert werden, was eine hohe Entladeleistung begünstigt.

Anderenfalls können die Transportträger aber auch durch die Schwerkraft transportiert werden, sofern die Profilschiene, auf welcher die Transportträger bewegt werden, ein Gefälle aufweist. Diese Ausführung bietet sich an, wenn die Investitionskosten niedrig gehalten werden sollen.

Es kann auch vorgesehen werden, dass die Öffnungs- und Schließvorrichtung der Entladestation eine Feststellvorrichtung zur Arretierung des Transportträgers während eines Entladevorganges des Fördergutbehälters zugeordnet ist.

Der Transportträger wird zum Entladen des Fördergutbehälters zeitweise arretiert, wodurch während der Kippbewegung des Fördergutbehälters eine ungewollte Bewegung des Transportträgers und des Fördergutbehälters in Transportrichtung und/oder quer zur Transportrichtung vermieden wird. Der Entladevorgang kann auch bei großen und/oder schweren Fördergütern besonders zuverlässig durchgeführt werden.

Auch ist es möglich, dass die Öffnungs- und Schließvorrichtung der Entladestation eine Führungsvorrichtung zur Seitenführung des Transportträgers während einer Transportbewegung des Transportträgers durch die Hängefördervorrichtung zum Antransport des Fördergutbehälters in die Entladestation und Abtransport des Fördergutbehälters aus der Entladestation umfasst.

Der Transportträger wird zum Entladen des Fördergutbehälters seitlich geführt, wodurch während der Kippbewegung des Fördergutbehälters ein ungewolltes Kippen des Transportträgers um eine in Transportrichtung verlaufende Achse vermieden wird. Der Entladevorgang kann auch bei großen und/oder schweren Fördergütern besonders zuverlässig durchgeführt werden.

Eine vorteilhafte Ausgestaltung ist auch möglich, wenn die Betätigungsvorrichtung der Entladevorrichtung einen mittels eines Antriebs um eine parallel zur Transportrichtung der Fördergutbehälter verlaufende Achse zwischen einer Ausgangsstellung und einer Betätigungsstellung kippbaren Rahmen umfasst und die Betätigungsvorrichtung der Öffnungs- und Schließvorrichtung am Rahmen gelagert ist.

Die Öffnungs- und Schließvorrichtung wird mit dem zwischen der Ausgangsstellung und der Betätigungsstellung kippbaren Rahmen gemeinsam bewegt, wodurch ein Öffnungsvorgang des Taschenkörpers und der Ankippvorgang des Fördergutbehälters simultan und/oder ein Schließvorgang des Taschenkörpers und der Rückkippvorgang des Fördergutbehälters simultan ausgeführt werden können. Der Entladevorgang kann dadurch zusätzlich beschleunigt werden. Außerdem kann der Entladevorgang ohne Stillstand der Transportbewegung durchgeführt werden. Grundsätzlich kann aber die Transportgeschwindigkeit der Transportträger und des Fördergutbehälters auf der Transportbewegung entlang der Entladestation variieren.

Es erweist sich auch als günstig, wenn der Taschenkörper ferner einen Boden umfasst, wobei der Boden
- eine erste Längskante,
- eine zur ersten Längskante mit einem Abstand verlaufende zweite Längskante,
- eine zwischen der ersten Längskante und der zweiten Längskante verlaufende erste Stirnkante, und
- eine zwischen der ersten Längskante und der zweiten Längskante verlaufende zweite Stirnkante, ausbildet,
- wobei die Entladeöffnung in der Öffnungsstellung des Taschenkörpers durch die Vorderwand und Rückwand begrenzt und an die erste Stirnkante angrenzt. Insbesondere ist die Vorderwand mit dem Boden versehen.

Es ist also vorgesehen, dass die Entladeöffnung an die erste Stirnkante angrenzt, was jedoch nicht ausschließt, dass sich zwischen der Vorderwand und Rückwand oberhalb der Entladeöffnung eine Seitenwand erstreckt. Es ist lediglich darauf zu achten, dass die Entladeöffnung so dimensioniert ist, dass das größte Fördergut ohne Kollision mit der Seitenwand durch die Entladeöffnung hindurch bewegt werden kann. Es ist insbesondere von Vorteil, dass zum Entladen des Fördergutbehälters ein am Boden aufliegendes Fördergut durch die Entladeöffnung und über die erste Stirnkante hinweg erfolgen kann. Dabei kann die erste Stirnkante auch als Kippkante fungieren, sodass ein zuverlässiges Entladen des Fördergutbehälters erlaubt. Zudem kann der Fördergutbehälter besonders günstig hergestellt werden.

Es erweist sich auch von Vorteil, wenn der Taschenkörper einen an die zweite Stirnkante angrenzenden Seitenwandanschlag aufweist, gegen welchen das Fördergut anlegbar ist.

Der zusätzliche Seitenwandanschlag kann während dem Transport das Fördergut im Aufbewahrungsraum halten. Zwar werden übliche Fördergüter in der Transportstellung eines jeweiligen Fördergutbehälters mit ausreichender Haltekraft zwischen der Vorderwand, Rückwand und gegebenenfalls dem Boden gehalten, jedoch erweist es sich von Vorteil, wenn Fördergüter, die von den Standardabmessungen oder Standardformen abweichen, zusätzlich durch den Seitenwandanschlag gehalten werden. Mittels des Seitenwandanschlags kann also ein versehentliches Herausfallen des Fördergutes während eines Transportes des Fördergutbehälters vermieden werden. Außerdem kann bei einem Beladen das Fördergut auf einfache Art und Weise in den Fördergutbehälter soweit eingeschoben werden, bis dieses an dem Seitenwandanschlag anliegt. Ein versehentliches Herausfallen des Fördergutes bei einem etwaigen zu dynamischen Beladevorgang kann dadurch sicher verhindert werden. Vorzugsweise ist der Boden zu dem Seitenwandanschlag hin geneigt, um eine noch höhere Beladesicherheit und/oder Transportsicherheit zu erzielen.

Der Fördergutbehälter kann aber auch ohne zusätzlichen Seitenwandanschlag ausgebildet werden. Es hat sich nämlich gezeigt, dass übliche Fördergüter in der Schließstellung des Fördergutbehälters mit ausreichender Haltekraft zwischen der Vorderwand, Rückwand und gegebenenfalls dem Boden gehalten werden können. Dadurch können die Produktionskosten für den Fördergutbehälter auf ein Minimum reduziert werden, da ein zusätzlicher Arbeitsschritt in der Herstellung des Seitenwandanschlages entfallen kann. Ein solcher Seitenwandanschlag wird vornehmlich aus einer gesonderten Materialbahn ausgeschnitten und an der zumindest einen Materialbahn für die Vorderwand, Rückwand und den Boden angefügt, insbesondere an der Vorderwand und dem Boden oder der Rückwand und gegebenenfalls dem Boden angenäht. Der Verzicht auf den Seitenwandanschlag scheint zwar auf den ersten Blick trivial, bringt aber in Anbetracht der enorm hohen Stückzahl in einer Logistikanlage eine beachtliche Reduktion an Investitionskosten. Wird die offene Seitenwand als Beladeöffnung verwendet, so kann der Fördergutbehälter ungehindert an einer offenen ersten Seitenwand entladen und an einer offenen zweiten Seitenwand beladen werden.

Besonders vorteilhaft ist, wenn die erste Längskante eine erste Faltkante und die zweite Längskante eine zweite Faltkante ausbilden.

Die Faltkanten fungieren als Materialschamiere, an denen der Boden angelenkt ist, und erlauben eine Relativverlagerung zwischen der Vorderwand und Rückwand. Somit lässt sich der Aufbewahrungsraum bzw. das Aufnahmevolumen vergrößern und verkleinern. Die Fördergutbehälter können für verschieden große Fördergüter verwendet werden und/oder sehr platzsparend leer gepuffert oder zurücktransportiert werden. Es ist möglich, dass eine Breite des Bodens zwischen den Faltkanten zwischen 5 mm und 800 mm beträgt. Die Breite des Bodens zwischen den Faltkanten kann variiert werden. Es sind also speziell angepasste Fördergutbehälter denkbar.

Bevorzugt kann der Boden eine in die Entladeöffnung (wenn nach einer ersten Ausführung ein Seitenwandanschlag vorhanden ist) oder in die Beladeöffnung (wenn nach einer zweiten Ausführung auf einen Seitenwandanschlag verzichtet wird) mündende Aufnahmefläche ausbilden, auf welchem das Fördergut lagern kann, wenn der Taschenkörper in die Öffnungsstellung umgestellt ist. Die Aufnahmefläche kann auch eine Gleitfläche definieren. Insbesondere erstreckt sich die Aufnahmefläche zwischen den beiden Längskanten und den beiden Stirnkanten. Die Aufnahmefläche grenzt unmittelbar an die erste Stirnkante und zweite Stirnkante an. Das Fördergut kann auf der Gleitfläche des Bodens gleitend gelagert werden. Dadurch kann ein Beladen und/oder Entladen des Fördergutbehälters vereinfacht werden und insbesondere kann das Fördergut besonders einfach in den Fördergutbehälter hineingeschoben und wieder herausgezogen werden.

Nach einer bevorzugten Ausführung weisen die Vorderwand und Rückwand des Taschenkörpers ein am Rahmengestell aufgehängtes biegeschlaffes Material auf.

Mittels des Rahmengestelles und des biegeschlaffen Materials sowie des Bodens kann der Aufbewahrungsraum aufgespannt werden. Unter einem biegeschlaffen Material kann ein Stoff, eine Folie, ein Geflecht, ein Gewirke, ein Gewebe und/oder ähnliches verstanden werden. Mittels des aufgehängten biegeschlaffen Materials kann ein sehr leichter und flexibel einsetzbarer Fördergutbehälter bereitgestellt werden.

Außerdem ist es möglich, dass der Fördergutbehälter das Fördergut in der Transportstellung zwischen dem Boden und dem biegeschlaffen Material hält, insbesondere geklemmt wird. Das biegeschlaffe Material ist vorzugsweise anschmiegsam und kann gegebenenfalls elastische Eigenschaften aufweisen. Dadurch kann das Fördergut zumindest bereichsweise, beispielsweise an Ecken und Kanten, enganliegend von dem biegeschlaffen Material umgeben sein. Dadurch kann ein Form- und/oder Kraftschluss zum Halten des Fördergutes innerhalb des Fördergutbehälters bewirkt werden. Der Form- und/oder Kraftschluss kann durch eine Schwerkraft des Fördergutes verstärkt werden, wobei eine Selbsthemmung eintreten kann.

Das biegeschlaffe Material kann zur Versteifung des Fördergutbehälters zumindest teilweise beplankt sein. Durch die Beplankung kann ein stabilerer Taschenkörper bereitgestellt werden. Die Beplankung kann an unterschiedliche Transportaufgaben angepasst sein und beispielsweise stark belastete Bereiche verstärken, insbesondere des biegeschlaffen Materials.

Gemäß einer Ausgestaltung der Erfindung ist es vorgesehen, dass die Hängefördervorrichtung zum Antransport des Fördergutbehälters in die Entladestation und Abtransport des Fördergutbehälters aus der Entladestation eine Führungsvorrichtung und durch eine Antriebsvorrichtung entlang der Führungsvorrichtung bewegbare Transportträger umfasst.

Nach einer vorteilhaften Ausführung ist es vorgesehen, dass die Antriebsvorrichtung in einem Förderabschnitt entlang der Entladestation einen Vorschubantrieb umfasst, welcher Vorschubantrieb
- einen Tragrahmen,
- einen am Tragrahmen gelagerten Zugmitteltrieb mit einem durch einen Antriebsmotor antreibbaren Zugmittel, und
- zumindest einen mit dem Zugmittel gekoppelten Mitnehmerfinger zur Antriebsbewegung des Fördergutbehälters entlang der Führungsvorrichtung
aufweist.

Dabei erweist es sich besonders vorteilhaft, wenn der Förderabschnitt einen Transportweg ausbildet, entlang welchem die Fördergutbehälter transportiert werden, und wenn der zumindest eine Mitnehmerfinger durch den Zugmitteltrieb zwischen einer aus dem Transportweg zurückgezogenen Ausgangsstellung und einer in den Transportweg vorragenden Eingriffsstellung bewegbar ist, wobei der zumindest eine Mitnehmerfinger in der Eingriffsstellung mit dem Transportträger oder Fördergutbehälter in einen formschlüssigen Eingriff bringbar und durch welchen der Fördergutbehälter entlang dem Förderabschnitt bewegbar ist.

Beispielweise kann der Mitnehmerfinger mit dem Transportträger, auf welchem der Fördergutbehälter über den Hängeträger aufgehängt ist, oder mit dem Hängeträger formschlüssig in Eingriff gelangen.

Gemäß einer Ausgestaltung der Erfindung ist es vorgesehen, dass die Betätigungsvorrichtung der Entladevorrichtung einen mittels eines Antriebs um eine parallel zur Transportrichtung der Fördergutbehälter verlaufende Achse zwischen einer Ausgangsstellung und einer Betätigungsstellung kippbaren Rahmen umfasst und dass sowohl die Betätigungsvorrichtung der Öffnungs- und Schließvorrichtung als auch der Vorschubantrieb am Rahmen gelagert sind.

Von Vorteil ist auch, wenn in einem Förderabschnitt entlang der Entladestation und stromaufwärts von der Öffnungs- und Schließvorrichtung eine Fördergutbehälter-Positioniervorrichtung angeordnet ist, durch welche der Fördergutbehälter relativ gegenüber die Öffnungs- und Schließvorrichtung positioniert werden kann.

Nach einer vorteilhaften Ausgestaltung bildet der Förderabschnitt einen Transportweg aus, entlang welchem die Fördergutbehälter transportiert werden, wobei die Fördergutbehälter-Positioniervorrichtung zu beiden Seiten des Transportweges und symmetrisch zu einer in Richtung des Transportweges verlaufenden Vertikalebene angeordnete Stopperelemente umfasst, welche durch wenigstens einen Antrieb zwischen einer aus dem Transportweg zurückgezogenen Freigabestellung und einer in den Transportweg vorragenden Eingriffsstellung bewegbar sind, wobei der Fördergutbehälter gegen die in die Eingriffsstellung bewegten Stopperelemente positionierbar ist. Beispielweise kann der Fördergutbehälter mit dem Rahmengestell und/oder der Vorderwand gegen die in die Eingriffsstellung bewegten Stopperelemente positioniert werden, sodass sich der Fördergutbehälter in einer exakten Übernahmeposition befindet, wenn dieser gegen die in die Eingriffsstellung bewegten Stopperelemente positioniert ist. Damit kann der Mitnehmerfinger des Vorschubantriebes den Fördergutbehälter, insbesondere den Hängeträger zuverlässig ergreifen. Die Stopperelemente sind beispielsweise durch zwischen der Freigabestellung und Eingriffsstellung um Vertikalachsen schwenkbare Stopperfinger gebildet.

Es hat sich in der Praxis gezeigt, dass die Fördergutbehälter durch dynamische Transportbewegungen mehr oder weniger zu Pendelbewegungen neigen. Die Ursache hierfür ist, dass ein Fördergutbehälter auf einem Transportträger gelenkig aufgehängt oder mit einem Transportträger gelenkig verbunden ist. Vor diesem Hintergrund ist es nun vorgesehen, dass in einem Förderabschnitt entlang der Entladestation und stromaufwärts von der Öffnungs- und Schließvorrichtung eine Fördergutbehälter-Führungsvorrichtung vorgesehen ist, durch welche die Pendelbewegung verhindert oder eine Amplitude der Pendelbewegung zumindest minimiert wird. Somit kann auch bei hochdynamischen Transportbewegungen der Fördergutbehälter ohne Pendelbewegung (oder mit ausreichend minimierter Pendelbewegung) an die Öffnungs- und Schließvorrichtung übergeben werden. Damit kann das Öffnen und/Schließen des Taschenkörpers zuverlässig durchgeführt werden.

Gemäß einer Ausgestaltung der Erfindung ist es vorgesehen, dass der Förderabschnitt einen Transportweg ausbildet, entlang welchem die Fördergutbehälter transportiert werden, wobei die Fördergutbehälter-Führungsvorrichtung zu beiden Seiten des Transportweges und symmetrisch zu einer in Richtung des Transportweges verlaufenden Vertikalebene angeordnete Führungswände umfasst. Die Führungswände sind bevorzugt stationär aufgestellt und der Fördergutbehälter wird in Transportrichtung relativ zu den Führungswänden bewegt. Das Rahmengestell des Fördergutbehälters wird zwischen den Führungswänden geführt und eine Pendelbewegung durch die Führungswände begrenzt.

Die Führungswände können auch symmetrisch zu der in Richtung des Transportweges verlaufenden Vertikalebene angeordnete und in Richtung der Öffnungs- und Schließvorrichtung geneigt aufeinander zulaufende Einlaufschrägen ausbilden. Dadurch kann eine Zentrierung des Fördergutbehälters, insbesondere des Taschenkörpers gegenüber dem Transportweg erreicht werden.

Von Vorteil ist auch, wenn zumindest eine der Führungswände mit einer Mitnehmermechanik versehen ist, wobei die Mitnehmermechanik eine mit dem Rahmengestell derart in einen Anlagekontakt bringbare geneigte Führungskulisse ausbildet, dass das Rahmengestell während des Antransportes des Fördergutbehälters in die Öffnungs- und Schließvorrichtung verschwenkt wird, wodurch der Taschenkörper aus der Schließstellung in Richtung der Öffnungsstellung umgestellt wird. Der Taschenkörper wird bereits vor der Öffnungs- und Schließvorrichtung teilweise geöffnet, indem das Rahmengestell an der Führungskulisse entlanggleitet. Der Taschenkörper wird also nicht schlagartig, sondern mit fortwährender Transportbewegung kontinuierlich geöffnet. Auch das im Taschenkörper aufgenommene Fördergut wird auf der Öffnungsbewegung "kontrolliert" auf den Boden des geöffneten Taschenkörpers bewegt.

Es kann sich auch von Vorteil erweisen, wenn die Entladestation zusätzlich unterhalb der Entladeposition eine Befüllvorrichtung umfasst, durch welche in einem ersten Schritt i) das von dem Fördergutbehälter abgeworfene Fördergut aufgenommen und in einem zweiten Schritt ii) das Fördergut an einen Aufnahmebehälter abgegeben wird. Insbesondere umfasst die Befüllvorrichtung einen Ablageboden und eine durch den Ablageboden öffenbare und verschließbare Bodenöffnung.

Der Ablageboden teilt die Fallhöhe zwischen dem Fördergutbehälter und Aufnahmebehälter in zumindest zwei (niedrigere) Höhenabschnitte auf. Dadurch wird eine "geordnete" Abgabe des Fördergutes von dem Fördergutbehälter in den Aufnahmebehälter ermöglicht. So wird bereits durch das Umstellen des Taschenkörpers von der Schließstellung (Transportstellung) in die Öffnungsstellung (Entladestellung) das Fördergut durch die Rückwand in Richtung auf den Boden bewegt. Durch die Kippbewegung des Fördergutbehälters gleitet das Fördergut auf dem Boden in Richtung zur Entladeöffnung und fällt danach in einem Winkel von weniger als 60°, insbesondere in einem Winkel zwischen 30° und 45° gegenüber einer Horizontalebene auf einen Ablageboden der Befüllvorrichtung. Der Winkel resultiert dabei aus dem Kippwinkel des Fördergutbehälters, wenn dieser in die Entladeposition gekippt ist. Dadurch können auch biegeschlaffe Fördergüter "geordnet" auf den Ablageboden übergeben werden. Danach wird die Bodenöffnung durch den Ablageboden freigegeben und das Fördergut fällt im Wesentlichen senkrecht nach unten in den unterhalb der Befüllvorrichtung bereitgestellten Aufnahmebehälter. Somit ist auch eine "geordnete" Übergabe von der Befüllvorrichtung in den Aufnahmebehälter möglich.

Es erweist sich von Vorteil, wenn die Entladestation zusätzlich eine Fördervorrichtung zum Antransport eines Aufnahmebehälters in eine Befüllposition und Abtransport eines Aufnahmebehälters von der Befüllposition umfasst, welche unterhalb der Befüllvorrichtung angeordnet ist. Damit kann auch ein automatischer Antransport eines aufzufüllenden Aufnahmebehälters und automatischer Abtransport eines befüllten Aufnahmebehälters ausgeführt werden. Das Befüllen eines Aufnahmebehälters erfolgt gemäß einem Kommissionierauftrag. Der Kommissionierauftrag kann dabei einen oder mehrere Fördergüter umfassen. Werden mehrere Fördergüter zu einem Kommissionierauftrag benötigt, so werden die Fördergutbehälter nacheinander an der Entladestation entladen und der Aufnahmebehälter befüllt. Wurden alle Fördergüter zu diesem Kommissionierauftrag in den Aufnahmebehälter geladen, kann der Aufnahmebehälter abtransportiert werden.

Gemäß der Verfahrensmaßnahme ist es vorgesehen, dass der Schritt i) und Schritt ii) zeitlich aufeinander folgend durchgeführt werden, indem der Fördergutbehälter durch die Hängefördervorrichtung zur Entladestation antransportiert und an der Entladestation angehalten wird und danach
- im ersten Schritt i) der Taschenkörper durch die Öffnungs- und Schließvorrichtung aus der Schließstellung in die Öffnungsstellung verstellt wird, und anschließend
- im zweiten Schritt ii) durch die Entladevorrichtung der Fördergutbehälter mit dem in die Öffnungsstellung verstellten Taschenkörper um die im Wesentlichen parallel zur Längserstreckung der Hängefördervorrichtung verlaufende Längsachse aus der Bereitstellposition in die Entladeposition gekippt wird, wodurch das Fördergut durch die Entladeöffnung aus dem Fördergutbehälter abgegeben wird.

Der Taschenkörper wird noch vor dem Kippen des (stillstehenden) Fördergutbehälters aus der Bereitstellposition in die Entladeposition in die Öffnungsstellung verstellt. Damit wird ein besonders zuverlässiger Entladevorgang sichergestellt.

Von Vorteil ist auch die Maßnahme, bei der Schritt i) und Schritt ii) zeitlich überlagernd durchgeführt werden, indem der Fördergutbehälter durch die Hängefördervorrichtung zur Entladestation transportiert und an der Entladestation kontinuierlich fortbewegt wird, wobei während der kontinuierlichen Transportbewegung des Fördergutbehälters
- im Schritt i) der Taschenkörper durch die Öffnungs- und Schließvorrichtung aus der Schließstellung in die Öffnungsstellung verstellt wird, und simultan
- im Schritt ii) durch die Entladevorrichtung der Fördergutbehälter mit dem Taschenkörper um die im Wesentlichen parallel zur Längserstreckung der Hängefördervorrichtung verlaufende Längsachse aus der Bereitstellposition in die Entladeposition gekippt wird, wodurch das Fördergut durch die Entladeöffnung aus dem Fördergutbehälter abgegeben wird.

Es kann ein Öffnungsvorgang des Taschenkörpers und der Ankippvorgang des Fördergutbehälters simultan ausgeführt werden. Der Entladevorgang kann dadurch zusätzlich beschleunigt werden. Außerdem kann der Entladevorgang ohne Stillstand der Transportbewegung durchgeführt werden. Grundsätzlich kann aber die Transportgeschwindigkeit der Transportträger und des Fördergutbehälters auf der Transportbewegung entlang der Entladestation variieren. Gemäß dieser Maßnahmen kann eine Entladeleistung maximiert werden.

Von Vorteil ist auch, wenn nach dem Entladen des Fördergutbehälters bzw. der Abgabe des Fördergutes aus dem Taschenkörper
- in einem Schritt iii) durch die Entladevorrichtung der Fördergutbehälter mit dem Taschenkörper um eine im Wesentlichen parallel zur Längserstreckung der Hängefördervorrichtung verlaufende Kippachse aus der Entladeposition in die Bereitstellposition rückgekippt wird, und
- in einem Schritt iv) der Taschenkörper durch die Öffnungs- und Schließvorrichtung aus der Öffnungsstellung in die Schließstellung verstellt wird.

Der Schritt iii) und Schritt iv) können zeitlich aufeinander folgend oder zeitlich überlagernd (simultan) durchgeführt werden.

Werden der Schritt iii) und Schritt iv) zeitlich aufeinander folgend durchgeführt, wird nach dem Rückkippen des Fördergutbehälters, dieser aus einer stillstehenden Position von der Entladestation herausbewegt. Der Rückkippvorgang und der Schließvorgang des Taschenkörpers folgen aufeinander (sequentiell).

Werden der Schritt iii) und Schritt iv) zeitlich überlagernd durchgeführt, wird ein Schließvorgang des Taschenkörpers und der Rückkippvorgang des Fördergutbehälters simultan ausgeführt. Der Entladevorgang wird ohne Stillstand der Transportbewegung durchgeführt. Grundsätzlich kann aber die Transportgeschwindigkeit der Transportträger und des Fördergutbehälters auf der Transportbewegung entlang der Entladestation variieren. Gemäß dieser Maßnahmen kann eine Entladeleistung maximiert werden.

Zum besseren Verständnis der Erfindung wird diese anhand der nachfolgenden Figuren näher erläutert.

Es zeigen jeweils in stark vereinfachter, schematischer Darstellung:
- Fig. 1, 4 bis 9: eine Sequenzfolge von Verfahrensschritten für die automatische Entladung eines der Fördergutbehälter in einer automatischen Entladestation mit einer ersten Ausführung einer Öffnungs- und Schließvorrichtung, in perspektivische Ansichten;
- Fig. 2a, 2b: eine erste Ausführung für einen Fördergutbehälter in der Schließstellung und Öffnungsstellung (Fördergut nicht dargestellt), in perspektivische Ansichten;
- Fig. 3a, 3b: eine zweite Ausführung für einen Fördergutbehälter in der Schließstellung und Öffnungsstellung (Fördergut nicht dargestellt), in perspektivische Ansichten;
- Fig. 10: eine automatische Entladestation mit einer zweiten Ausführung einer Öffnungs- und Schließvorrichtung, in perspektivischer Ansicht;
- Fig. 11a: eine Ausschnittsvergrößerung aus Fig. 10 mit einer Seitenansicht auf den Fördergutbehälter und die Öffnungs- und Schließvorrichtung sowie den Taschenkörper in der Schließstellung;
- Fig. 11b: eine Ausschnittsvergrößerung aus Fig. 10 mit einer Seitenansicht auf den Fördergutbehälter und die Öffnungs- und Schließvorrichtung sowie den Taschenkörper in der Öffnungsstellung;
- Fig. 12a: eine Ansicht auf die Entladevorrichtung und den Fördergutbehälter gemäß Fig. 5, welcher Fördergutbehälter sich in einer Bereitstellposition befindet, teilweise geschnitten;
- Fig. 12b: eine Ansicht auf die Entladevorrichtung und den Fördergutbehälter gemäß Fig. 6, welcher Fördergutbehälter sich in einer Entladeposition befindet, teilweise geschnitten;
- Fig. 13 bis 20: eine Sequenzfolge von Verfahrensschritten für die automatische Entladung eines der Fördergutbehälter in einer automatischen (modifizierten) Entladestation mit der ersten Ausführung einer Öffnungs- und Schließvorrichtung, in perspektivische Ansichten;
- Fig. 21a: eine Ansicht auf die Entladevorrichtung und den Fördergutbehälter gemäß Fig. 17, welcher Fördergutbehälter sich in einer Bereitstellposition befindet, teilweise geschnitten;
- Fig. 21b: eine Ansicht auf die Entladevorrichtung und den Fördergutbehälter gemäß Fig. 18, welcher Fördergutbehälter sich in einer Entladeposition befindet, teilweise geschnitten;
- Fig. 21c: den Fördergutbehälter gemäß Fig. 21a nach dem Entladen und einen Aufnahmebehälter zur Übernahme des Fördergutes von einer Befüllvorrichtung;
- Fig. 22: eine Ausschnittsvergrößerung aus Fig. 21a;
- Fig. 23: einen Vorschubantrieb für die Antriebsvorrichtung der Transportträger bzw. Fördergutbehälter, in einer Ansicht von unten.

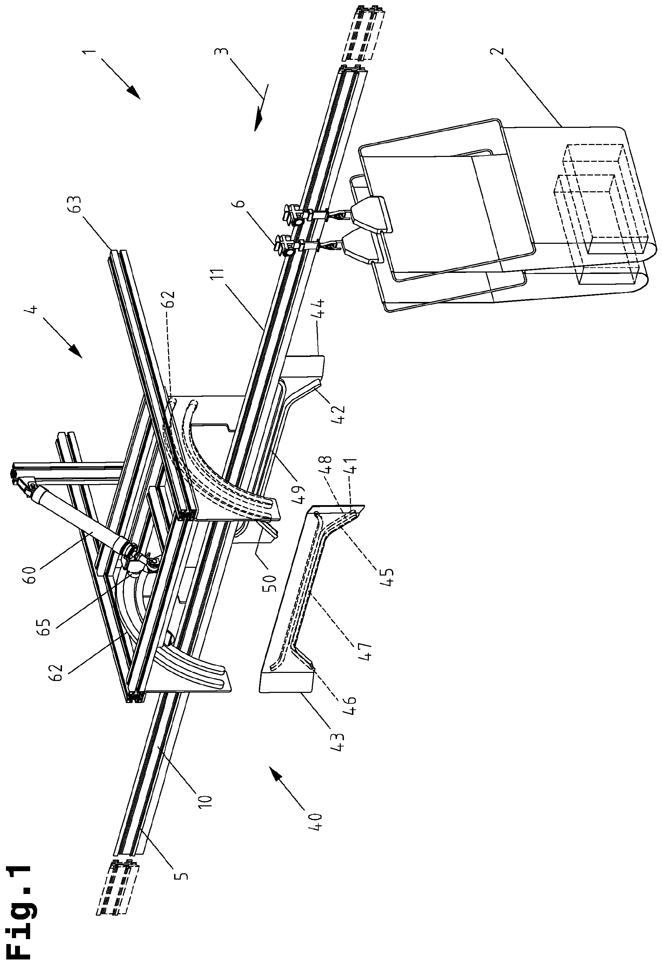

In den Fig. 1 bis 10 ist ein Abschnitt eines Hängefördersystemes umfassend eine Hängefördervorrichtung 1 zum Transport von Fördergutbehältern 2 in einer Transportrichtung 3 und eine Entladestation 4 zum automatischen Entladen eines der Fördergutbehälter 2 (Transporttasche bzw. Hängetasche) gezeigt.

Konkret ist die Hängefördervorrichtung 1 zum Antransport der Fördergutbehälter 2 in die Entladestation 4 und Abtransport der Fördergutbehälter 2 aus der Entladestation 4 vorgesehen. Diese umfasst durch eine Antriebsvorrichtung 5 entlang der Hängefördervorrichtung 1 bewegbare Transportträger 6.

Im gezeigten Ausführungsbeispiel werden die Transportträger 6 durch einen Reibschlussantrieb (Antriebsvorrichtung 5) bewegt. Der gezeigte Transportträger 6 umfasst einen Hängekörper 7, eine an einer Achse drehbar gelagerte (erste) Laufrolle 8 und eine Reibfläche 9, letztere mit einem endlos umlaufenden Reibband 10 der Hängefördervorrichtung 1 in Reibverbindung gebracht werden kann. Die in den Fig. gezeigte (zweite) Laufrolle 8 ist optional und dient der Führung des Transportträgers 6 an einer Schaltweiche. Der Transportträger 6 ist über die (erste) Laufrolle 8 an einer Profilschiene 11 der Hängefördervorrichtung 1 geführt und kann durch den Reibschlussantrieb in Transportrichtung 3 bewegt werden. Die Profilschiene 11 bildet demnach eine Führungsvorrichtung für die (angetriebenen oder nicht angetriebenen) Transportträger 6. Ein derartiger Transportträger 6 ist beispielweise in der DE 10 2011 080 280 A1 beschrieben, wobei sich die gezeigte Ausführung von dem Transportträger in der DE 10 2011 080 280 A1 dadurch unterscheidet, dass der Hängekörper 7 eine Schwenkaufnahme umfasst.

Nach einer nicht gezeigten Ausführung können die Transportträger 6 durch einen Formschlussantrieb (Antriebsvorrichtung 5) bewegt werden. Hierzu kann ein endlos umlaufendes Antriebsband der Hängefördervorrichtung 1 mit an diesem vorspringenden Mitnehmerelementen versehen werden, die mit den Transportträgern 6 oder den Hängeträgern 13 formschlüssig in Eingriff gelangen.

Auch eine Kombination aus einem Reibschlussantrieb und Formschlussantrieb ist möglich.

Die beschriebenen Antriebsvorrichtungen 5 sind keineswegs einschränkend zu verstehen, sondern zeigen lediglich unterschiedliche Möglichkeiten, wie eine Antriebskraft auf die Transportträger 6 übertragen wird, um diese an der Hängefördervorrichtung 1 in Transportrichtung 3 (angetrieben) zu bewegen.

Es ist auch eine Ausführung denkbar, bei der die Transportträger 6 eine Antriebsvorrichtung aufweisen und an der Hängefördervorrichtung 1 in Transportrichtung 3 (angetrieben) bewegt werden.

Unabhängig davon wäre auch eine Transportbewegung der Transportträger 6 ohne einer Antriebsvorrichtung möglich, indem die Transportträger 6 durch Schwerkraft an der Hängefördervorrichtung 1 in Transportrichtung 3 (nicht angetrieben) bewegt werden.

Wie in der Fig. 1, 2a, 2b, 3a, 3b ersichtlich, umfasst der Fördergutbehälter 2 in einer bevorzugten Ausführung einen Hängeträger 13, wobei der Hängeträger 13 und der Transportträger 6 über eine Gelenkverbindung derart gelenkig miteinander gekoppelt sind, dass der Hängeträger 13 um eine im Wesentlichen parallel zur Hängefördervorrichtung 1 (bzw. im Wesentlichen parallel zur Transportrichtung 3) verlaufende Achse 14 relativ zum Transportträger 6 schwenkbar ist.

Der Transportträger 6 kann mit einem ersten Kupplungselement 15 und der Hängeträger 13 mit einem zweiten Kupplungselement 16 versehen werden, wobei das erste Kupplungselement 15 und zweite Kupplungselement 16 koppelbar sind und die Gelenkverbindung bilden. Das erste Kupplungselement 15 umfasst eine Schwenkaufnahme 17 und das zweite Kupplungselement 16 umfasst eine Schwenklagerachse 18. Die Schwenklagerachse 18 ist an einem Haken ausgebildet.

Nach einer anderen nicht gezeigten Ausführung umfasst die Gelenkverbindung zwischen dem Hängeträger 13 und Transportträger 6 einen elastischen Körper, insbesondere aus Elastomermaterial, welcher einerseits mit dem Hängeträger 13 und andererseits mit dem Transportträger 6 verbunden ist. Der Hängeträger 13 und Transportträger 6 sind über den elastischen Körper (die elastische Gelenkverbindung) bevorzugt dauerhaft bzw. unlösbar miteinander verbunden.

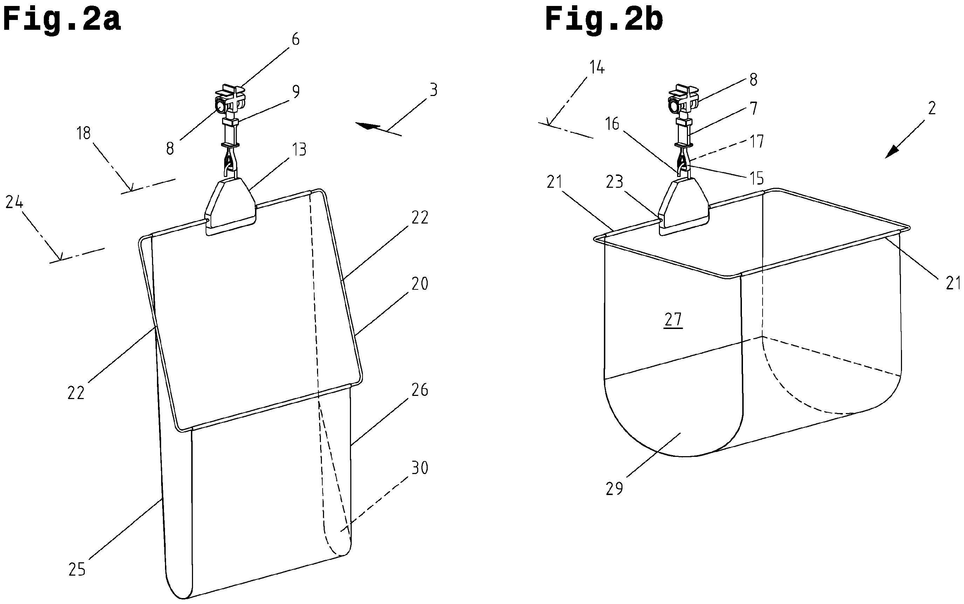

In den Fig. 2a, 2b ist eine erste Ausführung eines Fördergutbehälters 2 zum Transportieren eines Fördergutes 28 (Fig. 1) gezeigt, welcher ein Rahmengestell 20 und einen am Rahmengestell 20 befestigten Taschenkörper umfasst. Das Rahmengestell 20 bildet mit gegenseitigem Abstand parallel verlaufende Querstreben 21 und zwischen den Querstreben 21 mit gegenseitigem Abstand parallel verlaufende Längsstreben 22 aus. Das Rahmengestell 20 bildet eine im Wesentlichen rechteckförmige oder eine im Wesentlichen quadratische Außenkontur aus. Bevorzugt wird als Rahmengestell 20 ein umlaufender Drahtrahmen verwendet.

Der Fördergutbehälter 2 kann auch den Hängeträger 13 zum hängenden Transport an der Hängefördervorrichtung 1 umfassen, welcher mit einer Aufnahme 23 zur Lagerung des Rahmengestelles 20 ausgestattet ist. Das Rahmengestell 20 ist mit einer der Querstreben 21 in der Aufnahme 23 am und relativ zum Hängeträger 13 um eine Längsachse 24 der Aufnahme 23 schwenkbar gelagert ist. Der Hängeträger 13 ist nach gezeigter Ausführung mit dem zweiten Kupplungselement 16 ausgestattet, beispielsweise einem Aufhängeelement (Haken). Der Fördergutbehälter 2 kann über den Hängeträger 13 entweder am Transportträger 6 oder nach einer nicht gezeigten Ausführung an der Hängefördereinrichtung 1 aufgehängt werden.

Der Taschenkörper bildet eine Vorderwand 25 und eine Rückwand 26 aus. Ein Aufbewahrungsraum 27 wird durch die Vorderwand 25 und Rückwand 26 begrenzt. Die Vorderwand 25 ist mit seinem Ende gelenkig an der ersten Querstrebe 21 und die Rückwand 26 ist mit seinem Ende gelenkig an der zweiten Querstrebe 21 angebracht. Die jeweils vom Rahmengestell 20 nach unten hängenden Enden der Vorderwand 25 und Rückwand 26 sind bevorzugt integral miteinander verbunden oder einstückig ausgebildet, sodass die Vorderwand 25 und die Rückwand 26 direkt ineinander übergehen.

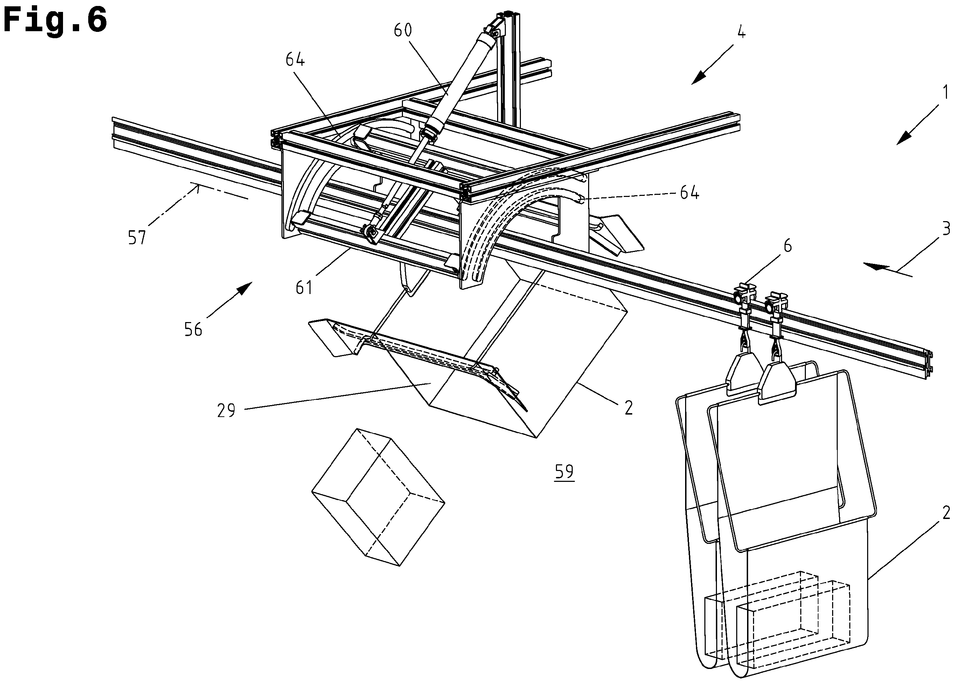

Der Taschenkörper weist an einer der Seitenwände eine zumindest bereichsweise zwischen der Vorder- und Rückwand 25, 26 ausgebildete Endladeöffnung 29 auf, durch welche ein Fördergut 28 aus dem Fördergutbehälter 2 abgebbar ist (Fig. 6).

Der Taschenkörper kann an einer der Seitenwände, welche der Endladeöffnung 29 gegenüberliegt, einen zumindest bereichsweise zwischen der Vorder- und Rückwand 25, 26 angeordneten Seitenwandanschlag 30 aufweisen, gegen welchen das Fördergut 28 anlegbar ist und um ein seitliches Herausfallen des Fördergutes 28 aus dem Fördergutbehälter 2 zu vermeiden.

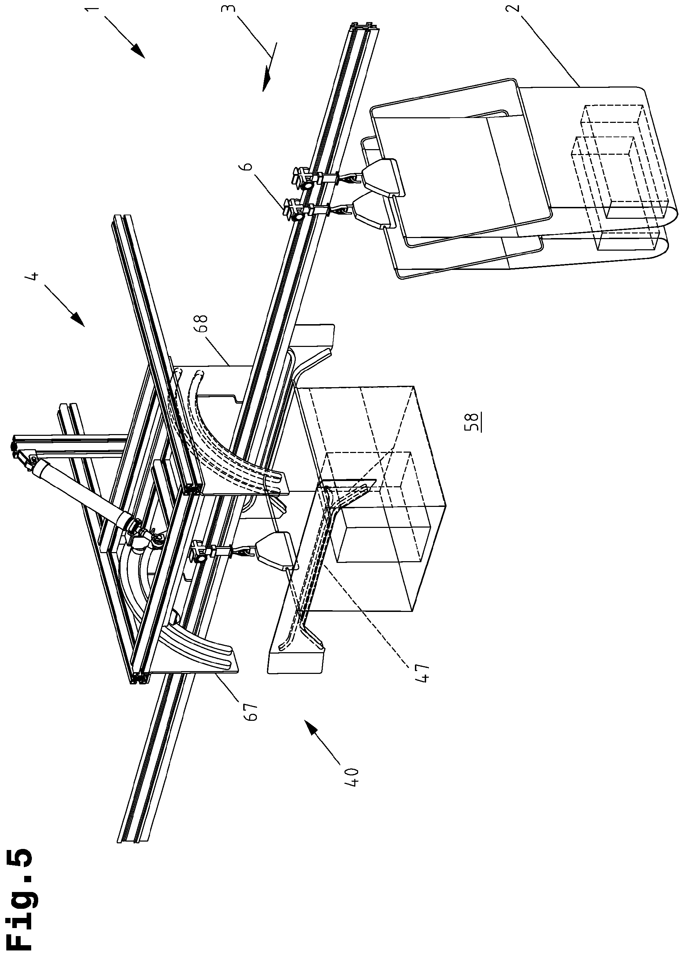

Wie in den Fig. 1, 2a, 2b, 3a, 3b, 5 ersichtlich, ist der Taschenkörper durch Verschwenken des Rahmengestelles 20 zwischen einer Schließstellung (Transportstellung) und einer Öffnungsstellung umstellbar. In der Schließstellung ist der Aufbewahrungsraum 27 volumenminimiert (beispielweise Fig. 1 - rechte Fördergutbehälter 2 vor deren Entladung) und es wird das Fördergut 28 mit dem Fördergutbehälter 2 transportiert. In der Öffnungsstellung ist der Aufbewahrungsraum 27 volumenmaximiert (Fig. 5, 6 - Fördergutbehälter 2 während der Entladung) und es wird das Fördergut 28 durch die Entladeöffnung 29 aus dem Fördergutbehälter 2 abgegeben.

Nachdem die Vorder- und Rückwand 25, 26 am Rahmengestell 20 gelenkig angebracht sind, wird durch verschiedene Schrägstellungen des Rahmengestelles 20 ein Horizontalabstand zumindest zwischen den oberen Enden der Vorder- und Rückwand 25, 26 verändert.

In der Schließstellung ist der Horizontalabstand geringer als der entsprechende Horizontalabstand in der Öffnungsstellung. Der Horizontalabstand wird auf ein Minimum reduziert und resultiert aus der Geometrie / Abmessung des Fördergutes 28, welches zum Transport im Aufbewahrungsraum 27 aufgenommen (verstaut) wird. Der Aufbewahrungsraum 27 (Transportraum) zwischen der Vorder- und Rückwand 25, 26 wird dadurch kleiner, sodass das Fördergut 28 durch die Vorder- und Rückwand 25, 26 im Aufbewahrungsraum 27 zuverlässig gehalten wird. Außerdem wird ein vergleichsweise platzsparender Transport auf der Hängefördervorrichtung 1 ermöglicht.

In der Öffnungsstellung ist der Horizontalabstand größer als der entsprechende Horizontalabstand in der Schließstellung. Der Horizontalabstand wird bevorzugt auf ein Maximum vergrö-ßert, um das Fördergut 28 zuverlässig aus dem Aufbewahrungsraum 27 zu entladen.

Bevorzugt wird unabhängig von der Geometrie / Abmessung des Fördergutes 28 der Taschenkörper stets in dieselbe Öffnungsstellung umgestellt, was einen besonders einfachen Aufbau der Entladestation 4 ermöglicht.

Es sei an dieser Stelle hingewiesen, dass mit dem Fördergutbehälter 2 verschiedene Fördergüter 28 transportiert werden können, welche in der Geometrie / Abmessung variieren. Die Fördergüter 28 sind beispielweise Kartons, Folienbeutel (so genannte "Polybags" aus Polyethylen oder Polypropanol) und dgl. Solche Folienbeutel werden vorwiegend in der Textilindustrie verwendet und beispielsweise zur Verpackung von T-Shirts, Hemden und dergleichen eingesetzt.

Die Vorderwand 25 und Rückwand 26 des Taschenkörpers sind vorzugsweise aus einem biegeschlaffen Material. Unter einem biegeschlaffen Material kann ein Stoff (Textil), eine Folie, ein Geflecht, ein Gewirke, ein Gewebe und/oder ähnliches verstanden werden. Mittels des aufgehängten biegeschlaffen Materials kann ein sehr leichter und flexibel einsetzbarer Fördergutbehälter 2 bereitgestellt werden.

Das Fördergut 28 kann insbesondere in der Schließstellung zwischen der Vorder- und Rückwand 25, 26 durch das biegeschlaffe Material gehalten, insbesondere geklemmt werden.

Das biegeschlaffe Material ist vorzugsweise anschmiegsam und kann gegebenenfalls elastische Eigenschaften aufweisen. Dadurch kann das Fördergut zumindest bereichsweise, beispielsweise an Ecken und Kanten, enganliegend von dem biegeschlaffen Material umgeben sein. Dadurch kann ein Form- und/oder Kraftschluss zum Halten des Fördergutes 28 innerhalb des Taschenkörpers bewirkt werden. Der Form- und/oder Kraftschluss kann durch eine Schwerkraft des Fördergutes 28 verstärkt werden, wobei eine Selbsthemmung eintreten kann.

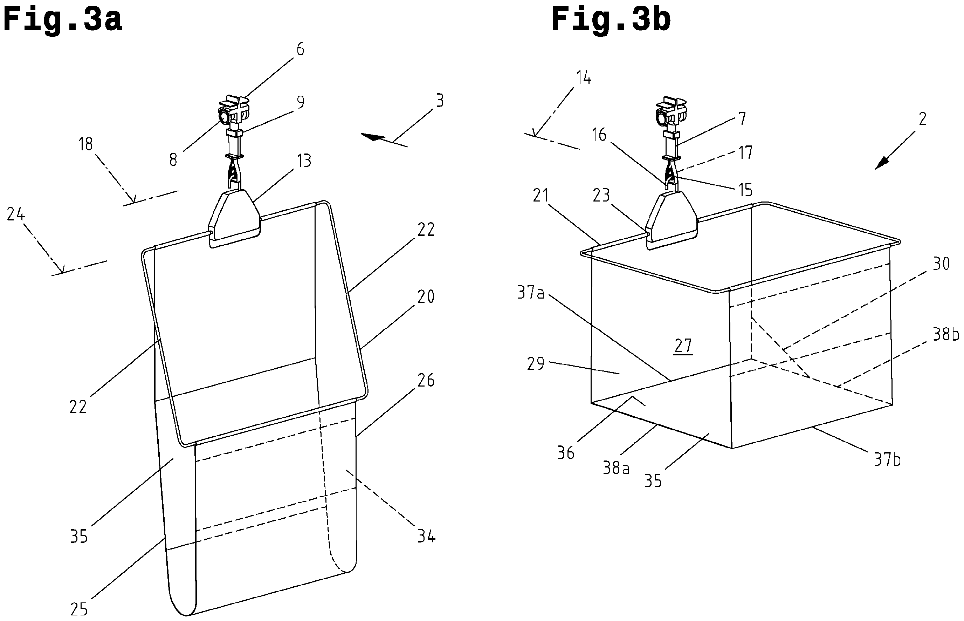

In Fig. 3a, 3b ist eine zweite Ausführung eines Fördergutbehälters 2 zum Transportieren eines Fördergutes 28 gezeigt, welcher sich von der ersten Ausführung durch den Taschenkörper unterscheidet. Dieser umfasst ein Rahmengestell 20 und einen am Rahmengestell 20 befestigten Taschenkörper. Das Rahmengestell 20 bildet wiederum mit gegenseitigem Abstand parallel verlaufende Querstreben 21 und zwischen den Querstreben 21 mit gegenseitigem Abstand parallel verlaufende Längsstreben 22 aus. Das Rahmengestell 20 bildet eine im Wesentlichen rechteckförmige oder eine im Wesentlichen quadratische Außenkontur aus. Bevorzugt wird als Rahmengestell 20 ein umlaufender Drahtrahmen verwendet.

Der Taschenkörper umfasst die Vorderwand 25, die Rückwand 26 und einen Boden 35. Die Vorderwand 25 und Rückwand 26 des Taschenkörpers weisen ein biegeschlaffes Material auf, wobei das biegeschlaffe Material innenliegend oder außenliegend im Bereich der Vorderwand 25 und/oder im Bereich der Rückwand 26 zumindest teilweise versteift ausgebildet, insbesondere beplankt ist. Dadurch ist die Vorderwand 25 in einen ersten Vorderwandabschnitt (welcher zur ersten Querstrebe 21 entfernter liegt als der zweite Vorderwandabschnitt) und einen zweiten Vorderwandabschnitt (welcher zur ersten Querstrebe 21 näher liegt als der erste Vorderwandabschnitt) unterteilt, wobei die Vorderwand 25 im ersten Vorderwandabschnitt steifer ausgebildet ist als im zweiten Vorderwandabschnitt. Die Rückwand 26 ist in einen ersten Rückwandabschnitt (welcher zur zweiten Querstrebe 21 entfernter liegt als der zweite Rückwandabschnitt) und einen zweiten Rückwandabschnitt (welcher zur zweiten Querstrebe 21 näher liegt als der erste Rückwandabschnitt) unterteilt, wobei die Rückwand 26 im zweiten Rückwandabschnitt steifer ausgebildet ist als im ersten Rückwandabschnitt. Der erste Rückwandabschnitt und der erste Vorderwandabschnitt sind zueinander benachbart angeordnet.

Konkret weist die Vorderwand 25 eine Beplankung auf, welche den Boden 35 bildet, wenn der Taschenkörper in die Öffnungsstellung umgestellt ist. Der erste Vorderwandabschnitt definiert den Boden 35. Die Beplankung ist an der Vorderwand 25 befestigt, beispielweise vernäht oder verklebt. Die Beplankung dient demnach als Versteifung des biegeschlaffen Materials, wenn der Taschenkörper in die Schließstellung umgestellt ist, und als "Rutsche", wenn der Taschenkörper in die Öffnungsstellung umgestellt ist.

Anstatt einer Beplankung kann die Vorderwand 25 auch einen Verstärkungsbereich ausbilden, in welchem die Vorderwand 25 eine größere Materialdicke und/oder eine höhere Dichte aufweist. Dieser Verstärkungsbereich bildet den Boden 35, wenn der Taschenkörper in die Öffnungsstellung umgestellt ist. Nach dieser Ausführung bildet die Vorderwand 25 den Boden 35 aus.

Mit anderen Worten, ist nach beiden Ausführungen (erste Ausführung - Boden ist durch eine Beplankung gebildet und zweite Ausführung - Boden ist durch die Vorderwand gebildet) die Vorderwand 25 mit dem Boden 35 versehen.

Die Detailausbildung eines beispielhaften Fördergutbehälters 2 ist in der österreichischen Patentanmeldung AT 50059/2019 beschrieben.

Außerdem ist im zweiten Rückwandabschnitt eine Beplankung 34 zu erkennen, die optional vorgesehen werden kann, und in diesem Ausführungsbeispiel zur Versteifung der Rückwand 26 dient. Die Beplankung ist an der Rückwand 26 befestigt, beispielweise vernäht oder verklebt. Die Beplankung dient demnach als Versteifung des biegeschlaffen Materials, wenn der Taschenkörper in die Schließstellung umgestellt ist.

Anstatt einer Beplankung kann die Rückwand 26 auch einen Verstärkungsbereich ausbilden, in welchem die Rückwand 26 eine größere Materialdicke und/oder eine höhere Dichte aufweist.

Ferner ist es denkbar, dass der Boden 35 eine in die Entladeöffnung 29 mündende Aufnahmefläche 36 aufweist, die das Entladen des Fördergutes 28 begünstigt. Die Aufnahmefläche 36 kann optional eine Gleitfläche definieren. Das Fördergut 28 kann auf der Aufnahmefläche 36 lagern.

Der Boden 35 bildet eine erste Längskante 37a, eine zur ersten Längskante 37a mit einem Abstand verlaufende zweite Längskante 37b, eine zwischen der ersten Längskante 37a und der zweiten Längskante 37b verlaufende erste Stirnkante 38a, eine zwischen der ersten Längskante 37a und der zweiten Längskante 37b verlaufende zweite Stirnkante 38b aus. Die Entladeöffnung 29 ist in der Öffnungsstellung des Taschenkörpers durch die Vorderwand 25 und Rückwand 26 begrenzt und grenzt an die erste Stirnkante 38a an.

Die erste Längskante 37a bildet eine erste Faltkante und die zweite Längskante 37b bildet eine zweite Faltkante aus. Ist der Taschenkörper in die Öffnungsstellung umgestellt, schließt die Vorderwand 25 mit dem zweiten Vorderwandabschnitt an die erste Längskante 37a an und schließt die Rückwand 26 mit dem ersten Rückwandabschnitt an die zweite Längskante 37a an.

Wie in den Fig. 3b ersichtlich, kann der Taschenkörper einen an die zweite Stirnkante 38b angrenzenden Seitenwandanschlag 30 aufweisen, gegen welchen das Fördergut 28 anlegbar ist.

Der Aufbewahrungsraum 27 des Taschenkörpers wird durch die Vorderwand 25 und Rückwand 26 begrenzt. Ebenso ist die Vorderwand 25 mit seinem Ende gelenkig (erstes Schwenklager) an der ersten Längsseite 22 und ist die Rückwand 26 mit seinem Ende (zweites Schwenklager) gelenkig an der zweiten Längsseite 22 angebracht. Es ist ersichtlich, dass mittels des ersten Schwenklagers, des zweiten Schwenklagers, der ersten Faltkante und der zweiten Faltkante ein Viergelenk gebildet wird, wodurch der Taschenkörper besonders einfach zwischen der Schließstellung und Öffnungsstellung umgestellt werden kann.

Die jeweils vom Rahmengestell 20 nach unten hängenden Enden der Vorderwand 25 und Rückwand 26 sind bevorzugt integral miteinander verbunden oder einstückig ausgebildet, sodass die Vorderwand 25 und die Rückwand 26 direkt ineinander übergehen.

Der Taschenkörper weist an einer der Seitenwände die zumindest bereichsweise zwischen der Vorder- und Rückwand 25, 26 ausgebildete Endladeöffnung 29 auf, durch welche ein Fördergut 28 aus dem Fördergutbehälter 2 abgebbar ist.

Der Fördergutbehälter 2 kann auch den Hängeträger 13 zum hängenden Transport an der Hängefördervorrichtung 1 umfassen, welcher mit einer Aufnahme 23 zur Lagerung des Rahmengestelles 20 ausgestattet ist, wie oben beschrieben.

Wie in den Fig. 3a, 3b ersichtlich, ist der Taschenkörper durch Verschwenken des Rahmengestelles 20 zwischen der Schließstellung und der Öffnungsstellung umstellbar. In der Schließstellung ist der Aufbewahrungsraum 27 volumenminimiert und es wird das Fördergut 28 mit dem Fördergutbehälter 2 transportiert. In der Öffnungsstellung ist der Aufbewahrungsraum 27 volumenmaximiert und es wird das Fördergut 28 durch die Entladeöffnung 29 aus dem Fördergutbehälter 2 abgegeben.

Nachdem die Vorder- und Rückwand 25, 26 am Rahmengestell 20 gelenkig angebracht sind, wird durch verschiedene Schrägstellungen des Rahmengestelles 20 ein Horizontalabstand zumindest zwischen den oberen Enden der Vorder- und Rückwand 25, 26 verändert, wie oben beschrieben.

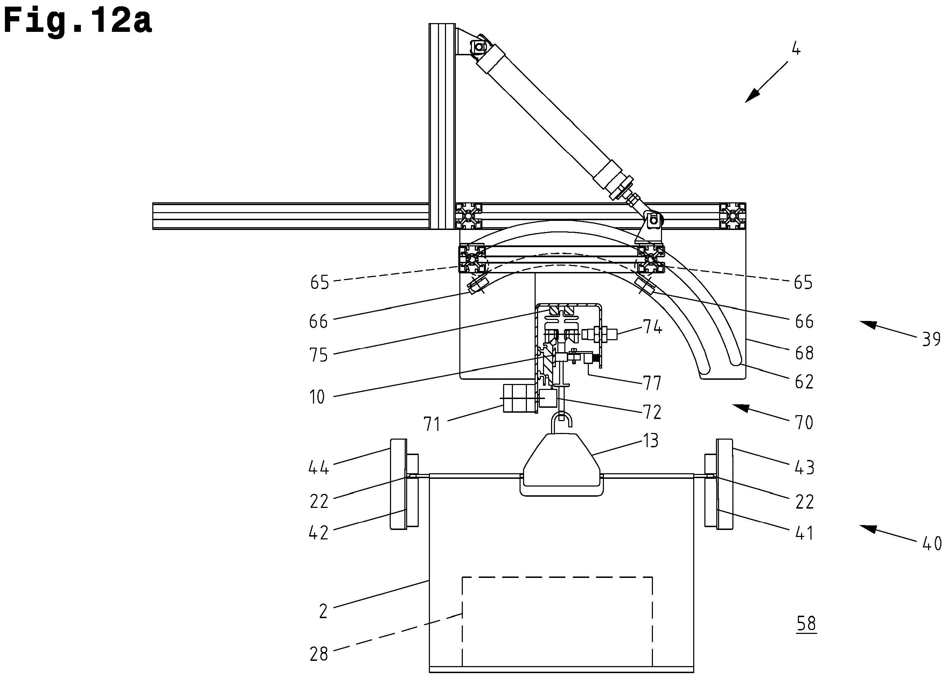

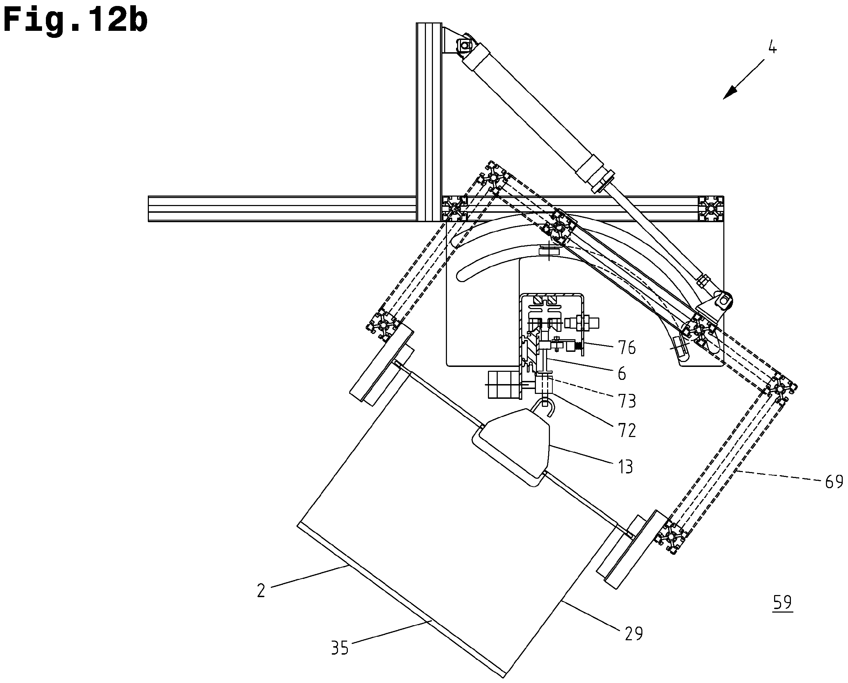

In den Fig. 1, 12a und 12b ist die Entladestation 4 in unterschiedlichen Ansichten gezeigt. Diese umfasst die Hängefördervorrichtung 1 zum Antransport des Fördergutbehälters 2 in die Entladestation 4 und Abtransport des Fördergutbehälters 2 aus der Entladestation 4, eine (erste Ausführung einer) Öffnungs- und Schließvorrichtung 40 zum Verstellen des Taschenkörpers zwischen der Schließstellung und der Öffnungsstellung und eine Entladevorrichtung 39 zum Entladen des in die Öffnungsstellung verstellten Taschenkörpers.

Die Öffnungs- und Schließvorrichtung 40 umfasst eine Betätigungsvorrichtung zum automatischen Öffnen und Schließen des Taschenkörpers, durch welche das Rahmengestell 20 relativ zum Hängeträger 13 um die Längsachse 24 derart schwenkbar ist, dass der Taschenkörper zwischen der Schließstellung und der Öffnungsstellung umstellbar ist.

Nach einer ersten Ausführung umfasst die Betätigungsvorrichtung zum automatischen Öffnen und Schließen des Taschenkörpers eine Mitnehmermechanik. Die Mitnehmermechanik umfasst bevorzugt eine erste Mitnehmermechanik 41 und eine zweite Mitnehmermechanik 42, die zu beiden Seiten und unterhalb der Hängefördervorrichtung 1 zum Antransport des Fördergutbehälters 2 in die Entladestation 4 und Abtransport des Fördergutbehälters 2 aus der Entladestation 4 angeordnet sind. Insbesondere sind die erste Mitnehmermechanik 41 und zweite Mitnehmermechanik 42 bezüglich des Fördergutbehälters 2, insbesondere des Rahmengestelles 20, zueinander symmetrisch angeordnet. Grundsätzlich kann aber auch nur eine der Mitnehmermechaniken 41 vorgesehen werden.

Die erste Mitnehmermechanik 41 ist an einem ersten Tragrahmen 43 und die zweite Mitnehmermechanik 42 ist an einem zweiten Tragrahmen 44 befestigt. Der erste Tragrahmen 43 und zweite Tragrahmen 44 sind Teil der Betätigungsvorrichtung.

Im gezeigten Ausführungsbeispiel umfasst die erste Mitnehmermechanik 41 eine untere Führungsanordnung und eine obere Führungsanordnung, ebenso umfasst die zweite Mitnehmermechanik 42 eine untere Führungsanordnung und eine obere Führungsanordnung. Die untere Führungsanordnung und obere Führungsanordnung sind mit Abstand übereinander angeordnet, sodass zwischen der unteren Führungsanordnung und oberen Führungsanordnung der ersten Mitnehmermechanik 41 und zwischen der unteren Führungsanordnung und oberen Führungsanordnung der zweiten Mitnehmermechanik 42 jeweils eine der Längsstreben 22 aufgenommen werden kann. Der Abstand entspricht im Wesentlichen dem Durchmesser der Längsstrebe 22. Die erste Mitnehmermechanik 41 und/oder zweite Mitnehmermechanik 42 kann aber auch nur die untere Führungskulisse umfassen.

Die untere Führungsanordnung und, sofern vorgesehen, die obere Führungsanordnung, der ersten Mitnehmermechanik 41 und, sofern vorgesehen, der zweiten Mitnehmermechanik 42 umfassen in Transportrichtung 3 des Fördergutbehälters 2 einen stromaufwärts gelegenen Einlaufabschnitt 45, einen stromabwärts gelegenen Auslaufabschnitt 46 und zwischen dem Einlaufabschnitt 45 und Auslaufabschnitt 46 angeordneten Endladeabschnitt 47. Die untere Führungsanordnung und, sofern vorgesehen, die obere Führungsanordnung, der ersten Mitnehmermechanik 41 und/oder zweiten Mitnehmermechanik 42 verlaufen parallel zur Transportrichtung 3 des Fördergutbehälters 2.

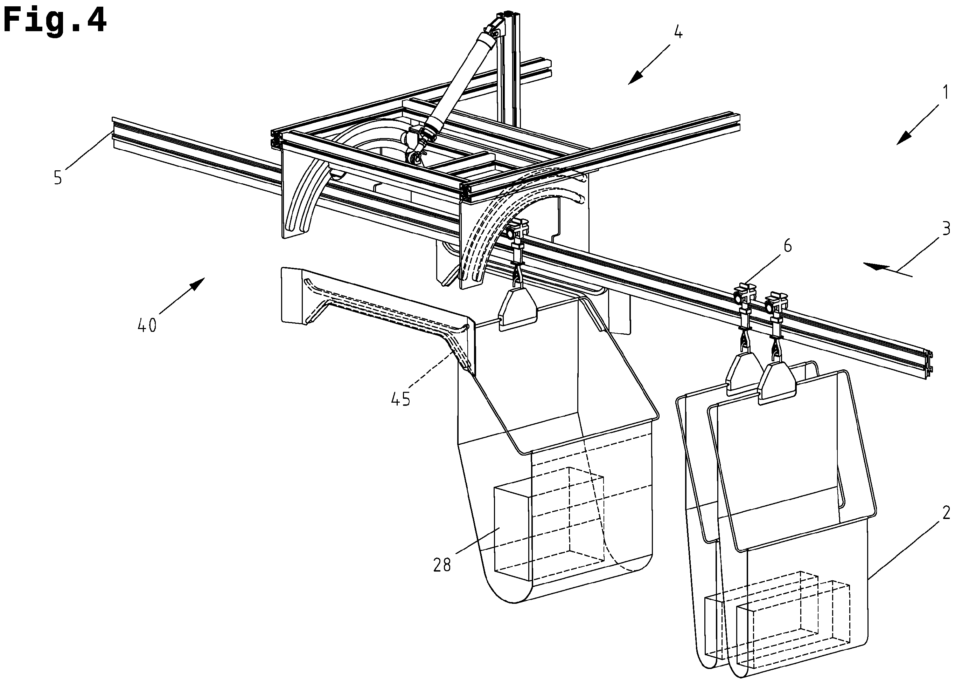

Der Einlaufabschnitt 45 bildet eine mit dem Rahmengestell 20, insbesondere den Längsstreben 22, derart in einen Anlagekontakt bringbare geneigte Führungskulisse 48 aus, dass das Rahmengestell 20 während des Antransportes des Fördergutbehälters 2 in die Entladestation 4 verschwenkt wird, wodurch der Taschenkörper aus der Schließstellung in Richtung der Öffnungsstellung umgestellt wird (Fig. 4).

Der Endladeabschnitt 47 bildet eine mit dem Rahmengestell 20, insbesondere den Längsstreben 22, derart in einen Anlagekontakt bringbare und im Wesentlichen horizontale Führungskulisse 49 aus, dass das Rahmengestell 20 während des Entladevorganges in der verschwenkten Auslenkstellung gehalten wird, wodurch auch der Taschenkörper in der Öffnungsstellung verbleibt (Fig. 5).

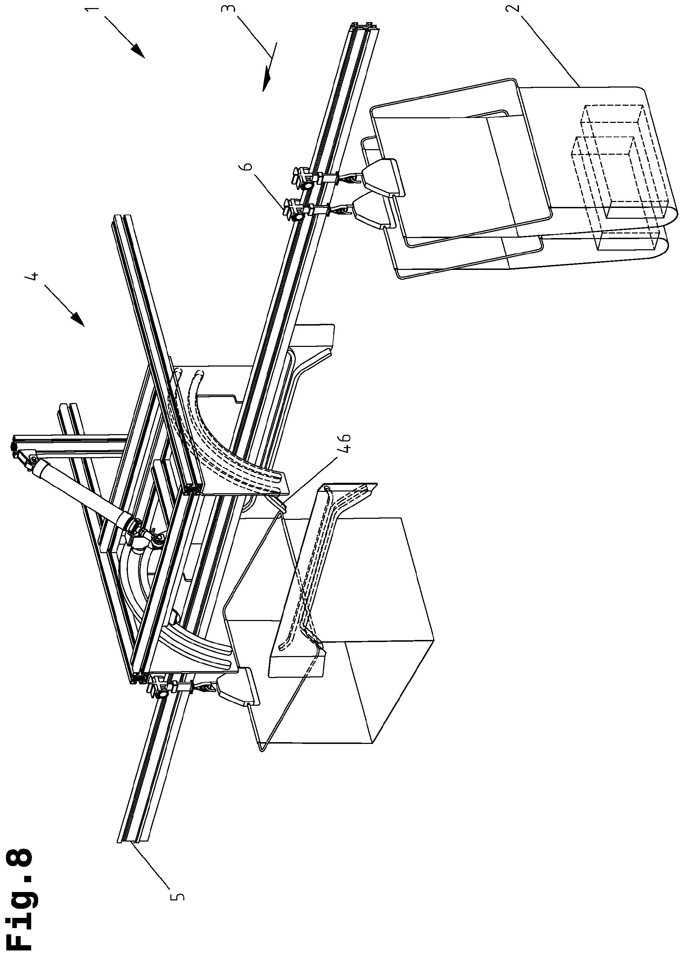

Der Auslaufabschnitt 46 bildet eine mit dem Rahmengestell 20, insbesondere den Längsstreben 22, derart in einen Anlagekontakt bringbare geneigte Führungskulisse 50 aus, dass das Rahmengestell 20 während des Abtransportes des Fördergutbehälters 2 aus der Entladestation 4 verschwenkt wird, wodurch der Taschenkörper aus der Öffnungsstellung in Richtung der Schließstellung umgestellt wird (Fig. 8).

Grundsätzlich könnte der Auslaufabschnitt 46 nach einer anderen (nicht gezeigtem) Ausgestaltung eine mit dem Rahmengestell 20, insbesondere den Längsstreben 22, derart in einen Anlagekontakt bringbare und im Wesentlichen horizontale Führungskulisse 49 ausbilden, dass das Rahmengestell 20 während des Abtransportes des Fördergutbehälters 2 aus der Entladestation 4 und nach dem Verlassen des Auslaufabschnittes 46 "schlagartig" verschwenkt wird. Dadurch kann der Taschenkörper sehr rasch aus der Öffnungsstellung in Richtung der Schließstellung umgestellt werden und der Entladezyklus beschleunigt werden.

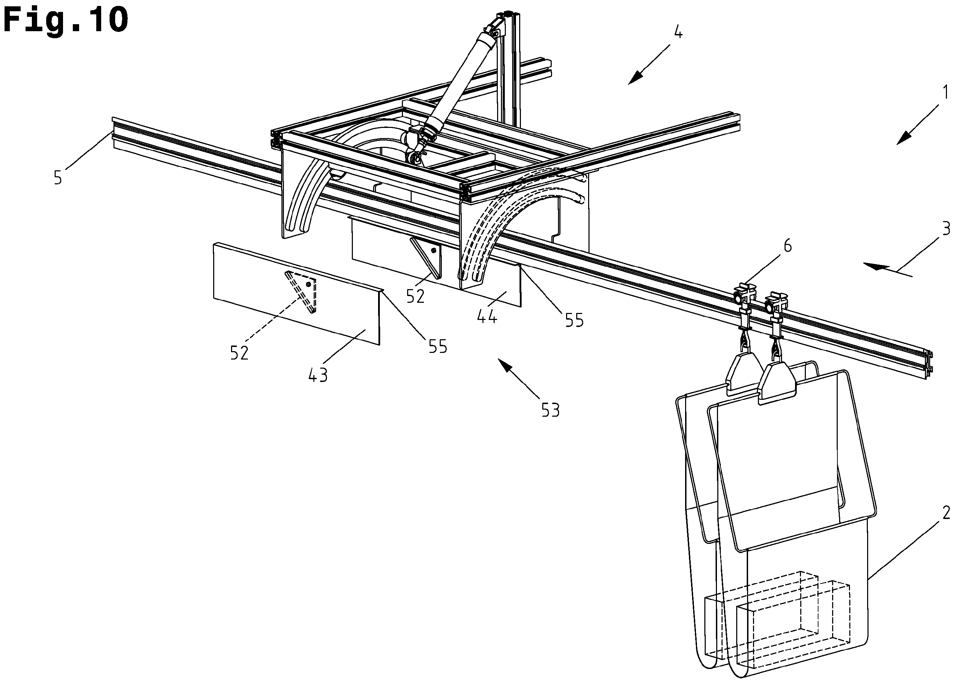

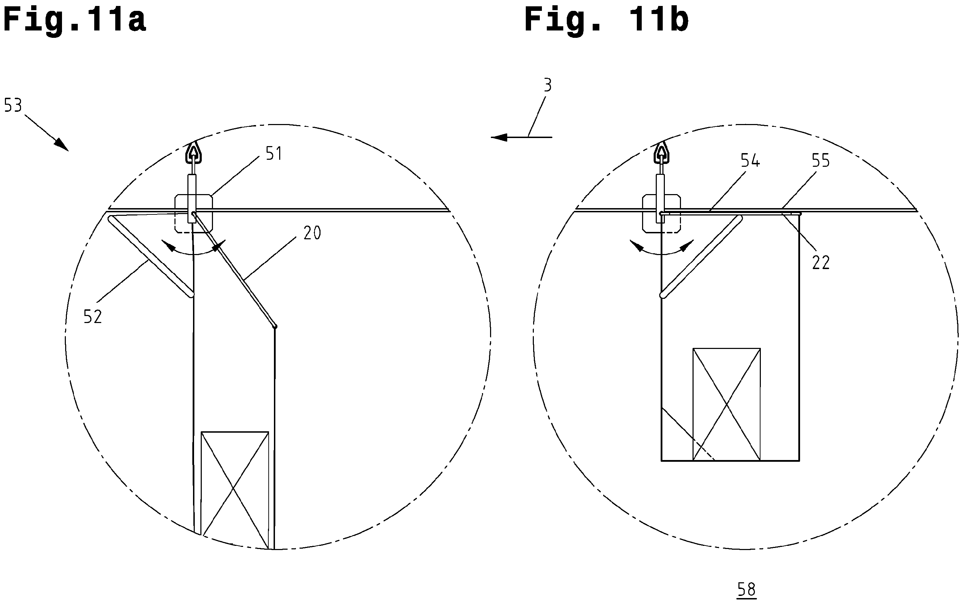

In den Fig. 10, 11a und 11b ist die Entladestation 4 mit der Hängefördervorrichtung 1 zum Antransport des Fördergutbehälters 2 in die Entladestation 4 und Abtransport des Fördergutbehälters 2 aus der Entladestation 4, der Entladevorrichtung 39 zum Entladen des in die Öffnungsstellung verstellten Taschenkörpers und einer (zweiten Ausführung einer) Öffnungs- und Schließvorrichtung 53 zum Verstellen des Taschenkörpers zwischen der Schließstellung und der Öffnungsstellung gezeigt.

Die Öffnungs- und Schließvorrichtung 53 umfasst nach einer zweiten Ausführung der Betätigungsvorrichtung zum automatischen Öffnen und Schließen des Taschenkörpers, zumindest eine mittels eines Antriebs 51 (siehe Fig. 11a, 11b) zwischen einer ersten Klappenstellung (Fig. 11a) und einer zweiten Klappenstellung (Fig. 11b) bewegbare Öffnungsklappe 52 zum Verstellen des Taschenkörpers zwischen der Schließstellung und der Öffnungsstellung.

Wie in Fig. 11b zu erkennen, ist der Fördergutbehälter 2 bereits in seine Öffnungsstellung verschwenkt. Dazu wird ausgehend von einer in Fig. 11a gezeigten Position die Öffnungsklappe 52 um einen Winkel in eine in Fig. 11b gezeigte weitere Position verschwenkt.

Das Betätigen bzw. Verschwenken der Öffnungsklappe 52 zwischen einer ersten Klappenstellung und einer zweiten Klappenstellung erfolgt mittels des Antriebs 51. In der ersten Klappenstellung (Fig. 11a) befindet sich der Taschenkörper in der Schließstellung. In der zweiten Klappenstellung (Fig. 11b) befindet sich der Taschenkörper in der Öffnungsstellung. Bei dem Antrieb 51 kann es sich um einen Schrittmotor und/oder einen beliebigen anderen Antrieb handeln. Der Antrieb 51 und die Öffnungsklappe 52 sind Teil einer Öffnungs- und Schließvorrichtung 53 zum Verstellen des Taschenkörpers zwischen einer Schließstellung (Fig. 11a) und einer Öffnungsstellung (Fig. 11b).

Die Betätigungsvorrichtung bzw. Öffnungsklappe 52 zum Öffnen des Fördergutbehälters 2 bewegt das Rahmengestell 20 zwischen einer Ausgangsstellung und einer Auslenkstellung. In der Ausgangsstellung ist das Rahmengestell 20 je nach Beladung ungefähr vertikal bis schräg und in der Auslenkstellung ungefähr horizontal angeordnet.

Die Öffnungsklappe 52 weist einen Führungssteg bzw. Führungsfläche 54 auf. Dieser befindet sich in der Darstellung der Fig. 11a, also in der Schließstellung des Taschenkörpers, vor dem heruntergeklappten Rahmengestell 20. In der Darstellung gemäß Fig. 11b, also in der

Öffnungsstellung des Taschenkörpers, liegt das Rahmengestell 20 zwischen dem Führungssteg 54 und einem Führungsprofil 55. Je nach Antriebsmoment des Antriebs 51 ist es möglich, dass dadurch das Rahmengestell 20 mit den Längsstreben 21 kraftschlüssig zwischen dem Führungssteg 54 der Öffnungsklappe 52 und dem Führungsprofil 55 fixiert ist. Wie in den Fig. 11b gezeigt, liegt also in der Öffnungsstellung des Taschenkörpers der Führungssteg 54 an dem Rahmengestell 20 an und hält diesen in einer im Wesentlichen waagrechten Position.

Wie in Fig. 10 ersichtlich, umfasst die Öffnungsklappe eine erste Öffnungsklappe 52 und eine zweite Öffnungsklappe 52, die synchron angesteuert werden und die zu beiden Seiten und unterhalb der Hängefördervorrichtung 1 zum Antransport des Fördergutbehälters 2 in die Entladestation 4 und Abtransport des Fördergutbehälters 2 aus der Entladestation 4 angeordnet sind. Insbesondere sind die erste Öffnungsklappe 52 und zweite Öffnungsklappe 52 bezüglich des Fördergutbehälters 2, insbesondere des Rahmengestelles 20, zueinander symmetrisch angeordnet. Dadurch kann beim Öffnen des Taschenkörpers 2 ein verwindungsfreies Verlagern des Rahmengestelles 20 erzielt werden. Es können schwerere Fördergüter 28 in den Fördergutbehälter 2 eingeladen werden. Grundsätzlich kann aber auch nur eine der Öffnungsklappe 52 vorgesehen werden.

Die erste Öffnungsklappe 52 ist an einem ersten Tragrahmen 43 und die zweite Öffnungsklappe 52 ist an einem zweiten Tragrahmen 44 befestigt. Jeder Öffnungsklappe 52 ist ein Führungsprofil 55 zugeordnet.

Wie gezeigt, sind die Führungsprofile 55 zu beiden Seiten und unterhalb der Hängefördervorrichtung 1 zum Antransport des Fördergutbehälters 2 in die Entladestation 4 und Abtransport des Fördergutbehälters 2 aus der Entladestation 4 angeordnet.

Von Vorteil ist auch, dass in der zweiten Klappenstellung der Öffnungsklappe 52 die in Transportrichtung 3 des Fördergutbehälters 2 verlaufende Führungsfläche 54 zum Führen des Rahmengestelles 20 bei einem Verlassen der Entladestation 4 dient. Durch die Führungsfläche 54 kann eine gewünschte Bewegungsbahn des Taschenkörpers beim Verlassen der Entladestation 4 erreicht werden. Gegebenenfalls können auch eventuelle beim Beschleunigen des Fördergutbehälters 2 auftretende Vibrationen und/oder Schwingungen gedämpft werden, sodass eine insgesamt ruhigere Fahrt und damit ein schonenderer Transport des Fördergutes 28 innerhalb des Fördergutbehälters 2 möglich sind.

Wie in den Fig. 1 bis 9 ersichtlich umfasst die Entladevorrichtung 39 eine Betätigungsvorrichtung 56, durch welche der Fördergutbehälter 2 mit dem Taschenkörper um eine im Wesentlichen parallel zur Längserstreckung der Hängefördervorrichtung 1 verlaufenden Kippachse 57 zwischen einer Bereitstellposition 58 (Fig. 5, 12a) und einer Entladeposition 59 (Fig. 6, 12b) kippbar ist, wobei in der Entladeposition 59 das Fördergut 28 durch die Entladeöffnung 29 aus dem Fördergutbehälter 2 abgebbar ist. Das Fördergut 28 wird vorzugsweise in ein nicht dargestelltes Behältnis oder auf eine nicht dargestellte Fördervorrichtung, beispielsweise einen Bandförderer geladen. Dieses Behältnis kann auch den Versandkarton darstellen.

In einer bevorzugten ersten Ausführung wird der Fördergutbehälter 2 mit dem in die Öffnungsstellung verstellten Taschenkörper um die Kippachse 57 zwischen einer Bereitstellposition 58 (Fig. 5, 12a) und einer Entladeposition 59 (Fig. 6, 12b) gekippt. Mit anderen Worten wird vor dem Entladen in einem vorausgehenden ersten Schritt i) der Taschenkörper in die Öffnungsstellung umgestellt - der Fördergutbehälter 2 befindet sich nun in der Bereitstellposition 58, und in einem nachfolgenden zweiten Schritt ii) der Fördergutbehälter 2 mit dem in die Öffnungsstellung verstellten Taschenkörper um die Kippachse 57 geschwenkt - der Fördergutbehälter 2 befindet sich nun in der Entladeposition 59.

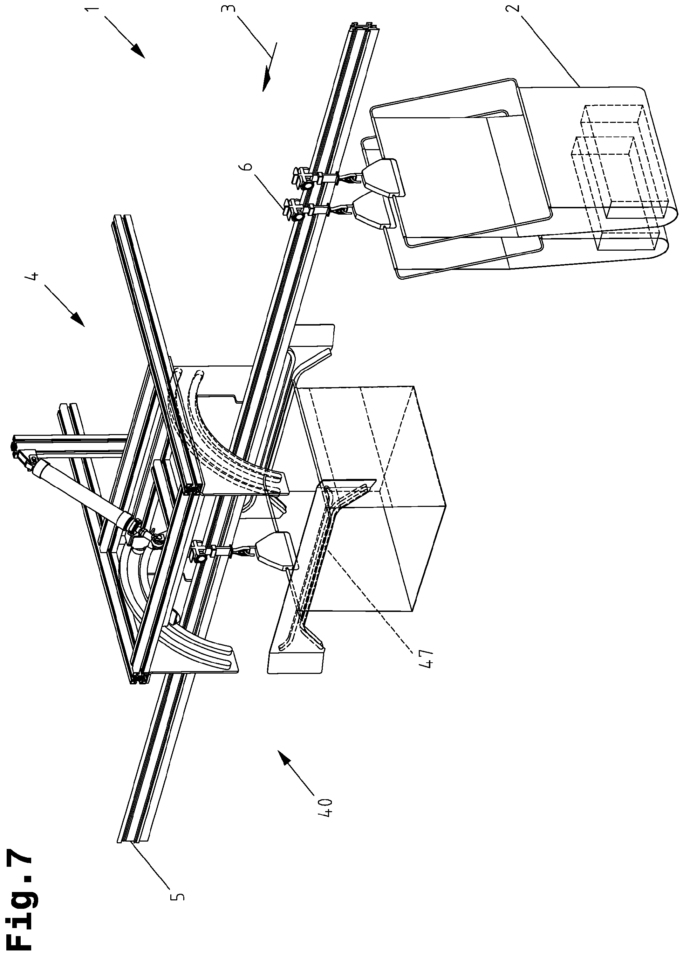

Nach dem Entladen wird der Fördergutbehälter 2 mit dem in die Öffnungsstellung verstellten Taschenkörper um die Kippachse 57 von der Entladeposition 59 (Fig. 6, 12a) in die Bereitstellposition 58 (Fig. 7) rückgekippt. Danach wird der Fördergutbehälter 2 durch die Hängefördervorrichtung 1 abtransportiert.

Wie im Nachfolgenden noch anhand Fig. 12a, 12b beschrieben wird, kann die Entladestation 4 eine Feststellvorrichtung 70 zur Arretierung des Transportträgers 6 während eines Entladevorganges des Fördergutbehälters 2 vorgesehen werden. Die Arretierung des Transportträgers 6 erfolgt, nachdem der Fördergutbehälter 2 die Bereitstellposition 58 erreicht hat.

Nach einer zweiten Ausführung wird der Fördergutbehälter 2 noch während der Umstellbewegung des Taschenkörpers zwischen der Schließstellung und der Öffnungsstellung um die Kippachse 57 zwischen der Bereitstellposition 58 und der Entladeposition 59 gekippt. Mit anderen Worten wird zum Entladen noch während des Öffnungsvorganges des Taschenkörpers von der Schließstellung in Richtung der Öffnungsstellung der Fördergutbehälter 2 um die Kippachse 57 von der Bereitstellposition 58 in die Entladeposition 59 gekippt. Gleichermaßen kann nach dem Entladen während des Schließvorganges des Taschenkörpers von der Öffnungsstellung in Richtung der Schließstellung der Fördergutbehälter 2 um die Kippachse 57 von der Entladeposition 59 in die Bereitstellposition 58 gekippt werden.

Die Betätigungsvorrichtung 56 der Entladevorrichtung 39 umfasst einen mittels eines Antriebes 60 um eine parallel zur Transportrichtung 3 der Fördergutbehälter 2 verlaufende Achse zwischen einer Ausgangsstellung und einer Betätigungsstellung kippbaren Rahmen 61. Der Antrieb 60 ist beispielsweise ein Fluidzylinder.

In der gezeigten Ausführung ist der Rahmen 61 über Führungsanordnungen 62 an einer ortsfesten aufgestellten Tragkonstruktion 63 gelagert. Die Führungsanordnungen 62 umfassen jeweils Führungskulissen 64 und abrollbar aufliegenden Führungsrollen 65, 66 (Fig. 1, 12a). Die Führungskulissen umfassen die (linke) erste Führungskulisse 64 und die (rechte) zweite Führungskulisse 64. Die erste Führungskulisse 64 ist an einem ersten Tragrahmen 67 und die zweite Führungskulisse 64 ist an einem zweiten Tragrahmen 68 befestigt. Der Rahmen 61 weist einander gegenüberliegende Rahmenseiten auf, wobei an der ersten Rahmenseite die Führungsrollen 65, 66 und an der zweiten Rahmenseite die Führungsrollen 65, 66 angeordnet sind.

Wie aus Gründen der besseren Übersicht ausschließlich in Fig. 12b in strichlierte Linien dargestellt, ist die Betätigungsvorrichtung der Öffnungs- und Schließvorrichtung 40; 53 am kippbaren Rahmen 61 gelagert.

Konkret ist die erste Mitnehmermechanik 41 mit dem ersten Tragrahmen 43 und die zweite Mitnehmermechanik 42 mit dem zweiten Tragrahmen 44 gemäß der ersten Ausführung oder ist die erste Öffnungsklappe 52 mit dem ersten Tragrahmen 43 und die zweite Öffnungsklappe 52 mit dem zweiten Tragrahmen 44 gemäß der zweiten Ausführung über Rahmenverbindungen 69 am Rahmen 61 befestigt.

Somit wird die Öffnungs- und Schließvorrichtung 40; 53 gemeinsam mit dem Rahmen 61 gekippt und es wird der Fördergutbehälter 2 auch in der Entladeposition 59 (zwischen der unteren Führungsanordnung und oberen Führungsanordnung der ersten Mitnehmermechanik 41 und, sofern vorhanden, zwischen der unteren Führungsanordnung und oberen Führungsanordnung der zweiten Mitnehmermechanik 42 jeweils eine der Längsstreben 22 gemäß der ersten Ausführung oder zwischen der ersten Öffnungsklappe 52 und dem ersten Führungsprofil 55 und, sofern vorhanden, zwischen der zweiten Öffnungsklappe 52 und dem zweiten Führungsprofil 55) im Wesentlichen fixiert gehalten.

In den Fig. 12a, 12b ist die Entladestation 4 mit der ersten Ausführung der Öffnungs- und Schließvorrichtung 40 gezeigt. In Fig. 12a befindet sich der Fördergutbehälter 2 in der Bereitstellposition 58 und der Taschenkörper in seiner Öffnungsstellung (vergleiche auch Fig. 5). In Fig. 12b befindet sich der Fördergutbehälter 2 in der Entladeposition 59 und der Taschenkörper in seiner Öffnungsstellung (vergleiche auch Fig. 6).

Die Entladestation 4 umfasst nach dieser Ausführung zusätzlich eine Feststellvorrichtung 70 zur Arretierung des Transportträgers 6 während eines Entladevorganges des Fördergutbehälters 2.

Die Feststellvorrichtung 70 umfasst zum Arretieren des Transportträgers 6 ein mittels eines Antriebs 71 zwischen einer unwirksamen Ausgangsstellung (Fig. 12a) und einer wirksamen Betätigungsstellung (Fig. 12b) bewegbares Arretierelement 72. Das Arretierelement 72 umfasst beispielweise einen Anschlag, gegen welchen ein Profilsteg 73 des Transportträgers 6 aufläuft und den Transportträger 6 in Transportrichtung 3 positioniert. Die Arretierung des Transportträgers 6 erfolgt, wenn der Fördergutbehälter 2 angehalten wurde und die Bereitstellposition 58 erreicht hat. Die Bereitstellposition 58 wird über eine Sensorik 74, beispielweise einem Näherungssensor überwacht.

Die Entladestation 4 kann ferner eine parallel zur Transportrichtung 3 verlaufende Führungsvorrichtung 75 zur Seitenführung des Transportträgers 6 während einer Transportbewegung des Transportträgers 6 durch die Hängefördervorrichtung 1 zum Antransport des Fördergutbehälters 2 in die Entladestation 4 und Abtransport des Fördergutbehälters 2 aus der Entladestation 4 umfassen. Außerdem ist die Führungsvorrichtung 75 während des Entladevorganges und wenn der Fördergutbehälter 2 zwischen der Bereitstellposition 58 und Entladeposition 59 um die Kippachse 57 gekippt wird wirksam, indem der Transportträger 6 gegen eine Seitwärtsbewegung (quer zur Transportrichtung 3) fixiert bzw. eine Seitwärtsbewegung (quer zur Transportrichtung 3) begrenzt wird.

Wie ausschließlich in den Fig. 12a, 12b eingetragen, ist in der Entladestation 4 ein parallel zur Transportrichtung 3 verlaufendes Aufnahmeprofil 76 vorgesehen, an welchem die Führungsvorrichtung 75 und/oder die Sensorik 74 und/oder eine Andrückeinheit 77 gelagert sind. Wie oben beschrieben, kann ein Reibschlussantrieb (Antriebsvorrichtung 5) zum Antrieb der Transportträger 6 verwendet werden. In diesem Fall kann es sich von Vorteil erweisen, wenn die Andrückeinheit 77 mit einem mit einer Federkraft beaufschlagten Andrückmittel den Transportträger 6 gegen das Reibband 10 andrückt. In diesem Fall kann das Arretierelement 72 in die Betätigungsstellung mit einer entgegen der Federkraft wirksamen Entriegelungskraft den Transportträger 6 vom Reibband 10 abheben, sodass der Fördergutbehälter 2 in der Bereitstellposition 58 verbleibt und nicht mit einer Antriebskraft beaufschlagt wird. Es sei aber ausdrücklich hingewiesen, dass eine solche Andrückeinheit 77 auch entfallen kann.

Anhand der Fig. 1, 4 bis 9 wird das Verfahren zum Entladen eines Fördergutes 28 aus einem Fördergutbehälter 2 beschrieben. Die Fördergutbehälter 2 können vor der Entladestation 4 in Transportrichtung 3 hintereinander aufgestaut (Fig. 1) und danach über eine nicht dargestellte Vereinzelungsvorrichtung separiert werden, ehe einer der Fördergutbehälter 2 zur Entladestation 4 antransportiert wird.

In der Entladestation 4 wird in einem Schritt i) durch die Öffnungs- und Schließvorrichtung 40 der Taschenkörper aus der Schließstellung in die Öffnungsstellung verstellt.

Der Fördergutbehälter 2 wird durch die Hängefördervorrichtung 1 in Transportrichtung 3 bewegt und an der Entladestation 4 kontaktiert das Rahmengestell 20 den Einlaufabschnitt 45, sodass durch die Transportbewegung das Rahmengestell 20 derart verschwenkt, dass der Taschenkörper aus der Schließstellung in Richtung der Öffnungsstellung umgestellt wird (Fig. 4).

Durch die fortwährende Transportbewegung des Fördergutbehälters 2 erreicht das Rahmengestell 20 den Endladeabschnitt 47 und wird dieses dabei derart verschwenkt, dass der Taschenkörper vollständig in die Öffnungsstellung umgestellt wird und in der Öffnungsstellung gehalten wird (Fig. 5).

Der Fördergutbehälter 2 wird sodann kurzzeitig angehalten. In der angehaltenen Position befindet sich der in die Öffnungsstellung umgestellte Fördergutbehälter 2 in der Bereitstellposition 58 (Fig. 5, 12a).

In einem Schritt ii) wird durch die Entladevorrichtung 39 der Fördergutbehälter 2 mit dem (nach dieser Ausführung) in die Öffnungsstellung verstellten Taschenkörper um die im Wesentlichen parallel zur Längserstreckung der Hängefördervorrichtung 1 verlaufende Längsachse 57 aus der Bereitstellposition 58 in die Entladeposition 59 gekippt, wodurch das Fördergut 28 durch die Entladeöffnung 29 aus dem Fördergutbehälter 2 abgegeben, insbesondere ausgeworfen wird (Fig. 6, 12b). Ist die Feststellvorrichtung 70 vorgesehen, so kann während des Entladevorganges des Fördergutbehälters 2 der Transportträger 6 arretiert werden.

Nach dem Entladevorgang (Abgabevorgang) wird der Fördergutbehälter 2 durch die Entladevorrichtung 39 mit dem in die Öffnungsstellung verstellten Taschenkörper um die Längsachse 57 aus der Entladeposition 59 in die Bereitstellposition 58 zurückgekippt (Fig. 7, 12a). Ist die Feststellvorrichtung 70 vorgesehen, so kann auch während des Zurückkippens (als Schritt des Entladevorgangs) des Fördergutbehälters 2 der Transportträger 6 arretiert werden.

Anschließend wird der Fördergutbehälter 2 durch die Hängefördervorrichtung 1 in Transportrichtung 3 bewegt und kontaktiert das Rahmengestell 20 den Auslaufabschnitt 46, sodass durch die Transportbewegung das Rahmengestell 20 derart verschwenkt, dass der Taschenkörper aus der Öffnungsstellung in Richtung der Schließstellung umgestellt wird (Fig. 8). Ist die Feststellvorrichtung 70 vorgesehen, so wird vorerst der Transportträger 6 freigegeben, um wieder eine Transportbewegung in Transportrichtung 3 zu erlauben.

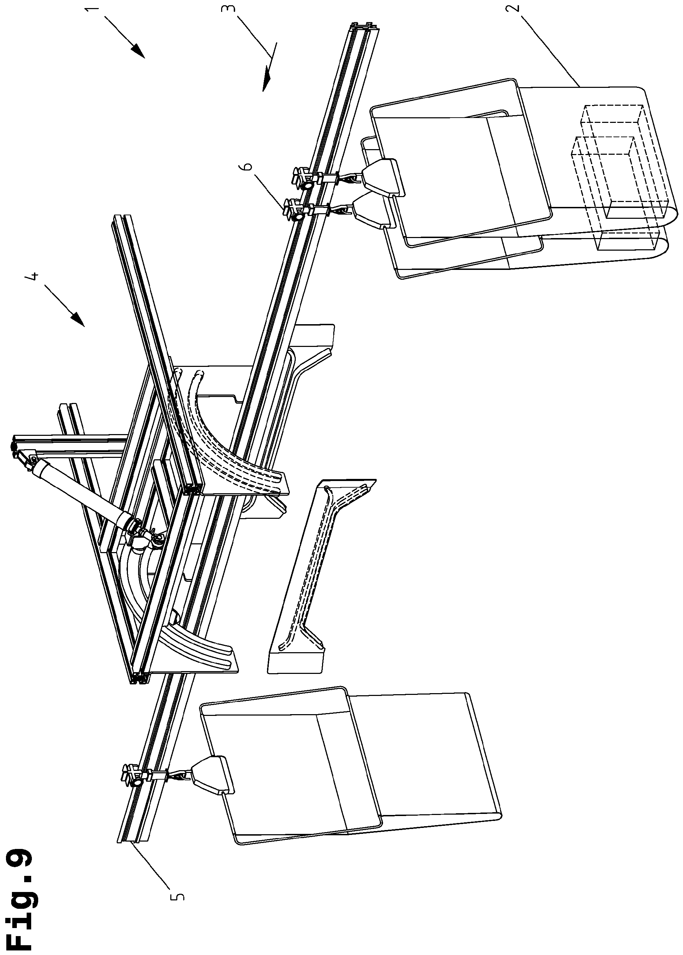

Durch die fortgesetzte Transportbewegung des Fördergutbehälters 2 verlässt dieser entleert oder teilweise entleert die Entladestation 4 (Fig. 9).

Nach einer anderen Ausführung werden der Schritt i) und Schritt ii) zeitlich überlagernd durchgeführt, indem der Fördergutbehälter 2 durch die Hängefördervorrichtung 1 zur Entladestation 4 antransportiert und entlang der Entladestation 4 kontinuierlich fortbewegt wird, wobei während der kontinuierlichen Transportbewegung des Fördergutbehälters 2 im Schritt i) der Taschenkörper 2 durch die Öffnungs- und Schließvorrichtung 40 aus der Schließstellung in die Öffnungsstellung verstellt wird, und simultan im Schritt ii) durch die Entladevorrichtung 39 der Fördergutbehälter 2 mit dem Taschenkörper um die im Wesentlichen parallel zur Längserstreckung der Hängefördervorrichtung 1 verlaufende Längsachse 57 aus der Bereitstellposition 58 in die Entladeposition 59 gekippt wird, wodurch das Fördergut 28 durch die Entladeöffnung 29 aus dem Fördergutbehälter 2 abgegeben wird. Es ist dabei möglich, dass die Transportgeschwindigkeit während der Transportbewegung entlang der Entladestation 4 zwar variiert, aber stets größer Null ist.

Mit anderen Worten wird der Fördergutbehälter 2 noch während der Umstellbewegung des Taschenkörpers zwischen der Schließstellung und der Öffnungsstellung um die Kippachse 57 zwischen der Bereitstellposition 58 und der Entladeposition 59 gekippt. Dabei wird zum Entladen noch während des Öffnungsvorganges des Taschenkörpers von der Schließstellung in Richtung der Öffnungsstellung der Fördergutbehälter 2 um die Kippachse 57 von der Bereitstellposition 58 in die Entladeposition 59 gekippt. Gleichermaßen kann nach dem Entladen während des Schließvorganges des Taschenkörpers von der Öffnungsstellung in Richtung der Schließstellung der Fördergutbehälter 2 um die Kippachse 57 von der Entladeposition 59 in die Bereitstellposition 58 gekippt werden. Gemäß dieser Ausführung kann die oben beschriebene Feststellvorrichtung 70 zur Arretierung des Transportträgers 6 entfallen.

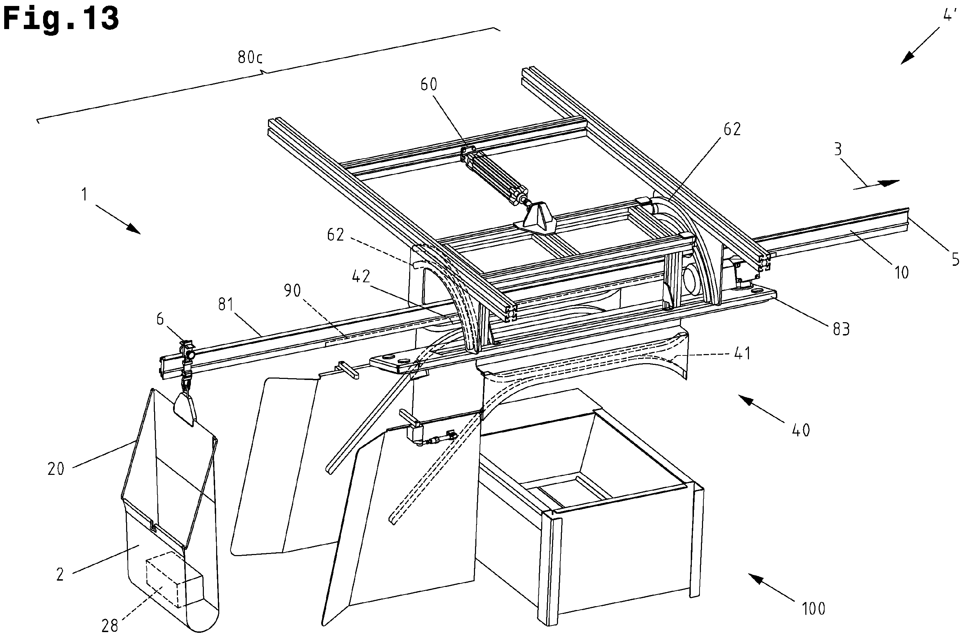

In den Fig. 13 bis 20, 21a, 21b und 21c ist ein Ausschnitt eines Hängefördersystemes umfassend die Hängefördervorrichtung 1 zum Transport von Fördergutbehältern 2 in der Transportrichtung 3 und eine modifizierte Ausführung einer Entladestation 4' zum automatischen Entladen der Fördergutbehälter 2 (Transporttasche bzw. Hängetasche) gezeigt.

Die gezeigte Hängefördervorrichtung 1 zum Antransport der Fördergutbehälter 2 in die Entladestation 4' und Abtransport der Fördergutbehälter 2 aus der Entladestation 4' umfasst in verschiedenen Förderabschnitten 80a, 80b, 80c eine Führungsvorrichtung 81 und durch eine der oben beschriebene Antriebsvorrichtungen 5 oder einer Kombination der oben beschriebenen Antriebsvorrichtungen 5 entlang der Führungsvorrichtung 81 (angetrieben) bewegbare Transportträger 6.

Das Hängefördersystem kann auch eine (nicht gezeigte) Hängefördervorrichtung zum Transport von Fördergutbehältern 2 umfassen, welche eine Führungsvorrichtung 81 und entlang der Führungsvorrichtung 81 (nicht angetrieben) bewegbare Transportträger 6 aufweist.

Das Hängefördersystem kann auch ausschließlich die Führungsvorrichtung 81 und durch die oben beschriebene(n) Antriebsvorrichtung(en) 5 entlang der Führungsvorrichtung 81 (angetrieben) bewegbare Transportträger 6 umfassen.

Ein derartiger Transportträger 6 ist beispielweise in der österreichischen Patentanmeldung AT 50092/2019 beschrieben.

Die Führungsvorrichtung 81 ist an der Profilschiene 11 ausgebildet.

Im gezeigten Ausführungsbeispiel werden die oben beschriebenen Transportträger 6
- in einem entlang der Entladestation 4' angeordneten Förderabschnitt 80c durch einen Formschlussantrieb (Antriebsvorrichtung), und
- in einem zum Förderabschnitt 80c stromaufwärts angeordneten Förderabschnitt 80a (zum Antransport der Fördergutbehälter 2) und in einem zum Förderabschnitt 80c stromabwärts angeordneten Förderabschnitt 80b (zum Abtransport der Fördergutbehälter 2) durch einen Reibschlussantrieb (Antriebsvorrichtung) bewegt.

Andererseits können die Transportträger 6 auch im stromaufwärts angeordneten Förderabschnitt 80a (zum Antransport der Fördergutbehälter 2) als auch im stromabwärts angeordneten Förderabschnitt 80b (zum Abtransport der Fördergutbehälter 2) durch einen Formschlussantrieb (Antriebsvorrichtung) bewegt werden. In diesem Fall kann eine nachfolgende beschriebene und im Förderabschnitt 80c angeordnete Führungsleiste 90 entfallen.

Der Förderabschnitt 80c bildet parallel zur Längserstreckung der Hängefördervorrichtung 1 und entlang der Entnahmestation 4' einen Transportweg 82 aus, entlang welchem die Fördergutbehälter 2, insbesondere vereinzelt, transportiert werden.

Die beschriebenen Antriebsvorrichtungen sind keineswegs einschränkend zu verstehen, sondern zeigen lediglich unterschiedliche Möglichkeiten, wie eine Antriebskraft auf die Transportträger 6 bzw. die Fördergutbehälter 2 übertragen wird, um diese an der Hängefördervorrichtung 1 in Transportrichtung 3 (angetrieben) zu bewegen.

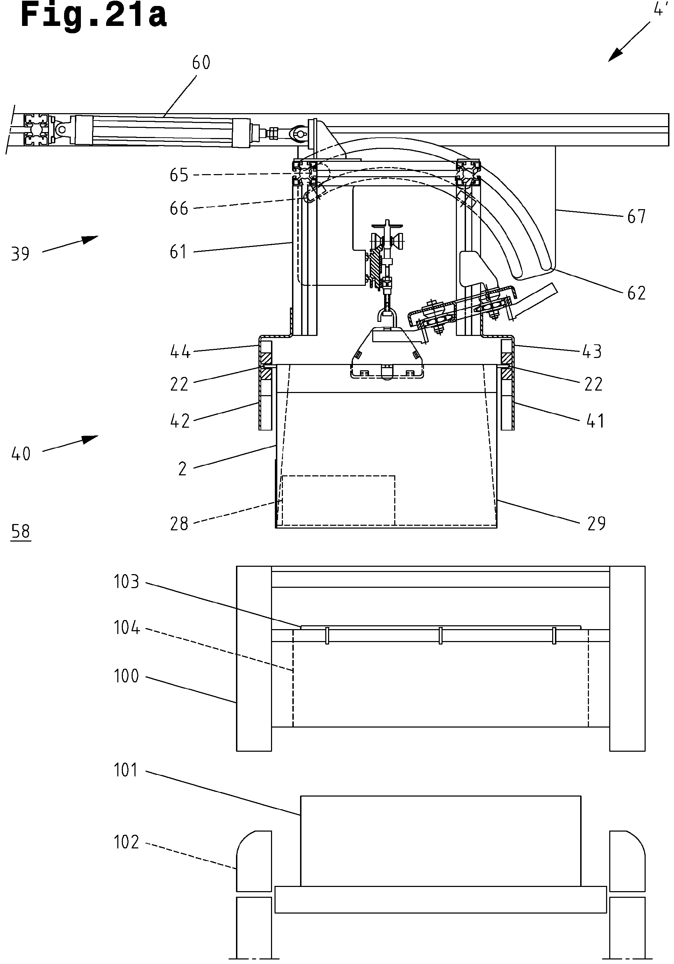

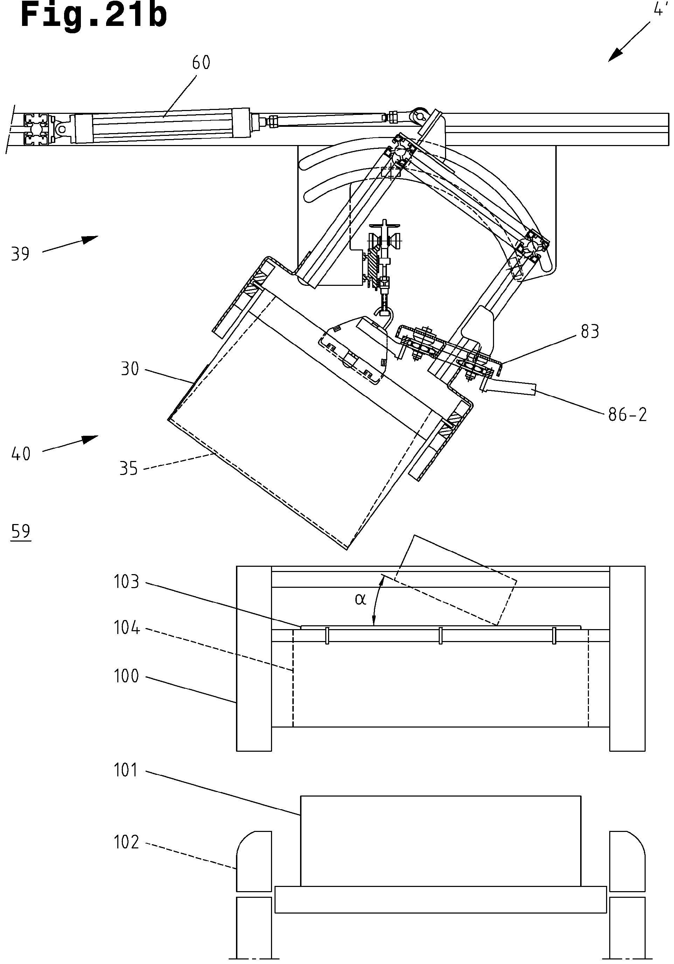

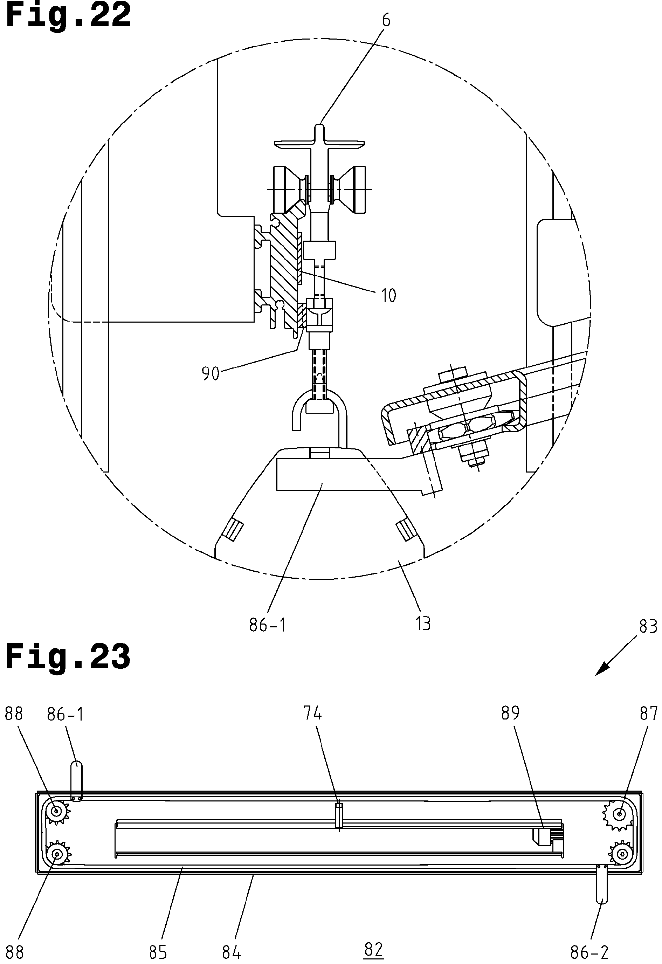

Ist die Antriebsvorrichtung 5 durch einen Reibschlussantrieb gebildet, so erweist es sich von Vorteil, wenn die Führungsvorrichtung 81 im Förderabschnitt 80c eine parallel zur Transportrichtung 3 verlaufende Führungsleiste 90 aufweist, durch welche der Transportträger 6 in senkrechter Richtung zum und vom Reibband 10 abgehoben wird, wie insbesondere in den Fig. 13 und 22 dargestellt. Dadurch wird sichergestellt, dass der Fördergutbehälter 2 im Förderabschnitt 80c ausschließlich durch einen Formschlussantrieb bewegt wird und während des Entladevorganges der Transportträger 6 mit dem bevorzugt kontinuierlich betriebenen Reibband 10 nicht im Reibeingriff steht, sodass der Verschleiß am Transportträger 6 gering gehalten wird. Darüber hinaus ist von Vorteil, dass der Transportträger 6 in der Bereitstellposition 58 und Entladeposition 59 des Fördergutbehälters 2 an der Führungsleiste 90 abgestützt ist und damit der Entladevorgang besonders zuverlässig durchgeführt werden kann, wie in Fig. 21a und 21b ersichtlich.

Wird hingegen diese Führungsleiste 90 im Förderabschnitt 80c nicht vorgesehen, so kann der Fördergutbehälter 2 im Förderabschnitt 80c prinzipiell auch durch einen Reib- und Formschlussantrieb bewegt werden.

Nach einer möglichen Ausführung, umfasst die Antriebsvorrichtung 5 im Förderabschnitt 80c einen Vorschubantrieb 83, wie er in Fig. 23 detaillierter dargestellt ist. Der Vorschubantrieb 83 umfasst einen Tragrahmen 84, einen am Tragrahmen 84 gelagerten Zugmitteltrieb und einen mit einem Zugmittel 85 angeordneten Mitnehmerfinger zur Antriebsbewegung des Transportträgers 6 bzw. Fördergutbehälters 2 entlang der Führungsvorrichtung 81. Der Zugmitteltrieb umfasst das Zugmittel 85, welches um ein Antriebsrad 87 und Umlenkräder 88 geführt ist. Das Antriebsrad 87 ist mit einem Antriebsmotor 89 gekuppelt. Auch kann der Vorschubantrieb 83 eine Sensorik 74, beispielweise einen Näherungssensor, umfassen, durch welchen die Bereitstellposition 59 überwacht wird.

Der Mitnehmerfinger ist durch den Zugmitteltrieb zwischen einer aus dem Transportweg 82 zurückgezogenen Ausgangsstellung und einer in den Transportweg 82 vorragenden Eingriffsstellung bewegt werden, wobei der Mitnehmerfinger in der Eingriffsstellung mit dem Fördergutbehälter 2 in einen formschlüssigen Eingriff bringbar und durch welchen der Fördergutbehälter 2 entlang dem Förderabschnitt 81c bewegbar ist.

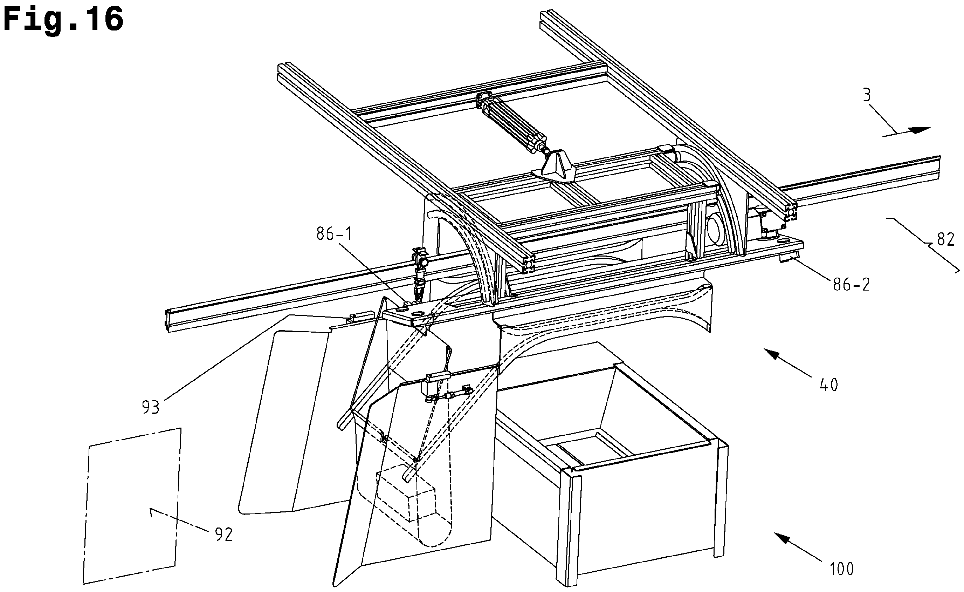

Wie in den Fig. 16 und 23 ersichtlich, kann der Mitnehmerfinger einen ersten Mitnehmerfinger 86-1 und einen zweiten Mitnehmerfinger 86-2 umfassen, welche in Umlaufrichtung des Zugmittels 85 in einem Abstand angeordnet sind, welcher derart bestimmt ist, dass die mehreren Mitnehmerfinger 86-1, 86-2 abwechselnd in die Eingriffsstellung bewegt werden, wobei der jeweilige Mitnehmerfinger 86-1, 86-2 in der Eingriffsstellung mit dem Fördergutbehälter 2 in einen formschlüssigen Eingriff bringbar und durch welchen der Fördergutbehälter 2 entlang dem Förderabschnitt 81c bewegbar ist. Fig. 16 zeigt dabei den Mitnehmerfinger 86-1 in der Eingriffsstellung und Fig. 23 den Mitnehmerfinger 86-1 in der Ausgangsstellung.

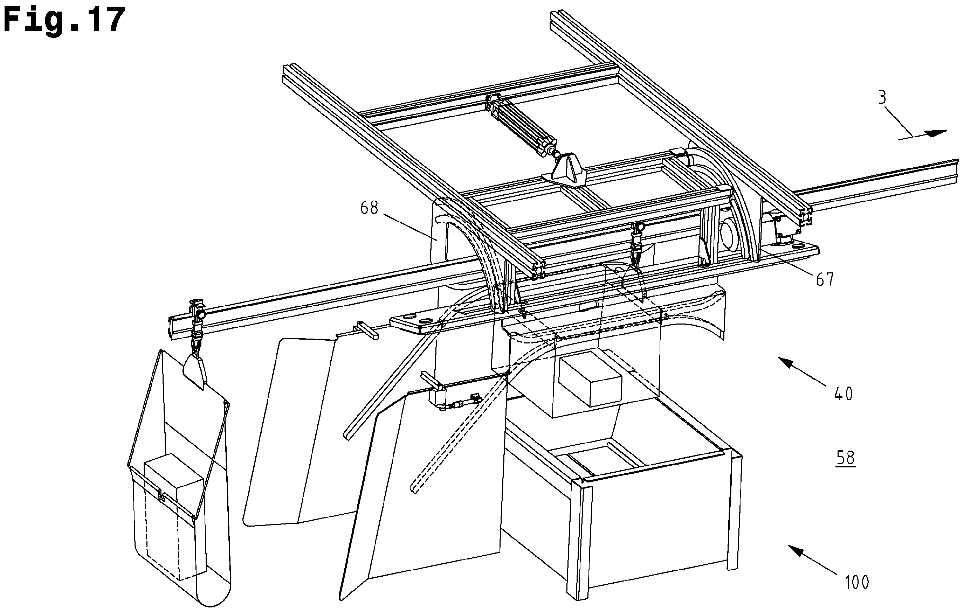

Der erste Mitnehmerfinger 86-1 ist mit einem ersten Fördergutbehälter 2 in einen formschlüssigen Eingriff bringbar und bewegt den ersten Fördergutbehälter 2 entlang dem Förderabschnitt 81c, siehe Fig. 16 und 17. Der zweite Mitnehmerfinger ist mit einem zweiten Fördergutbehälter 2 in einen formschlüssigen Eingriff bringbar und bewegt den zweiten Fördergutbehälter 2 entlang dem Förderabschnitt 81c. Der erste Fördergutbehälter 2 und zweite Fördergutbehälter 2 werden demnach zwar aufeinanderfolgend durch den Förderabschnitt 81c transportiert, jedoch kann sobald der erste Fördergutbehälter 2 durch den ersten Mitnehmerfinger 86-1 aus dem Förderabschnitt 81c abtransportiert wird, bereits der zweite Fördergutbehälter 2 durch den zweiten Mitnehmerfinger 86-2 ergriffen werden.

Auch wenn nach dieser Ausführung zwei Mitnehmerfinger beschrieben sind, kann die Anzahl von Mitnehmerfingern variieren. Es können auch mehr als zwei Mitnehmerfinger vorgesehen werden. Auch ist ein einziger Mitnehmerfinger denkbar.

Die modifizierte Ausführung der Entladestation 4' umfasst so wie die Entladestation 4 die Hängefördervorrichtung 1 zum Antransport des Fördergutbehälters 2 in die Entladestation 4' und Abtransport des Fördergutbehälters 2 aus der Entladestation 4', die Öffnungs- und Schließvorrichtung 40; 53 zum Verstellen des Taschenkörpers zwischen der Schließstellung und der Öffnungsstellung und die Entladevorrichtung 39 zum Entladen des in die Öffnungsstellung verstellten Taschenkörpers. In den Fig. 12 bis 20, 21a, 21b und 21c ist die erste Ausführung der Öffnungs- und Schließvorrichtung 40 gezeigt. Um Wiederholungen zu vermeiden wird auf die obige Offenbarung verwiesen.

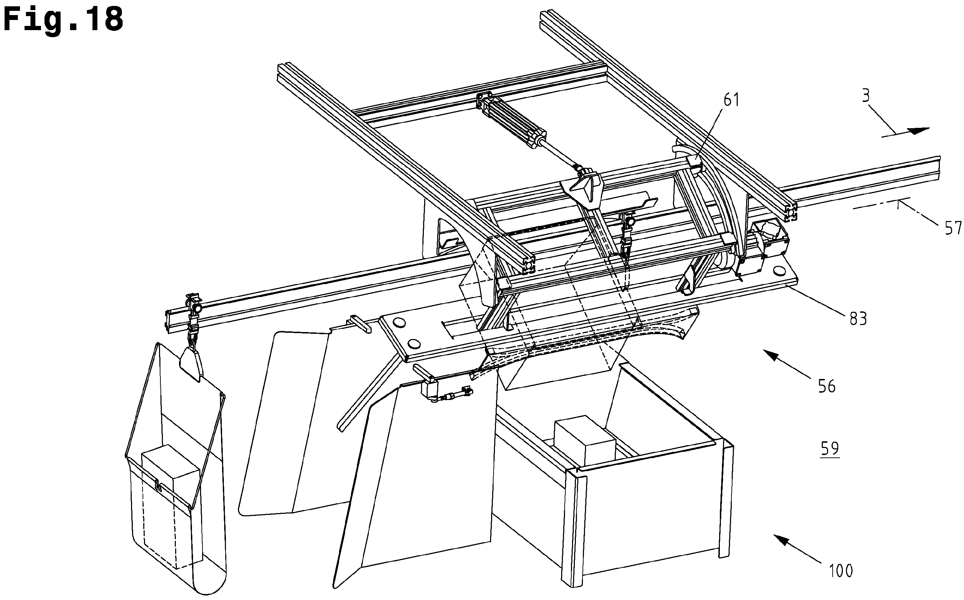

Ebenso entspricht die Entladevorrichtung 39 der oben beschriebenen Ausführung und umfasst die Betätigungsvorrichtung 56, durch welche der Fördergutbehälter 2 mit dem Taschenkörper um eine im Wesentlichen parallel zur Längserstreckung der Hängefördervorrichtung 1 verlaufenden Kippachse 57 zwischen der Bereitstellposition 58 (Fig. 17, 21a) und der Entladeposition 59 (Fig. 18, 21b) kippbar ist, wobei in der Entladeposition 59 das Fördergut 28 durch die Entladeöffnung 29 aus dem Fördergutbehälter 2 abgebbar ist. Um Wiederholungen zu vermeiden wird auf die obige Offenbarung verwiesen.

Die Betätigungsvorrichtung 56 der Entladevorrichtung 39 umfasst den mittels eines Antriebs 60 um eine parallel zur Transportrichtung 3 der Fördergutbehälter 2 verlaufende Achse zwischen einer Ausgangsstellung und einer Betätigungsstellung kippbaren Rahmen 61, wie oben beschrieben. Nach der modifizierten Ausführung der Entladestation 4' umfasst die Antriebsvorrichtung 5 den oben beschriebenen Vorschubantrieb 83, wobei dann die Betätigungsvorrichtung 41, 42; 52 der Öffnungs- und Schließvorrichtung 40; 53 als auch der Vorschubantrieb 83 am Rahmen 61 gelagert sind.

Somit wird der Vorschubantrieb 83 und die Öffnungs- und Schließvorrichtung 40; 53 gemeinsam mit dem Rahmen 61 gekippt und es wird der Fördergutbehälter 2 auch in der Entladeposition 59 (zwischen der unteren Führungsanordnung und oberen Führungsanordnung der ersten Mitnehmermechanik 41 und, sofern vorhanden, zwischen der unteren Führungsanordnung und oberen Führungsanordnung der zweiten Mitnehmermechanik 42 jeweils eine der Längsstreben 22 gemäß der ersten Ausführung oder zwischen der ersten Öffnungsklappe 52 und dem ersten Führungsprofil 55 und, sofern vorhanden, zwischen der zweiten Öffnungsklappe 52 und dem zweiten Führungsprofil 55) im Wesentlichen fixiert gehalten.

Nach der modifizierten Ausführung, kann die Entladestation 4' in dem Förderabschnitt 80c stromaufwärts von der Öffnungs- und Schließvorrichtung 40; 53 eine Fördergutbehälter-Positioniervorrichtung 91 umfassen.

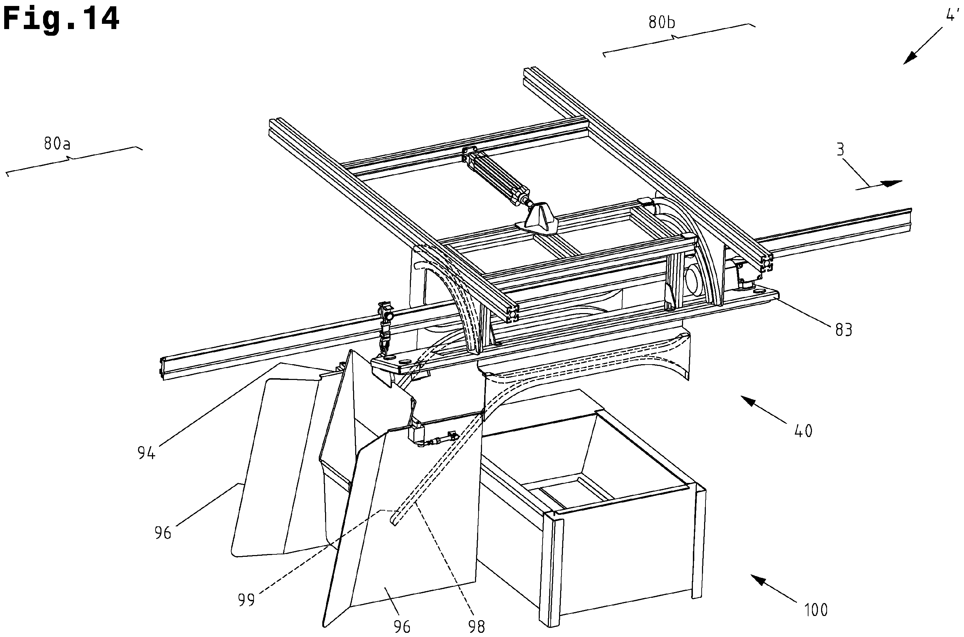

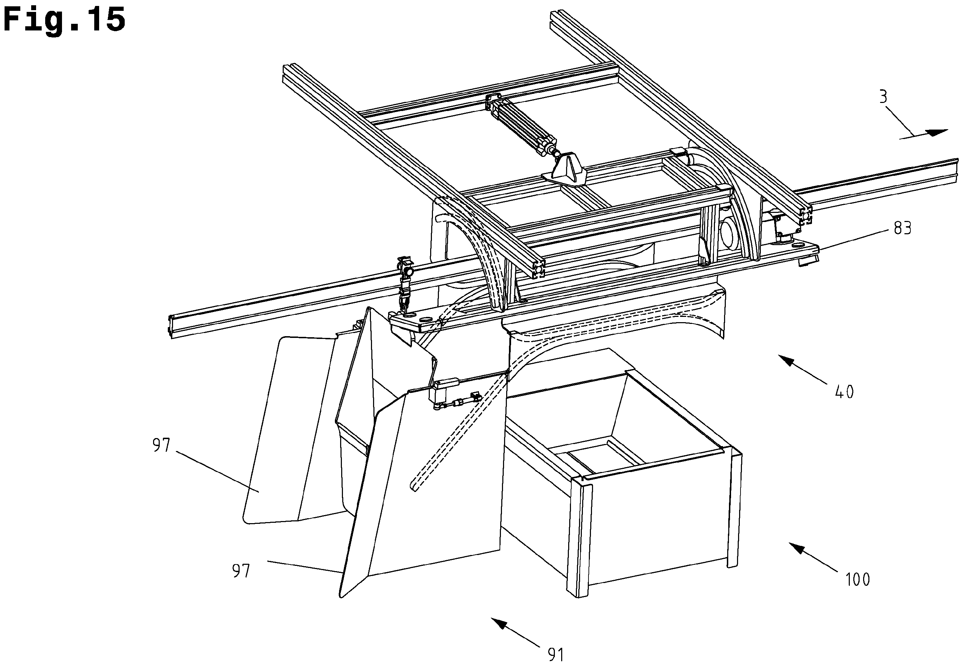

Die Fördergutbehälter-Positioniervorrichtung 91 umfasst zu beiden Seiten des Transportweges 82 und symmetrisch zu einer in Richtung des Transportweges 82 verlaufenden Vertikalebene 92 angeordnete Stopperelemente 93. Die Stopperelemente 93 sind durch einen Antrieb 94 zwischen einer aus dem Transportweg 82 zurückgezogenen Freigabestellung (Fig. 15, 16) und einer in den Transportweg 82 vorragenden Eingriffsstellung (Fig. 13, 14) bewegbar.

Die Stopperelemente 93 sind als Stopperfinger oder Stopperplatten gestaltet. Wie in den Figuren ersichtlich, sind die Stopperelemente 93 jeweils mit einem Antrieb 94 gekuppelt. Die Stopperelemente 93 können beispielsweise jeweils durch den Antrieb 94 um eine Vertikalachse geschwenkt werden. Die Stopperelemente 93 können aber auch als senkrecht zur Vertikalebene 92 und durch Antriebe aufeinander zubewegbare und voneinander wegbewegbare Stopperplatten gestaltet sein, wie nicht näher dargestellt.

Das Positionieren des Fördergutbehälters 2 gegen die Stopperelemente 93 kann derart durchgeführt werden, dass der Fördergutbehälter 2 mit einem dieser aufweisenden Rahmengestell 20, mit welchem der Taschenkörper zwischen der Schließstellung und der Öffnungsstellung umstellbar ist, und/oder mit einem Taschenkörper gegen die in die Eingriffsstellung bewegten Stopperfinger 93 positioniert wird.

Befinden sich die Stopperfinger in der Eingriffsstellung, so kann ein (bevorzugt) vereinzelt antransportierter Fördergutbehälter 2 gegen die Stopperfinger positioniert werden.

Der Fördergutbehälter 2 befindet sich nun in einer Übernahmeposition (Fig. 14), in welcher der oben beschriebene Vorschubantrieb 83 mit dem Mitnehmerfinger 86-1 den Fördergutbehälter 2 ergreifen und durch welchen der Fördergutbehälter 2 von der Übernahmeposition in eine von dieser stromabwärts vorgesehenen Bereitstellposition 58 (Fig. 17) bewegt werden kann. Konkret wird der Transportträger 6 durch die im Förderabschnitt 80a vorgesehene Antriebsvorrichtung 5 angetrieben und damit der Fördergutbehälter 2 gegen die in die Eingriffsstellung bewegten Stopperelemente 93 positioniert. Im gezeigten Ausführungsbeispiel wird der Transportträger 6 im Förderabschnitt 80a durch das endlos umlaufende Reibband 10 angetrieben.

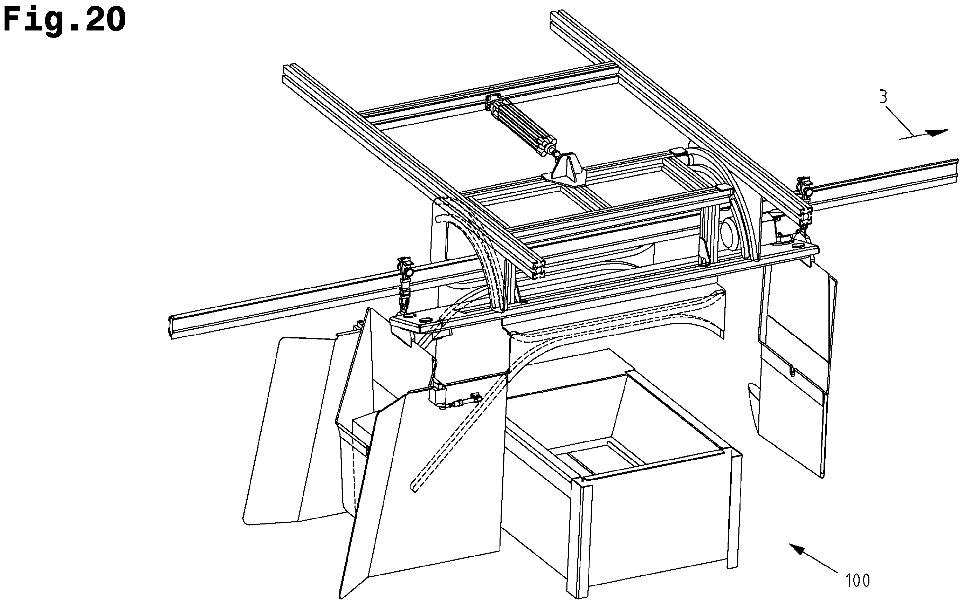

Nach dem Entladevorgang (Rückkippen des Fördergutbehälters 2 von der Entladeposition 59 in die Bereitstellposition 58) kann der Fördergutbehälter 2 durch den oben beschriebene Vorschubantrieb 83 mit dem Mitnehmerfinger 86-1 von der Bereitstellposition 58 (Fig. 17) in eine von dieser stromabwärts vorgesehenen Übergabeposition (Fig. 20) bewegt werden, an welcher der Fördergutbehälter 2 in den Förderabschnitt 80b gelangt. Konkret wird der Transportträger 6 durch die im Förderabschnitt 80b vorgesehene Antriebsvorrichtung 5 angetrieben und damit der Fördergutbehälter 2 von der Entladestation 4' abtransportiert. Im gezeigten Ausführungsbeispiel wird der Transportträger 6 im Förderabschnitt 80b durch das endlos umlaufende Reibband 10 angetrieben.

Es sei an dieser Stelle hingewiesen, dass in Fig. 18 aus Gründen der besseren Übersicht, die Mitnehmerfinger 86-1, 86-2 nicht eingetragen sind. Tatsächlich befinden sich diese in den Positionen, wie in Fig. 17 dargestellt, jedoch infolge der Kippbewegung des Vorschubantriebes 83 in einer gekippten Position.

Wie nicht näher dargestellt, kann auch die Entladestation 4' die oben beschriebene Feststellvorrichtung 70 zur Arretierung des Transportträgers 6 während eines Entladevorganges des Fördergutbehälters 2 aufweisen.

Die Feststellvorrichtung 70 umfasst zum Arretieren des Transportträgers 6 ein mittels eines Antriebs 71 zwischen einer unwirksamen Ausgangsstellung und einer wirksamen Betätigungsstellung bewegbares Arretierelement 72. Das Arretierelement 72 umfasst beispielweise einen Anschlag, gegen welchen der durch den Vorschubantrieb 83 bewegte Transportträger 6 aufläuft und durch welchen der Transportträger 6 in Transportrichtung 3 positioniert wird. Der Transportträger 6 ist nunmehr zwischen dem stromaufwärts zum Transportträger 6 angeordneten Mitnehmerfinger 86-1 und dem stromabwärts zum Transportträger 6 angeordneten Arretierelement 72 positioniert. Der Fördergutbehälter 2 befindet sich nun in der Bereitstellposition 58 (Fig. 17), in welcher der Transportträger 6 arretiert ist. Die Bereitstellposition 58 wird über die in Fig. 23 dargestellte Sensorik 74, beispielweise einem Näherungssensor überwacht. "Arretieren" ist in diesem Zusammenhang derart zu verstehen, dass der Transportträger 6 nicht zwingenderweise in der Bereitstellposition 58 fixiert sein muss, sondern auch zwischen dem Mitnehmerfinger 86-1 und Arretierelement 72 in begrenztem Ausmaß bewegt werden kann. Dennoch ist eine ausreichende Positionierung zwischen dem Mitnehmerfinger 86-1 und Arretierelement 72 gegeben und es kann der Entladevorgang auch bei hochdynamischen Kippbewegungen zuverlässig durchgeführt werden.

Die Fördergutbehälter-Positioniervorrichtung 91 kann auch zu beiden Seiten des Transportweges 82 und symmetrisch zu einer in Richtung des Transportweges 82 verlaufenden Vertikalebene 92 angeordnete Führungswände 96 umfassen.

Die Führungswände 96 bilden symmetrisch zu der in Richtung des Transportweges 82 verlaufenden Vertikalebene 92 angeordnete und in Richtung der Öffnungs- und Schließvorrichtung 40; 53 geneigt aufeinander zulaufende Einlaufschrägen 97 aus.

Zumindest eine der Führungswände 96 ist mit einer Mitnehmermechanik 98 versehen, wobei die Mitnehmermechanik 98 eine mit dem Rahmengestell 20 derart in einen Anlagekontakt bringbare geneigte Führungskulisse 99 ausbildet, dass das Rahmengestell 20 während des Antransportes des Fördergutbehälters 2 in die Öffnungs- und Schließvorrichtung 40; 53 verschwenkt wird, wodurch der Taschenkörper aus der Schließstellung in Richtung der Öffnungsstellung umgestellt wird. Der Taschenkörper ist aber noch nicht zwingenderweise bereits vollständig in die Öffnungsstellung umgestellt.

Bevorzugt umfasst die Mitnehmermechanik 98 eine erste Mitnehmermechanik und eine zweite Mitnehmermechanik, welche zu beiden Seiten des Transportweges 82 und symmetrisch zu einer in Richtung des Transportweges 82 verlaufenden Vertikalebene 92 angeordnet sind, und welche jeweils eine mit dem Rahmengestell 20 in einen Anlagekontakt bringbare geneigte Führungskulisse 99 ausbilden, wie in Fig. 16 ersichtlich.

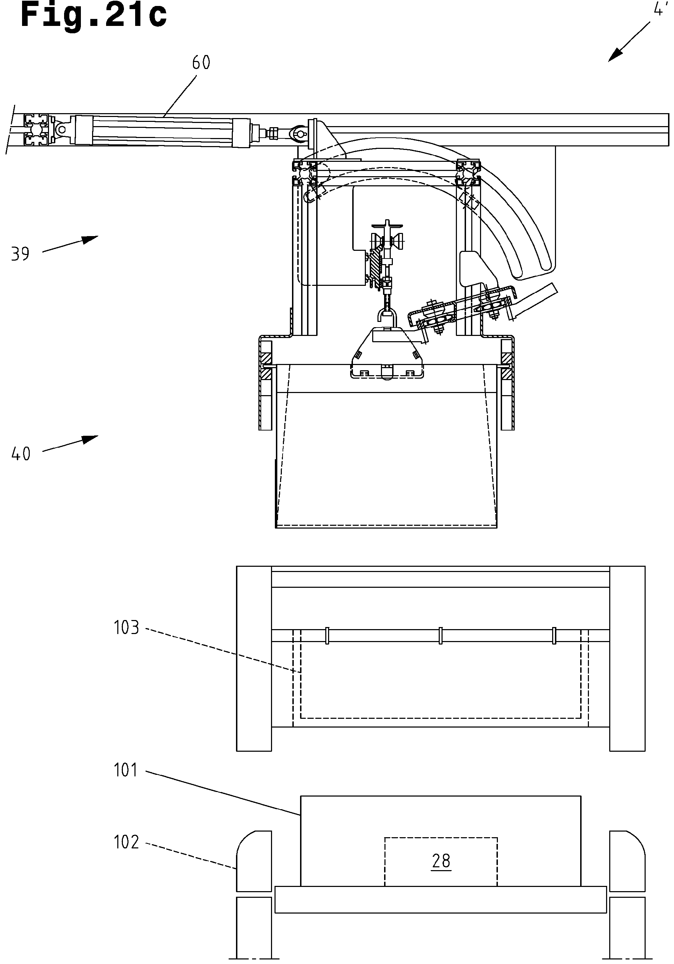

Die Entladestation 4' kann zusätzlich unterhalb der Entladeposition (bzw. Kommissionierposition) eine Befüllvorrichtung 100 umfassen, durch welche in einem ersten Schritt i) das von dem Fördergutbehälter 2 abgeworfene Fördergut 28 aufgenommen und in einem zweiten Schritt ii) das Fördergut 28 an einen Aufnahmebehälter 101 abgegeben wird, siehe insbesondere die Fig. 21a, 21b, 21c. Der Aufnahmebehälter 101 kann beispielweise durch einen Behälter gebildet sein, welcher durch eine unterhalb der Befüllvorrichtung 100 angeordnete (ausschließlich in den Fig. 21a, 21b, 21c dargestellte) Fördervorrichtung 102 in eine Befüllposition antransportiert und nach dem Befüllen aus der Befüllposition abtransportiert wird.

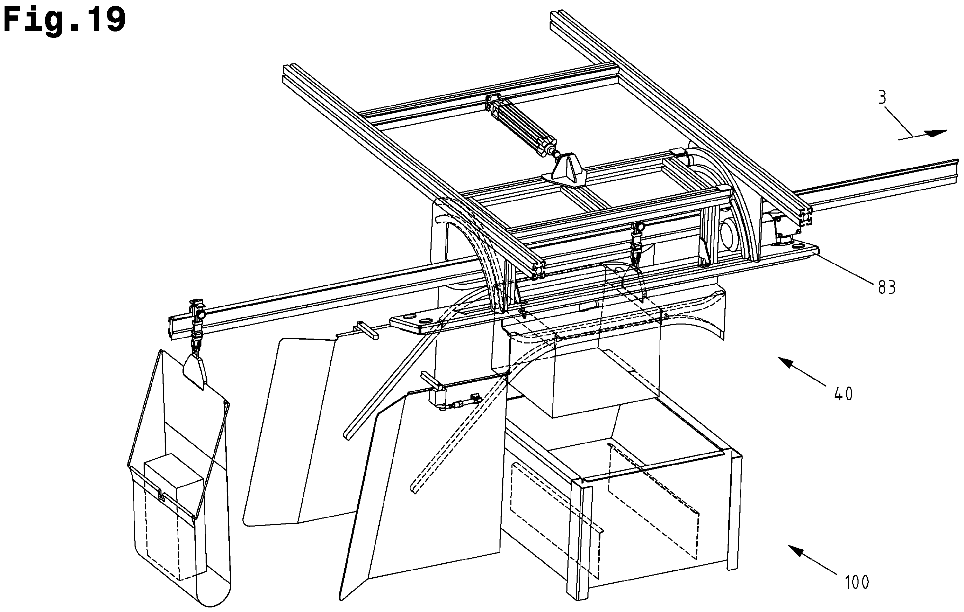

Die Befüllvorrichtung 100 umfasst einen Ablageboden 103 und eine durch den Ablageboden 103 öffenbare und verschließbare Bodenöffnung 104. Der Ablageboden 103 umfasst beispielweise um quer zur Transportrichtung 3 ausgerichtete Achsen gegenläufig schwenkbare Bodenteile (wie in Fig. 19 gut ersichtlich).

Durch die Kippbewegung des Fördergutbehälters 2 gleitet das Fördergut 28 auf dem Boden 35 in Richtung zur Entladeöffnung 29 und fällt danach in einem Winkel "α" von weniger als 60°, insbesondere in einem Winkel "α" zwischen 30° und 45° gegenüber einer Horizontalebene auf den Ablageboden 103 der Befüllvorrichtung 100, wie in Fig. 21b ersichtlich. Der Winkel "α" resultiert dabei aus dem Kippwinkel des Fördergutbehälters 2, wenn dieser in die Entladeposition 59 gekippt ist.

In Bezug auf das Verfahren zum Entladen eines Fördergutes 28 aus einem Fördergutbehälter 2 wird auf die obige Offenbarung verwiesen. Die verschiedenen Verfahrensschritte sind aus den Fig. 13 bis 20, 21a, 21b und 21c nachvollziehbar.

Im Unterschied zu dem oben beschriebenen Verfahren ist an dieser Stelle noch ein zusätzlicher Verfahrensschritt vorgesehen, der ebenso an der Entladestation 4 Anwendung finden kann.

Dieser Verfahrensschritt umfasst das Positionieren des Fördergutbehälters 2 gegen die in den Transportweg 82 vorragende Eingriffsstellung bewegten Stopperelemente 93 und zwar vor dem Umstellen des Taschenkörpers von der Schließstellung in die Öffnungsstellung (Schritt i)), wie dies insbesondere in den Fig. 14 ersichtlich ist.

Ebenso kann das Entladen im Schritt ii) derart durchgeführt werden, dass in der Entladeposition 59 des Fördergutbehälters 2 das Fördergut 28 vorerst von dem Fördergutbehälter 2 an die Befüllvorrichtung 100 und darauffolgend von der Befüllvorrichtung 100 an einen unterhalb der Befüllvorrichtung 100 bereitgestellten Aufnahmebehälter 101 abgegeben wird, wie dies insbesondere in den Fig. 21a und 21c ersichtlich ist.

Die oben beschriebene Entladestation 4; 4' ist entlang eines Hängefördersystemes angeordnet, welches die Entladestation 4; 4' und zumindest die Hängefördervorrichtung 1 zum Antransport der Fördergutbehälter in die Entladestation 4; 4' und Abtransport der Fördergutbehälter 2 aus der Entladestation 4; 4' umfasst. Das Hängefördersystem kann aber auch die Hängefördervorrichtung 1 zum Antransport der Fördergutbehälter 2 in die Entladestation 4; 4' und Abtransport der Fördergutbehälter 2 aus der Entladestation 4; 4', eine zu dieser stromaufwärts angeordnete (durch strichlierte Linien in Fig. 1 angedeutet) Hängefördervorrichtung zum Transport von Fördergutbehältern 2 und eine zu dieser stromabwärts angeordnete (durch strichlierte Linien in Fig. 1 angedeutet) Hängefördervorrichtung zum Transport von Fördergutbehältern 2 umfassen. Die Hängefördervorrichtungen sind in Fig. 1 aus Gründen der besseren Übersicht voneinander getrennt dargestellt. Tatsächlich schließen die Hängefördervorrichtungen unmittelbar aneinander an.

Es sei auch darauf hingewiesen, dass die Fördergutbehälter-Positioniervorrichtung 91 und/oder die Befüllvorrichtung 100 und/oder die Fördervorrichtung 102 auch in der Entladestation 4 (Fig. 1 bis 11, 12a, 12b) Anwendung finden kann.

Auch sei noch hingewiesen, dass das Hängefördersystem eine oben beschriebene Hängefördervorrichtung 1 zum Transport von Fördergutbehältern 2 und eine Beladestation zum Beladen der Fördergutbehälter 2 umfassen kann, wie nicht näher dargestellt.

Die Beladestation ist in diesem Fall wie die Entladestation 4; 4' ausgebildet, lediglich mit dem Unterschied, dass die Betätigungsvorrichtung 56 entfällt.

Die Beladestation umfasst jedenfalls die oben beschriebene Hängefördervorrichtung 1 zum Antransport der Fördergutbehälter 2 in die Beladestation und Abtransport der Fördergutbehälter 2 aus der Beladestation, die oben beschriebene Öffnungs- und Schließvorrichtung 40 und die oben beschriebene Fördergutbehälter-Positioniervorrichtung 91. Ist auch der Vorschubantrieb 83 vorgesehen, so ist dieser stationär angeordnet.

Für die automatische Beladung des Fördergutbehälters 2 ist auch eine Fördervorrichtung, beispielweise ein Bandförderer, vorgesehen, dessen Förderrichtung im Wesentlichen senkrecht zur Vertikalebene 92 verläuft. Das Fördergut 28 kann entweder durch eine Person manuell oder durch einen Roboter automatisch auf die Fördervorrichtung abgelegt werden.

Es kann der Fördergutbehälter 2, nachdem der Taschenkörper durch die Öffnungs- und Schließvorrichtung 40 aus der Schließstellung (Fig. 3a) in die Öffnungsstellung (Fig. 3b) umgestellt wurde, über die Entladeöffnung 29, welche in diesem Fall auch eine Beladeöffnung bildet, beladen werden. Eine Förderebene der Fördervorrichtung verläuft bevorzugt geringfügig höher als der Boden 35. Es kann auch vorgesehen werden, dass auf einer der Beladeöffnung gegenüberliegenden Seite eine parallel zur Vertikalebene 92 ausgerichtete Prallwand vorgesehen ist, um zu verhindern, dass ein Fördergut 28 während des Beladevorganges aus dem Taschenkörper fällt. Das Fördergut 28 muss also nicht zwingenderweise gegen den Seitenwandanschlag 29 positioniert werden, wenn der Fördergutbehälter 2 beladen wird.

Wurde der Fördergutbehälter 2 beladen, wird der Taschenkörper durch die Öffnungs- und Schließvorrichtung 40 aus der Öffnungsstellung in die Schließstellung umgestellt und das Fördergut 28 zwischen der Vorderwand 25 und Rückwand 26 gehalten.

Abschließend wird auch festgehalten, dass der Schutzbereich durch die Patentansprüche bestimmt ist. Die Beschreibung und die Zeichnungen sind jedoch zur Auslegung der Ansprüche heranzuziehen.

**Bezugszeichenaufstellung**

| | | | |
|---|---|---|---|
| 1 | Hängefördervorrichtung | 39 | Entladevorrichtung |
| 2 | Fördergutbehälter | 40 | Öffnungs- und Schließvorrichtung |
| 3 | Transportrichtung | 41 | Mitnehmermechanik |
| 4, 4' | Entladestation | 42 | Mitnehmermechanik |
| 5 | Antriebsvorrichtung | 43 | Tragrahmen |
| 6 | Transportträger | 44 | Tragrahmen |
| 7 | Hängekörper | 45 | Einlaufabschnitt |
| 8 | Laufrolle | 46 | Auslaufabschnitt |
| 9 | Reibfläche | 47 | Endladeabschnitt |
| 10 | Reibband | 48 | Führungskulisse |
| 11 | Profilschiene | 49 | Führungskulisse |
| 12 | | 50 | Führungskulisse |
| 13 | Hängeträger | 51 | Antrieb |
| 14 | Achse | 52 | Öffnungsklappe |
| 15 | Kupplungselement | 53 | Öffnungs- und Schließvorrichtung |
| 16 | Kupplungselement | 54 | Führungsfläche |
| 17 | Schwenkaufnahme | 55 | Führungsprofil |
| 18 | Schwenklagerachse | 56 | Betätigungsvorrichtung Entlade- |
| 19 | | | vorrichtung |
| 20 | Rahmengestell | 57 | Kippachse |
| | | 58 | Bereitstellposition |
| 21 | Querstrebe | | |
| 22 | Längsstrebe | 59 | Entladeposition |
| 23 | Aufnahme | 60 | Antrieb |
| 24 | Längsachse | 61 | Rahmen |
| 25 | Vorderwand | 62 | Führungsanordnung |
| | | 63 | Tragkonstruktion |
| 26 | Rückwand | | |
| 27 | Aufbewahrungsraum | 64 | Führungskulisse |
| 28 | Fördergut | 65 | Führungsrolle |
| 29 | Entladeöffnung | 66 | Führungsrolle |
| 30 | Seitenwandanschlag | 67 | Tragrahmen |
| 31 | | 68 | Tragrahmen |
| 32 | | 69 | Rahmenverbindung |
| 33 | | 70 | Feststellvorrichtung |
| 34 | Beplankung | 71 | Antrieb |
| 35 | Boden | 72 | Arretierelement |
| | | 73 | Profilsteg |
| 36 | Aufnahmefläche | | |
| 37a, 37b | Längskante | 74 | Sensorik |
| 38a, 38b | Stirnkante | 75 | Führungsvorrichtung |
| 76 | Aufnahmeprofil | | |
| 77 | Andrückeinheit | | |
| | | | |
| 80a | Förderabschnitt | | |
| 80b | Förderabschnitt | | |
| 80c | Förderabschnitt | | |
| 81 | Führungsvorrichtung | | |
| 82 | Transportweg | | |
| | | | |
| 83 | Vorschubantrieb | | |
| 84 | Tragrahmen | | |
| 85 | Zugmittel | | |
| 86-1 | Mitnehmerfinger | | |
| 86-2 | Mitnehmerfinger | | |
| | | | |
| 87 | Antriebsrad | | |
| 88 | Umlenkrad | | |
| 89 | Antriebsmotor | | |
| 90 | Führungsleiste | | |
| 91 | Fördergutbehälter-Positioniervorrichtung | | |
| | | | |
| 92 | Vertikalebene | | |
| 93 | Stopperelement | | |
| 94 | Antrieb | | |
| 96 | Führungswand | | |
| 97 | Einlaufschräge | | |
| | | | |
| 98 | Mitnehmermechanik | | |
| 99 | Führungskulisse | | |
| 100 | Befüllvorrichtung | | |
| 101 | Aufnahmebehälter | | |
| 102 | Fördervorrichtung | | |
| | | | |
| 103 | Ablageboden | | |
| 104 | Bodenöffnung | | |

## Patentansprüche

1. Entladestation (4; 4') zum Entladen eines mit zumindest einem Fördergut (28) beladenen Fördergutbehälters (2),
welcher Fördergutbehälter (2) umfasst
- einen Taschenkörper mit einer Vorderwand (25) und einer Rückwand (26),
- einen durch die Vorderwand (25) und Rückwand (26) begrenzten Aufbewahrungsraum (27), und
- eine am Taschenkörper zumindest bereichsweise zwischen der Vorder- und Rückwand (25, 26) ausgebildete Endladeöffnung (29), wobei der Taschenkörper zwischen einer Schließstellung, in welcher der Aufbewahrungsraum (27) volumenminimiert und das Fördergut (28) mit dem Fördergutbehälter (2) transportierbar ist, und einer Öffnungsstellung, in welcher der Aufbewahrungsraum (27) volumenmaximiert und das Fördergut (28) durch die Entladeöffnung (29) aus dem Fördergutbehälter abgebbar ist, umstellbar ist,
welche Entladestation (4; 4') umfasst
- eine Hängefördervorrichtung (1) zum Antransport des Fördergutbehälters (2) in die Entladestation (4; 4') und Abtransport des Fördergutbehälters (2) aus der Entladestation (4; 4'),
- eine Öffnungs- und Schließvorrichtung (40; 53) zum Verstellen des Taschenkörpers zwischen der Schließstellung und der Öffnungsstellung, und
- eine Entladevorrichtung (39) zum Entladen des Fördergutbehälters (2),
wobei die Entladevorrichtung (39) eine Betätigungsvorrichtung (56) umfasst, durch welche der Fördergutbehälter (2) mit dem Taschenkörper um eine Kippachse (57) zwischen einer Bereitstellposition (58) und einer Entladeposition (59) kippbar ist, und
wobei in der Entladeposition (59) das Fördergut (28) durch die Entladeöffnung (29) aus dem Fördergutbehälter (2) abgebbar ist,
**dadurch gekennzeichnet, dass**
die Endladeöffnung (29) seitlich am Taschenkörper ausgebildet ist, und
die Kippachse (57) im Wesentlichen parallel zur Längserstreckung der Hängefördervorrichtung (1) verläuft.

2. Entladestation nach Anspruch 1, **dadurch gekennzeichnet, dass** der Fördergutbehälter (2) zusätzlich umfasst
- einen Hängeträger (13) zum hängenden Transport an der Hängefördervorrichtung (1) und mit einer Aufnahme (23), und
- ein Rahmengestell (20), über das der Taschenkörper an dem Hängeträger (13) hängt und welches in der Aufnahme (23) am und relativ zum Hängeträger (13) um eine Längsachse (24) der Aufnahme (23) schwenkbar gelagert ist, wodurch der Taschenkörper zwischen der Schließstellung und der Öffnungsstellung umstellbar ist.

3. Entladestation nach Anspruch 2, **dadurch gekennzeichnet, dass** das Rahmengestell (20) Querstreben (21) und Längsstreben (22) aufweist, und dass die Vorderwand (25) und die Rückwand (26) des Taschenkörpers jeweils an einer der Querstreben (21) des Rahmengestelles (20) angebracht sind.

4. Entladestation nach einem der Ansprüche 1 bis 3, **dadurch gekennzeichnet, dass** die Öffnungs- und Schließvorrichtung (40; 53) eine Betätigungsvorrichtung (41, 42; 52) zum automatischen Öffnen und Schließen des Taschenkörpers umfasst, durch welche das Rahmengestell (20) relativ zum Hängeträger (13) um die Längsachse (24) derart schwenkbar ist, dass der Taschenkörper zwischen der Schließstellung und der Öffnungsstellung umstellbar ist.

5. Entladestation nach Anspruch 1, **dadurch gekennzeichnet, dass** die Betätigungsvorrichtung (56) der Entladevorrichtung (39) einen mittels eines Antriebs (60) um eine parallel zur Transportrichtung (3) der Fördergutbehälter (2) verlaufende Achse zwischen einer Ausgangsstellung und einer Betätigungsstellung kippbaren Rahmen (61) umfasst und die Betätigungsvorrichtung (41, 42; 52) der Öffnungs- und Schließvorrichtung (40; 53) am Rahmen (61) gelagert ist.

6. Entladestation nach einem der Ansprüche 1 bis 5, **dadurch gekennzeichnet, dass** die Hängefördervorrichtung (1) zum Antransport des Fördergutbehälters (2) in die Entladestation (4; 4') und Abtransport des Fördergutbehälters (2) aus der Entladestation (4; 4') eine Führungsvorrichtung (81) und durch eine Antriebsvorrichtung (5) entlang der Führungsvorrichtung (81) bewegbare Transportträger (6) umfasst.

7. Entladestation nach Anspruch 6, **dadurch gekennzeichnet, dass** die Antriebsvorrichtung (5) in einem Förderabschnitt (80c) entlang der Entladestation (4') einen Vorschubantrieb (83) umfasst, welcher Vorschubantrieb (83)
- einen Tragrahmen (84),
- einen am Tragrahmen (84) gelagerten Zugmitteltrieb mit einem durch einen Antriebsmotor (89) antreibbaren Zugmittel (85), und
- zumindest einen mit dem Zugmittel (85) gekoppelten Mitnehmerfinger (86-1, 86-2) zur Antriebsbewegung des Fördergutbehälters (2) entlang der Führungsvorrichtung (81)
aufweist.

8. Entladestation nach Anspruch 7, **dadurch gekennzeichnet, dass** der Förderabschnitt (80c) einen Transportweg (82) ausbildet, entlang welchem die Fördergutbehälter (2) transportiert werden, und dass der zumindest eine Mitnehmerfinger (86-1, 86-2) durch den Zugmitteltrieb zwischen einer aus dem Transportweg (82) zurückgezogenen Ausgangsstellung und einer in den Transportweg (82) vorragenden Eingriffsstellung bewegbar ist, wobei der zumindest eine Mitnehmerfinger (86-1, 86-2) in der Eingriffsstellung mit dem Transportträger (6) oder dem Fördergutbehälter (2) in einen formschlüssigen Eingriff bringbar und durch welchen der Fördergutbehälter (2) entlang dem Förderabschnitt (80c) bewegbar ist.

9. Entladestation nach Anspruch 7, **dadurch gekennzeichnet, dass** die Betätigungsvorrichtung (56) der Entladevorrichtung (39) einen mittels eines Antriebs (60) um eine parallel zur Transportrichtung (3) der Fördergutbehälter (2) verlaufende Achse zwischen einer Ausgangsstellung und einer Betätigungsstellung kippbaren Rahmen (61) umfasst und dass sowohl die Betätigungsvorrichtung (41, 42; 52) der Öffnungs- und Schließvorrichtung (40; 53) als auch der Vorschubantrieb (83) am Rahmen (61) gelagert sind.

10. Entladestation nach einem der Ansprüche 6 bis 9, **dadurch gekennzeichnet, dass** in einem Förderabschnitt (80c) entlang der Entladestation (4; 4') und stromaufwärts von der Öffnungs- und Schließvorrichtung (40; 53) angeordnet eine Fördergutbehälter-Positioniervorrichtung (91) vorgesehen ist.

11. Entladestation nach Anspruch 10, **dadurch gekennzeichnet, dass** der Förderabschnitt (80c) einen Transportweg (82) ausbildet, entlang welchem die Fördergutbehälter (2) transportiert werden, und dass die Fördergutbehälter-Positioniervorrichtung (91) zu beiden Seiten des Transportweges (82) und symmetrisch zu einer in Richtung des Transportweges (82) verlaufenden Vertikalebene (92) angeordnete Stopperelemente (93), insbesondere Stopperfinger, umfasst, welche durch wenigstens einen Antrieb (94) zwischen einer aus dem Transportweg (82) zurückgezogenen Freigabestellung und einer in den Transportweg (82) vorragenden Eingriffsstellung bewegbar sind, wobei der Fördergutbehälter (2) gegen die in die Eingriffsstellung bewegten Stopperelemente (93) positionierbar ist.

12. Entladestation nach einem der Ansprüche 6 bis 11, **dadurch gekennzeichnet, dass** in einem Förderabschnitt (80c) entlang der Entladestation (4; 4') und stromaufwärts von der Öffnungs- und Schließvorrichtung (40; 53) eine Fördergutbehälter-Führungsvorrichtung (91) vorgesehen ist.

13. Entladestation nach einem der Ansprüche 6 bis 12, **dadurch gekennzeichnet, dass** die Entladestation (4; 4') zusätzlich unterhalb der Entladeposition eine Befüllvorrichtung (100) umfasst, durch welche in einem ersten Schritt i) das von dem Fördergutbehälter (2) abgeworfene Fördergut (28) aufgenommen und in einem zweiten Schritt ii) das Fördergut (28) an einen Aufnahmebehälter (101) abgegeben wird.

14. Entladestation nach Anspruch 13, **dadurch gekennzeichnet, dass** die Entladestation (4; 4') zusätzlich eine Fördervorrichtung (102) zum Antransport eines Aufnahmebehälters (101) in eine Befüllposition und Abtransport eines Aufnahmebehälters (101) von der Befüllposition umfasst, welche unterhalb der Befüllvorrichtung (102) angeordnet ist.

15. Verfahren zum Entladen eines Fördergutes (28) aus einem Fördergutbehälter (2) an einer Entladestation (4; 4'),
welcher Fördergutbehälter (2) umfasst
- einen Taschenkörper mit einer Vorderwand (25) und einer Rückwand (26),
- einen durch die Vorderwand (25) und Rückwand (26) begrenzten Aufbewahrungsraum (27), und
- eine am Taschenkörper zumindest bereichsweise zwischen der Vorder- und Rückwand (25, 26) ausgebildete Endladeöffnung (29), wobei der Taschenkörper zwischen einer Schließstellung, in welcher der Aufbewahrungsraum (27) volumenminimiert und das Fördergut (28) mit dem Fördergutbehälter transportierbar ist, und einer Öffnungsstellung, in welcher der Aufbewahrungsraum (27) volumenmaximiert und das Fördergut (28) durch die Entladeöffnung (29) aus dem Fördergutbehälter abgebbar ist, umstellbar ist,
welche Entladestation (4; 4') umfasst
- eine Hängefördervorrichtung (1) zum Antransport des Fördergutbehälters (2) in die Entladestation (4; 4') und Abtransport des Fördergutbehälters (2) aus der Entladestation (4; 4'),
- eine Öffnungs- und Schließvorrichtung (40; 53) zum Verstellen des Taschenkörpers zwischen der Schließstellung und der Öffnungsstellung, und
- eine Entladevorrichtung (39) zum Entladen des Fördergutbehälters (2),
bei dem der Fördergutbehälter (2) durch die Hängefördervorrichtung (1) zur Entladestation (4; 4') antransportiert und an der Entladestation (4; 4') entladen wird, und nach einem Entladevorgang der Fördergutbehälter (2) durch die Hängefördervorrichtung (1) von der Entladestation (4; 4') abtransportiert wird,
wobei zum Entladen eines Fördergutes (28) aus einem Fördergutbehälter (2)
i) in einem Schritt durch die Öffnungs- und Schließvorrichtung (40; 53) der Taschenkörper aus der Schließstellung in die Öffnungsstellung verstellt wird, und
ii) in einem Schritt durch die Entladevorrichtung (39) der Fördergutbehälter (2) mit dem Taschenkörper um eine Kippachse (57) aus einer Bereitstellposition (58) in eine Entladeposition (59) gekippt wird, wodurch das Fördergut (28) durch die Entladeöffnung (29) aus dem Fördergutbehälter (2) abgegeben wird,
**dadurch gekennzeichnet, dass**
die Entladeöffnung (29) seitlich am Taschenkörper ausgebildet ist, und
die Kippachse (57) im Wesentlichen parallel zur Längserstreckung der Hängefördervorrichtung (1) verläuft.

16. Verfahren zum Entladen eines Fördergutes nach Anspruch 15, **dadurch gekennzeichnet, dass** der Schritt i) und Schritt ii) zeitlich aufeinander folgend durchgeführt werden, indem der Fördergutbehälter (2) durch die Hängefördervorrichtung (1) zur Entladestation (4; 4') antransportiert und an der Entladestation (4; 4') angehalten wird und danach
- im ersten Schritt i) der Taschenkörper durch die Öffnungs- und Schließvorrichtung (40; 53) aus der Schließstellung in die Öffnungsstellung verstellt wird, und anschließend
- im zweiten Schritt ii) durch die Entladevorrichtung (39) der Fördergutbehälter (2) mit dem in die Öffnungsstellung verstellten Taschenkörper um die im Wesentlichen parallel zur Längserstreckung der Hängefördervorrichtung (1) verlaufende Kippachse (57) aus der Bereitstellposition (58) in die Entladeposition (59) gekippt wird, wodurch das Fördergut (28) durch die Entladeöffnung (29) aus dem Fördergutbehälter (2) abgegeben wird.

17. Verfahren zum Entladen eines Fördergutes nach Anspruch 15, **dadurch gekennzeichnet, dass** der Schritt i) und Schritt ii) zeitlich überlagernd durchgeführt werden, indem der Fördergutbehälter (2) durch die Hängefördervorrichtung (1) zur Entladestation (4; 4') transportiert und an der Entladestation (4; 4') kontinuierlich fortbewegt wird, wobei während der kontinuierlichen Transportbewegung des Fördergutbehälters (2)
- im Schritt i) der Taschenkörper durch die Öffnungs- und Schließvorrichtung (40; 53) aus der Schließstellung in die Öffnungsstellung verstellt wird, und simultan
- im Schritt ii) durch die Entladevorrichtung (39) der Fördergutbehälter (2) mit dem Taschenkörper um die im Wesentlichen parallel zur Längserstreckung der Hängefördervorrichtung (1) verlaufende Kippachse (57) aus der Bereitstellposition (58) in die Entladeposition (59) gekippt wird, wodurch das Fördergut (28) durch die Entladeöffnung (29) aus dem Fördergutbehälter (2) abgegeben wird.

18. Verfahren zum Entladen eines Fördergutes nach einem der Ansprüche 15 bis 17, **dadurch gekennzeichnet, dass** nach dem Entladen des Fördergutbehälters (2)
- in einem Schritt iii) durch die Entladevorrichtung (39) der Fördergutbehälter (2) mit dem Taschenkörper um eine im Wesentlichen parallel zur Längserstreckung der Hängefördervorrichtung (1) verlaufende Kippachse (57) aus der Entladeposition (59) in die Bereitstellposition (58) rückgekippt wird, und
- in einem Schritt iv) der Taschenkörper durch die Öffnungs- und Schließvorrichtung (40; 53) aus der Öffnungsstellung in die Schließstellung verstellt wird.

19. Verfahren zum Entladen eines Fördergutes nach einem der Ansprüche 15 bis 18, **dadurch gekennzeichnet, dass** in einem Förderabschnitt (80c) entlang der Entladestation (4; 4') und stromaufwärts von der Öffnungs- und Schließvorrichtung (40; 53) angeordnet eine Fördergutbehälter-Positioniervorrichtung (91) vorgesehen ist, welche zu beiden Seiten eines Transportweges (82) und symmetrisch zu einer in Richtung des Transportweges (82) verlaufenden Vertikalebene (92) angeordnete Stopperelemente (93) umfasst, welche durch wenigstens einen Antrieb (94) zwischen einer aus dem Transportweg (82) zurückgezogenen Freigabestellung und einer in den Transportweg (82) vorragenden Eingriffsstellung bewegbar sind, wobei vor dem Schritt i) der Fördergutbehälter (2) gegen die in den Transportweg (82) vorragende Eingriffsstellung bewegten Stopperelemente (93) positioniert wird.

20. Verfahren zum Entladen eines Fördergutes nach einem der Ansprüche 15 bis 19, **dadurch gekennzeichnet, dass** zusätzlich unterhalb der Entladeposition eine Befüllvorrichtung (100) bereitgestellt wird, wobei in dem Schritt ii) das Fördergut (28) vorerst von dem Fördergutbehälter (2) an die Befüllvorrichtung (100) und darauffolgend von der Befüllvorrichtung (100) an einen unterhalb der Befüllvorrichtung (100) bereitgestellten Aufnahmebehälter (101) abgegeben wird.

## Claims

1. An unloading station (4; 4`) for unloading an article container (2) loaded with at least one article (28),
the article container (2) comprising
- a bag body having a front wall (25) and a rear wall (26),
- a storage space (27) delimited by the front wall (25) and the rear wall (26), and
- an unloading opening (29) formed on the bag body at least in some sections between the front and the rear wall (25, 26), wherein the bag body is adjustable between a closed position, in which the storage space (27) is minimized in volume and the article (28) can be transported by means of the article container (2), and an opened position, in which the storage space (27) is maximized in volume and the article (28) can be discharged from the article container through the unloading opening (29),
the unloading station (4; 4') comprising
- an overhead conveying device (1) for transporting the article container (2) into the unloading station (4; 4') and for transporting the article container (2) away from the unloading station (4; 4'),
- an opening and closing device (40; 53) for adjusting the bag body between the closed position and the opened position, and
- an unloading device (39) for unloading the article container (2),
wherein the unloading device (39) comprises an actuation device (56), by means of which the article container (2) with the bag body can be tilted about a tilting axis (57) between a provisioning position (58) and an unloading position (59), and
wherein in the unloading position (59), the article (28) can be discharged from the article container (2) through the unloading opening (29),
**characterized in that**
the unloading opening (29) is formed laterally on the bag body, and
the tilting axis (57) extends essentially in parallel to the longitudinal extension of the overhead conveying device (1).

2. The unloading station according to claim 1, **characterized in that** the article container (2) additionally comprises
- a suspended support (13) for suspended transport on the overhead conveying device (1) and having a receptacle (23), and
- a frame (20), by means of which the bag body is suspended on the suspended support (13) and which is mounted on the suspended support (13) in the receptacle (23) so as to be pivotable relative to the suspended support (13) about a longitudinal axis (24) of the receptacle (23), whereby the bag body can be adjusted between the closed position and the opened position.

3. The unloading station according to claim 2, **characterized in that** the frame (20) comprises cross struts (21) and longitudinal struts (22), and that the front wall (25) and the rear wall (26) of the bag body are each mounted on one of the cross struts (21) of the frame (20).

4. The unloading station according to one of claims 1 to 3, **characterized in that** the opening and closing device (40; 53) comprises an actuation device (41, 42; 52) for automatic opening and closing of the bag body, by means of which actuation device (41, 42; 52) the frame (20) can be pivoted about the longitudinal axis (24) relative to the suspended support (13) such that the bag body can be adjusted between the closed position and the opened position.

5. The unloading station according to claim 1, **characterized in that** the actuation device (56) of the unloading device (39) comprises a frame structure (61) that can be tilted by means of a drive (60) between an initial position and an actuation position about an axis extending in parallel to the transport direction (3) of the article container (2) and the actuation device (41, 42; 52) of the opening and closing device (40; 53) is mounted on the frame structure (61).

6. The unloading station according to one of claims 1 to 5, **characterized in that** the overhead conveying device (1), for the transport of the article container (2) into the unloading station (4; 4`) and for the transport of the article container (2) away from the unloading station (4; 4'), comprises a guide device (81) and transport carriers (6) movable along the guide device (81) by means of a drive device (5).

7. The unloading station according to claim 6, **characterized in that** the drive device (5) in a conveying section (80c) along the unloading station (4`) comprises a feed drive (83), the feed drive (83) comprising
- a support frame (84),
- a traction drive mounted on the support frame (84) and has a traction means (85) that can be driven by a drive motor (89), and
- at least one driver finger (86-1, 86-2) coupled with the traction means (85) for drive movement of the article container (2) along the guide device (81).

8. The unloading station according to claim 7, **characterized in that** the conveying section (80c) forms a transport path (82) along which the article containers (2) are transported, and that the at least one driver finger (86-1, 86-2) can be moved between an initial position retracted from the transport path (82) and an engaging position projecting into the transport path (82) by means of the traction drive, wherein the at least one driver finger (86-1, 86-2) in the engaging position can be brought into a positive engagement with the transport carrier (6) or the article container (2) and by which the article container (2) can be moved along the conveying section (80c).

9. The unloading station according to claim 7, **characterized in that** the actuation device (56) of the unloading device (39) comprises a frame structure (61) that can be tilted by means of a drive (60) between an initial position and an actuation position about an axis extending in parallel to the transport direction (3) of the article container (2) and that both the actuation device (41, 42; 52) of the opening and closing device (40; 53) and the feed drive (83) are mounted on the frame structure (61).

10. The unloading station according to one of claims 6 to 9, **characterized in that** an article container positioning device (91) is provided so as to be arranged in a conveying section (80c) along the unloading station (4; 4') and upstream of the opening and closing device (40; 53).

11. The unloading station according to claim 10, **characterized in that** the conveying section (80c) forms a transport path (82), along which the article containers (2) are transported, and that the article container positioning device (91) comprises stopper elements (93), in particular stopper fingers, arranged on both sides of the transport path (82) and symmetrically to a vertical plane (92) extending in the direction of the transport path (82), which stopper elements can be moved between a release position retracted from the transport path (82) and an engaging position projecting into the transport path (82) by means of at least one drive (94), wherein the article container (2) can be positioned against the stopper elements (93) which have been moved into the engaging position.

12. The unloading station according to one of claims 6 to 11, **characterized in that** a guide device (91) for the article container is provided in a conveying section (80c) along the unloading station (4; 4`) and upstream of the opening and closing device (40; 53).

13. The unloading station according to one of claims 6 to 12, **characterized in that** the unloading station (4; 4') additionally comprises a filling device (100) below the unloading position, by means of which filling device (100) in a first step i), the article (28) dropped by the article container (2) is received and in a second step ii), the article (28) is transferred to a receiving container (101).

14. The unloading station according to claim 13, **characterized in that** the unloading station (4; 4') additionally comprises a conveying device (102) for transporting a receiving container (101) into a filling position and for transporting a receiving container (101) away from the filling position, said conveying device being arranged below the filling device (102).

15. A method for unloading an article (28) from an article container (2) at an unloading station (4; 4'),
the article container (2) comprising
- a bag body having a front wall (25) and a rear wall (26),
- a storage space (27) delimited by the front wall (25) and the rear wall (26), and
- an unloading opening (29) formed on the bag body at least in some sections between the front and the rear wall (25, 26), wherein the bag body is adjustable between a closed position, in which the storage space (27) is minimized in volume and the article (28) can be transported by means of the article container, and an opened position, in which the storage space (27) is maximized in volume and the article (28) can be discharged from the article container through the unloading opening (29),
the unloading station (4; 4') comprising
- an overhead conveying device (1) for transporting the article container (2) into the unloading station (4; 4') and for transporting the article container (2) away from the unloading station (4; 4'),
- an opening and closing device (40; 53) for adjusting the bag body between the closed position and the opened position, and
- an unloading device (39) for unloading the article container (2),
in which the article container (2) is transported to the unloading station (4; 4`) by means of the overhead conveying device (1) and unloaded at the unloading station (4; 4'), and after an unloading operation the article container (2) is transported away from the unloading station (4; 4`) by means of the overhead conveying device (1),
wherein for unloading an article (28) from an article container (2)
i) in one step, the bag body is adjusted from the closed position into the opened position by means of the opening and closing device (40; 53), and
ii) in one step, the article container (2) with the bag body is tilted about a tilting axis (57) from a provisioning position (58) into an unloading position (59) by means of the unloading device (39), whereby the article (28) is discharged from the article container (2) through the unloading opening (29),
**characterized in that**
the unloading opening (29) is formed laterally on the bag body, and
the tilting axis (57) extends essentially in parallel to the longitudinal extension of the overhead conveying device (1).

16. The method for unloading an article according to claim 15, **characterized in that** step i) and step ii) are carried out sequentially in time, **in that** the article container (2) is transported to the unloading station (4; 4') by means of the overhead conveying device (1) and stopped at the unloading station (4; 4') and then
- in the first step i) the bag body is adjusted from the closed position into the opened position by means of the opening and closing device (40; 53), and subsequently
- in the second step ii) the article container (2) with the bag body, which is adjusted into the opened position, is tilted about the tilting axis (57) extending essentially in parallel to the longitudinal extension of the overhead conveying device (1) from the provisioning position (58) into the unloading position (59) by means of the unloading device (39), whereby the article (28) is discharged from the article container (2) through the unloading opening (29).

17. The method for unloading an article according to claim 15, **characterized in that** step i) and step ii) are carried out so as to overlap in time, **in that** the article container (2) is transported to the unloading station (4; 4') by means of the overhead conveying device (1) and is continuously moved at the unloading station (4; 4'), wherein during the continuous transport movement of the article container (2)
- in step i) the bag body is adjusted from the closed position into the opened position by means of the opening and closing device (40; 53), and simultaneously
- in step ii) the article container (2) with the bag body is tilted about the tilting axis (57) extending essentially in parallel to the longitudinal extension of the overhead conveying device (1) from the provisioning position (58) into the unloading position (59) by means of the unloading device (39), whereby the article (28) is discharged from the article container (2) through the unloading opening (29).

18. The method for unloading an article according to one of claims 15 to 17, **characterized in that** after unloading the article container (2)
- in a step iii) the article container (2) with the bag body is tilted back about a tilting axis (57) extending essentially in parallel to the longitudinal extension of the overhead conveying device (1) from the unloading position (59) into the provisioning position (58) by means of the unloading device (39), and
- in a step iv) the bag body is adjusted from the opened position into the closed position by means of the opening and closing device (40; 53).

19. The method for unloading an article according to one of claims 15 to 18, **characterized in that** an article container positioning device (91) is provided in a conveying section (80c) along the unloading station (4; 4') and upstream of the opening and closing device (40; 53), which article container positioning device (91) comprises stopper elements (93) arranged on both sides of the transport path (82) and symmetrically to a vertical plane (92) extending in the direction of the transport path (82), which stopper elements can be moved between a release position retracted from the transport path (82) and an engaging position projecting into the transport path (82) by means of at least one drive (94), wherein prior to step i) the article container (2) is positioned against the stopper elements (93) which have been moved into the engaging position projecting into the transport path (82).

20. The method for unloading an article according to one of claims 15 to 19, **characterized in that** additionally a filling device (100) is provided below the unloading position, wherein in step ii) the article (28) is first discharged from the article container (2) to the filling device (100) and subsequently from the filling device (100) to a receiving container (101) provided below the filling device (100).

## Revendications

1. Station de déchargement (4 ; 4') pour le déchargement d'un récipient de produit transporté (2) chargé avec au moins un produit transporté (28),
ce récipient de produit transporté (2) comprenant
- un corps de sac avec une paroi avant (25) et une paroi arrière (26),
- un espace de conservation (27) délimité par la paroi avant (25) et la paroi arrière (26) et
- une ouverture de déchargement (29) réalisée sur le corps de sac au moins à certains endroits entre les parois avant et arrière (25, 26), dans lequel le corps de sac peut être commuté entre une position de fermeture, dans laquelle l'espace de conservation (27) présente un volume minimal et le produit transporté (28) peut être transporté avec le récipient de produit transporté (2) et une position d'ouverture, dans laquelle l'espace de conservation (27) présente un volume maximal et le produit transporté (28) peut être distribué à travers l'ouverture de déchargement (29) hors du récipient de produit transporté,
cette station de déchargement (4 ; 4') comprenant
- un dispositif de transport suspendu (1) pour le transport du récipient de produit transporté (2) vers la station de déchargement (4 ; 4') et le transport du récipient de produit transporté (2) hors de la station de déchargement (4 ; 4'),
- un dispositif d'ouverture et de fermeture (40 ; 53) pour le déplacement du corps de sac entre la position de fermeture et la position d'ouverture et
- un dispositif de déchargement (39) pour le déchargement du récipient de produit transporté (2),
dans lequel le dispositif de déchargement (39) comprend un dispositif d'actionnement (56) par l'intermédiaire duquel le récipient de produit transporté (2) avec le corps de sac peut être basculé autour d'un axe de basculement (57) entre une position de mise à disposition (58) et une position de déchargement (59) et
dans lequel, dans la position de déchargement (59), le produit transporté (28) peut être distribué à travers l'ouverture de déchargement (29) hors du récipient de produit transporté (2),
**caractérisé en ce que**
l'ouverture de déchargement (29) est réalisée latéralement sur le corps de sac et
l'axe de basculement (57) s'étend de manière globalement parallèle à l'extension longitudinale du dispositif de transport suspendu (1).

2. Station de déchargement selon la revendication 1, **caractérisé en ce que** le récipient de produit transporté (2) comprend en outre
- un support suspendu (13) pour le transport suspendu sur le dispositif de transport suspendu (1) et avec un logement (23) et
- un châssis (20) par l'intermédiaire duquel le corps de sac est suspendu au support suspendu (13) et qui est logé de manière pivotante dans le logement (23) sur et par rapport au support suspendu (13) autour d'un axe longitudinal (24) du logement (23), ce qui permet de commuter le corps de sac entre la position de fermeture et la position d'ouverture.

3. Station de déchargement selon la revendication 2, **caractérisé en ce que** le châssis (20) comprend des entretoises transversales (21) et des entretoises longitudinales (22) et **en ce que** la paroi avant (25) et la paroi arrière (26) du corps de sac sont montées respectivement sur une des entretoises transversales (21) du châssis (20).

4. Station de déchargement selon l'une des revendications 1 à 3, **caractérisé en ce que** le dispositif d'ouverture et de fermeture (40 ; 53) comprend un dispositif d'actionnement (41, 42 ; 52) pour l'ouverture et la fermeture automatique du corps de sac, par l'intermédiaire de laquelle le châssis (20) peut pivoter par rapport au support suspendu (13) autour de l'axe longitudinal (24), de sorte que le corps de sac peut être commuté entre la position de fermeture et la position d'ouverture.

5. Station de déchargement selon la revendication 1, **caractérisé en ce que** le dispositif d'actionnement (56) du dispositif de déchargement (39) comprend un cadre (61) pouvant être basculé, au moyen d'un entraînement (60), autour d'un axe s'étendant parallèlement à la direction de transport (3) des récipients de produit transporté (2), entre une position initiale et une position d'actionnement et le dispositif d'actionnement (41, 42 ; 52) du dispositif d'ouverture et de fermeture (40 ; 53) est logé sur le cadre (61).

6. Station de déchargement selon l'une des revendications 1 à 5, **caractérisé en ce que** le dispositif de transport suspendu (1) comprend, pour le transport du récipient de produit transporté (2) vers la station de déchargement (4 ; 4') et le transport du récipient de produit transporté (2) hors de la station de déchargement (4 ; 4') comprend un dispositif de guidage (81) et des supports de transport (6) pouvant être déplacés par un dispositif d'entraînement (5) le long du dispositif de guidage (81).

7. Station de déchargement selon la revendication 6, **caractérisé en ce que** le dispositif d'entraînement (5) comprend, dans une portion de transport (80c) le long de la station de déchargement (4'), un entraînement d'avance (83), cet entraînement d'avance (83)
- un cadre de support (84),
- une transmission à moyen de traction logé sur le cadre de support (84) avec un moyen de traction (85) pouvant être entraîné par un moteur d'entraînement (89) et
- au moins un taquet d'entraînement (86-1, 86-2) couplé avec le moyen de traction (85), pour le mouvement d'entraînement du récipient de produit transporté (2) le long du dispositif de guidage (81).

8. Station de déchargement selon la revendication 7, **caractérisé en ce que** la portion de transport (80c) forme un trajet de transport (82) le long duquel les récipients de produit transporté (2) sont transportés et **en ce qu'**au moins un taquet d'entraînement (86-1, 86-2) peut être déplacé par la transmission à moyen de traction entre une position initiale retirée hors du trajet de transport (82) et une position d'emboîtement dépassant dans le trajet de transport (82), dans laquelle l'au moins un taquet d'entraînement (86-1, 86-2), peut être mis, dans la position d'emboîtement, en emboîtement par complémentarité de forme avec le support de transport (6) ou le récipient de produit transporté (2) et par l'intermédiaire duquel le récipient de produit transporté (2) peut être déplacé le long de la portion de transport (80c).

9. Station de déchargement selon la revendication 7, **caractérisé en ce que** le dispositif d'actionnement (56) du dispositif de déchargement (39) comprend un cadre (61) pouvant être basculé, au moyen d'un entraînement (60) autour d'un axe s'étendant parallèlement à la direction de transport (3) des récipients de produit transporté (2) entre une position initiale et une position d'actionnement et **en ce que** le dispositif d'actionnement (41, 42 ; 52) du dispositif d'ouverture et de fermeture (40 ; 53) ainsi que l'entraînement d'avance (83) sont logés sur le cadre (61).

10. Station de déchargement selon l'une des revendications 6 à 9, **caractérisé en ce que**, dans une portion de transport (80c), le long de la station de déchargement (4 ; 4') et en amont du dispositif d'ouverture et de fermeture (40 ; 53), est prévu un dispositif de positionnement de récipient de produit transporté (91).

11. Station de déchargement selon la revendication 10, **caractérisé en ce que** la portion de transport (80c) forme un trajet de transport (82) le long duquel les récipients de produit transporté (2) sont transportés et **en ce que** le dispositif de positionnement de récipient de produit transporté (91) comprend des éléments de butée (93), plus particulièrement des taquets de butée, disposés des deux côtés du trajet de transport (82) et symétriquement par rapport à un plan vertical (92) s'étendant en direction du trajet de transport (82), qui peuvent être déplacés, à l'aide d'au moins un entraînement (94), entre une position de libération retirée hors du trajet de transport (82) et une position d'emboîtement dépassant dans le trajet de transport (82), dans laquelle le récipient de produit transporté (2) peut être positionné contre les éléments de butée (93) déplacés vers la position d'emboîtement.

12. Station de déchargement selon l'une des revendications 6 à 11, **caractérisé en ce que**, dans une portion de transport (80c), le long de la station de déchargement (4 ; 4') et en amont du dispositif d'ouverture et de fermeture (40 ; 53), est prévu un dispositif de guidage de récipient de produit transporté (91).

13. Station de déchargement selon l'une des revendications 6 à 12, **caractérisé en ce que** la station de déchargement (4 ; 4') comprend en outre, en dessous de la position de déchargement, un dispositif de remplissage (100), à l'aide de laquelle, dans une première étape i) le produit transporté (28) éjecté du récipient de produit transporté (2) est logé et, dans une deuxième étape ii) le produit transporté (28) est distribué au niveau d'un récipient de logement (101).

14. Station de déchargement selon la revendication 13, **caractérisé en ce que** la station de déchargement (4 ; 4') comprend en outre un dispositif de transport (102) pour le transport d'un récipient de logement (101) vers une position de remplissage et le transport d'un récipient de logement (101) hors de la position de remplissage, qui est disposé en dessous du dispositif de remplissage (102).

15. Procédé de déchargement d'un produit transporté (28) hors d'un récipient de produit transporté (2) vers une station de déchargement (4 ; 4')
ce récipient de produit transporté (2) comprenant
- un corps de sac avec une paroi avant (25) et une paroi arrière (26),
- un espace de conservation (27) délimité par la paroi avant (25) et la paroi arrière (26) et
- une ouverture de déchargement (29) réalisée sur le corps de sac au moins à certains endroits entre les parois avant et arrière (25, 26), dans lequel le corps de sac peut être commuté entre une position de fermeture, dans laquelle l'espace de conservation (27) présente un volume minimal et le produit transporté (28) peut être transporté avec le récipient de produit transporté (2) et une position d'ouverture, dans laquelle l'espace de conservation (27) présente un volume maximal et le produit transporté (28) peut être distribué à travers l'ouverture de déchargement (29) hors du récipient de produit transporté,
cette station de déchargement (4 ; 4') comprenant
- un dispositif de transport suspendu (1) pour le transport du récipient de produit transporté (2) vers la station de déchargement (4 ; 4') et le transport du récipient de produit transporté (2) hors de la station de déchargement (4 ; 4'),
- un dispositif d'ouverture et de fermeture (40 ; 53) pour le déplacement du corps de sac entre la position de fermeture et la position d'ouverture et
- un dispositif de déchargement (39) pour le déchargement du récipient de produit transporté (2),
dans lequel le récipient de produit transporté (2) est transporté par le dispositif de transport suspendu (1) vers la station de déchargement (4 ; 4') et est déchargé au niveau de la station de déchargement (4 ; 4') et, après un processus de déchargement, le récipient de produit transporté (2) est transporté par le dispositif de transport suspendu (1) hors de la station de déchargement (4 ; 4'),
dans lequel, pour le déchargement d'un produit transporté (28) hors d'un récipient de produit transporté (2)
i) dans une étape, le dispositif d'ouverture et de fermeture (40 ; 53) déplace le corps de sac de la position de fermeture vers la position d'ouverture et
ii) dans une étape, le récipient de produit transporté (2) est basculé par le dispositif de déchargement (39) avec le corps de sac autour d'un axe de basculement (57) d'une position de mise à disposition (58) vers une position de déchargement (59), ce qui permet de distribuer le produit transporté (28) à travers l'ouverture de déchargement (29) hors du récipient de produit transporté (2),
**caractérisé en ce que**
l'ouverture de déchargement (29) est réalisée latéralement sur le corps de sac et
l'axe de basculement (57) s'étend de manière globalement parallèle à l'extension longitudinale du dispositif de transport suspendu (1).

16. Procédé de déchargement d'un produit transporté selon la revendication 15, **caractérisé en ce que** l'étape i) et l'étape ii) sont exécutées successivement dans le temps, le récipient de produit transporté (2) étant transporté par le dispositif de transport suspendu (1) vers la station de déchargement (4 ; 4') et étant arrêté au niveau de la station de déchargement (4 ; 4') puis
- dans la première étape i), le corps de sac est déplacé par le dispositif d'ouverture et de fermeture (40 ; 53) de la position de fermeture vers la position d'ouverture puis
- dans la deuxième étape ii) le récipient de produit transporté (2) est basculé par le dispositif de déchargement (39), avec le corps de sac déplacé vers la position d'ouverture, autour de l'axe de basculement (57) s'étendant de manière globalement parallèle à l'extension longitudinale du dispositif de transport suspendu (1), de la position de mise à disposition (58) vers la position de déchargement (59), ce qui permet de distribuer le produit transporté (28) à travers l'ouverture de déchargement (29) hors du récipient de produit transporté (2).

17. Procédé de déchargement d'un produit transporté selon la revendication 15, **caractérisé en ce que** l'étape i) et l'étape ii) sont exécutées simultanément, le récipient de produit transporté (2) étant transporté par le dispositif de transport suspendu (1) vers la station de déchargement (4 ; 4') et étant déplacé en continu au niveau de la station de déchargement (4 ; 4'), dans lequel, pendant le mouvement de transport en continu du récipient de produit transporté (2)
- dans l'étape i), le corps de sac est déplacé par le dispositif d'ouverture et de fermeture (40 ; 53) de la position de fermeture vers la position d'ouverture et simultanément
- dans l'étape ii) le récipient de produit transporté (2) est basculé par le dispositif de déchargement (39), avec le corps de sac autour de l'axe de basculement (57) s'étendant de manière globalement parallèle à l'extension longitudinale du dispositif de transport suspendu (1), de la position de mise à disposition (58) vers la position de déchargement (59), ce qui permet de distribuer le produit transporté (28) à travers l'ouverture de déchargement (29) hors du récipient de produit transporté (2).

18. Procédé de déchargement d'un produit transporté selon l'une des revendications 15 à 17, **caractérisé en ce que**, après le déchargement du récipient de produit transporté (2)
- dans une étape iii), le récipient de produit transporté (2) est rebasculé, par le dispositif de déchargement (39), avec le corps de sac, autour d'un axe de basculement (57) s'étendant de manière globalement parallèle à l'extension longitudinale du dispositif de transport suspendu (1), de la position de déchargement (59) vers la position de mise à disposition (58) et
- dans une étape iv), le corps de sac est déplacé par le dispositif d'ouverture et de fermeture (40 ; 53) de la position d'ouverture vers la position de fermeture.

19. Procédé de déchargement d'un produit transporté selon l'une des revendications 15 à 18, **caractérisé en ce que**, dans une portion de transport (80c) le long de la station de déchargement (4 ; 4') et en amont du dispositif d'ouverture et de fermeture (40 ; 53), est prévu un dispositif de positionnement de récipient de produit transporté (91), qui comprend des éléments de butée (93), plus particulièrement des taquets de butée, disposés des deux côtés du trajet de transport (82) et symétriquement par rapport à un plan vertical (92) s'étendant en direction du trajet de transport (82), qui peuvent être déplacés, à l'aide d'au moins un entraînement (94), entre une position de libération retirée hors du trajet de transport (82) et une position d'emboîtement dépassant dans le trajet de transport (82), dans lequel, avant l'étape i), le récipient de produit transporté (2) peut être positionné contre les éléments de butée (93) déplacés vers la position d'emboîtement dépassant dans le trajet de transport (82).

20. Procédé de déchargement d'un produit transporté selon l'une des revendications 15 à 19, **caractérisé en ce que**, en outre, en dessous de la position de déchargement, est prévu un dispositif de remplissage (100), dans lequel dans l'étape ii), le produit transporté (28) est d'abord distribué du récipient de produit transporté (2) vers le dispositif de remplissage (100) puis du dispositif de remplissage (100) vers un récipient de logement (101) mis à disposition en dessous du dispositif de remplissage (100).
